(19) Europäisches Patentamt
European Patent Office
Office européen des brevets

(11) EP 1 503 382 A2

(12) EUROPEAN PATENT APPLICATION

(43) Date of publication:
02.02.2005 Bulletin 2005/05

(51) Int Cl.$^7$: G11B 27/32

(21) Application number: 04016002.0

(22) Date of filing: 07.07.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 18.07.2003 JP 2003277083

(71) Applicant: Kabushiki Kaisha Toshiba
Tokyo 105-8001 (JP)

(72) Inventors:
- Nakashika, Masahiro c/o Toshiba Corporation Minato-ku, Tokyo 105-8001 (JP)
- Kikuchi, Shinichi c/o Toshiba Corporation Minato-ku, Tokyo 105-8001 (JP)
- Tsumagari, Yasufumi c/o Toshiba Corporation Minato-ku, Tokyo 105-8001 (JP)

(74) Representative: Henkel, Feiler & Hänzel
Möhlstrasse 37
81675 München (DE)

# (54) Digital AV information recording medium, and recording/playback method and recording/playback apparatus using the medium

(57) Provided is a digital stream recording medium which can append a thumbnail to each entry point. Thumbnail information is stored in an area independent from moving picture information. Management information includes cell information corresponding a part of a program, and the cell information includes entry point information indicating an entry position into the program. The entry point information (C_EPI) is configured to have pointer information (TBN_PT) used to designate the thumbnail information.

C_EPI (Contents of EPI of example 1)

| | | | |
|---|---|---|---|
| 0 | EP_TY | Entry Point Type (EP_TY) | 1 |
| 1-4 | EP_INDX_NUM | EP absolute number | 4 |
| 5-10 | EP_PTM | PTM of Entry Point | 6 |
| 11-16 | LAST_TM | Last edit date (date a time) | 6 |
| 17-144 | PRM_TXT | Primary Text Information | 128 (If available) |
| 145-150 | EP_REP_PIC | PTM pointer for thumbnail picture on program, which belongs to this EP | 6 (If available) |
| 151-154 | TBN_PT | Thumbnail_pointer : thumbnail number in thumbnail file which belongs to this EP | 4 (If available) |
| 155-158 | TXT_NUM | text Number : number of IT_TXT which belongs to this EP/pointer to another text file | 4 (If available) |

FIG. 18



Printed by Jouve, 75001 PARIS (FR)

## Description

The present invention relates to a digital AV information recording medium, and a recording/playback method and a recording/playback apparatus using this medium and, more particularly, to a medium, method, and apparatus, which can digitally record and play back high-definition AV information in real time.

In recent years, TV broadcast has entered the era of digital broadcasts having Hi-Vision programs (programs of high-definition AV information) as principal broadcast contents. The current digital broadcast adopts an MPEG transport stream (to be abbreviated as MPEG-TS as needed hereinafter). In the field of digital broadcast using moving pictures, MPEG-TS will be used as a standard format in the future.

At the start of such digital TV broadcast, market needs for a streamer that can directly record digital TV broadcast contents (without digital/analog conversion) are increasing. As a currently, commercially available, typical streamer that directly records digital broadcast data (MPEG-TS or the like), a video cassette recorder (D-VHS streamer) named D-VHS® is known. Also, some manufacturers have delivered a streamer that digitally records and plays back Hi-Vision programs on optical discs using a blue laser, or a streamer that digitally records and plays back Hi-Vision programs using a large-capacity hard disc.

Since a streamer records a broadcasted digital stream intact, the recorded program is often not ready to be played back by a simple operation from a desired position of each individual user. Hence, an existing DVD video recorder is configured to set an entry point so that a program can be played back from a position desired by the user. This function is the one that the streamer wants, and a streamer which can set an entry point has also been proposed (cf. Jpn. Pat. Appln. KOKAI Publication No. 2003-18549).

In Jpn. Pat. Appln. KOKAI Publication No. 2003-18549, status corresponding to a cause of generation of an entry point can be added to the entry point. For this reason, the cause of generation of an entry point is recognized, but various kinds of extended information cannot be appended to the entry point.

Even when an entry point is set in a stream-recorded program, the user cannot determine the actual position of a program corresponding to the entry point.

Alternatively, when a storage space of text which is appended in correspondence with an entry point is insufficient, text to be input cannot be input, resulting in inconvenience.

Even when information to be appended to an entry point is to be extended from the actual state, such expansion is not available, resulting in inconvenience.

Even when a function is added to a single disc using manufacturer's information (MNFI) using a recorder of a given manufacturer, if that disc undergoes additional recording by a recorder of another manufacturer, the manufacturer's information of that disc may become inconsistent with playback information from that disc. However, it is inconvenient that there is no means for determining whether or not the disc was used in recording or the like by a recorder of another manufacturer (that is, the user feels anxious if the reliability of the recorded contents of such disc is unknown).

The present invention has been made in consideration of at least one of the above situations, and has as its one object to provide a digital AV information recording medium which is configured to assign index picture information (a reduced-scale picture/thumbnail or the like that the user can visually recognize) to an entry point.

An information medium according to an embodiment of the present invention has a data area that records AV information including moving picture information, and a management area that manages AV information recorded on this data area as one or more programs. In this information medium, index picture information is stored in an area (HR_THNL.DAT) independent from moving picture information (HR_STRMx.SRO and the like). Management information (DVD_HDVR/HR_MANGR.IFO/PGCI) includes cell information (CI) corresponding to some of programs (PG). The cell information (CI) includes information (C_EPI) of an entry point indicating an entry position into the program. The entry point information (C_EPI) can have index pointer information (TBN_PT) used to designate the index picture information.

Index picture information (a reduced-scale picture/thumbnail, representative picture, or the like that the user can visually recognize) can be assigned to an entry point.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view for explaining the data structure according to an embodiment of the present invention;
FIG. 2 is a view for explaining the relationship among a playback management information layer, object management information layer, and object layer in the data structure according to the embodiment of the present invention;
FIG. 3 is a view for explaining the file structure according to the embodiment of the present invention;
FIG. 4 is a view for explaining an example of the configuration of a field (RTR_VMGI) of one management information (RTR_VMG) recorded on AV data management information recording area 130;
FIG. 5 is a view for explaining an example of the configuration of another field (ESFIT) of one management information (RTR_VMG) in the data structure according to the embodiment of the present invention;

FIG. 6 is a view for explaining an example of the configuration of the contents of ESFITI_GI and ESFI of elements of the management information (ESFIT) shown in FIG. 5;

FIG. 7 is a view for explaining an example of the configuration of the contents of ESOBI_VSTI and ESOBI_ASTI of elements of the management information (ESFIT) shown in FIG. 5;

FIG. 8 is a view for explaining an example of the configuration of the contents of ESFI_GI and ESOBI of the management information (ESFIT) shown in FIG. 6;

FIG. 9 is a view for explaining an example of the configuration of the contents of stream object general information (ESOB_GI) of the management information shown in FIG. 8;

FIG. 10 is a view for explaining an example of the configuration of the contents of ESOB elementary stream information, time map general information (TMAP_GI), elementary stream map information (ES_MAPI), and ES group information of the management information shown in FIG. 8;

FIG. 11 is a view for explaining an example of the configuration of the contents of ES_MAP_GI shown in FIG. 10;

FIG. 12 is a view for explaining an example of the configuration of the contents of ESOBU_ENT shown in FIG. 10;

FIG. 13 is a view for explaining an example of the contents of ESOBU shown in FIG. 2 depending on the availability of video and audio data;

FIG. 14 is a view for explaining an example of the configuration of PGC information (original PGC information ORG_PGCI/user-defined information table information UDPGCITI) included in another management information (stream data management information RTR_ESMG) recorded on AV data management information recording area 130;

FIG. 15 is a view for explaining an example of the configuration of the contents of elements of program chain information (ORG_PGC information or UD_PGC information) shown in FIG. 14;

FIG. 16 is a view for explaining an example of the configuration of the contents of a text data manager (TXTD_MG) included in management information recorded on management information recording area 130 shown in FIG. 4 or 14;

FIG. 17 is a view for explaining an example of the configuration of the contents of a cell entry point information table (C_EPIT) included in the cell information shown in FIG. 15;

FIG. 18 is a view for explaining an example (EPI of example 1) of the configuration of the contents of cell entry point information (C_EPI) shown in FIG. 17;

FIG. 19 is a view for explaining an example of the configuration of an entry point type (EP_TY) included in C_EPI in FIG. 18;

FIG. 20 is a view for explaining an example (EPI of example 2) of the configuration of the contents of cell entry point information (C_EPI) shown in FIG. 17;

FIG. 21 is a view for explaining an example of files used to manage (or to form) an extended entry point information table (EX_EPIT) included in management information recorded on management information recording area 130 in FIG. 4 or 14;

FIG. 22 is a view for explaining an example (using EPI of example 2) of the configuration of the contents of the extended entry point information table (EX_EPIT) in FIG. 21;

FIG. 23 is a view for explaining an example of the configuration of manufacturer's information (MNFI) included in the management information recorded on management information recording area 130 in FIG. 4 or 14;

FIG. 24 is a view for explaining an example of the configuration of a data unit (ESOBU) for a stream object shown in FIG. 1 or 2;

FIG. 25 is a view for explaining an example of the configuration of a packet arrival time (ATS), validity information (DCI_CCI_SS), and display control information (DCI) included in a pack group header shown in FIG. 24;

FIG. 26 is a view for explaining an example of the configuration of copy generation management information (or copy control information CCI) included in the packet group header shown in FIG. 24;

FIG. 27 is a view for explaining an example of the configuration of an increment (IAPAT) of the packet arrival time and PCR position information (the number of packs, PCR_LB count number, or the like) included in a packet group shown in FIG. 24 after the packet group header;

FIG. 28 is a view for explaining an example of the internal structure of an object file (HR_THNL.DAT; a file independent from a VMG file when EPI of example 2 is used) of thumbnail (or representative picture) data managed in the DVD_HDVR file in the file structure shown in FIG. 3;

FIG. 29 is a view for explaining an example of the internal structure of an object file (HR_TEXT.DAT; additional text file) of text data managed in the file structure shown in FIG. 3;.

FIG. 30 is a block diagram for explaining an example of an apparatus for recording and playing back AV information (digital TV broadcast program and the like) on and from an information recording medium (optical disc, hard disc, or the like) using the data structure according to the embodiment of the present invention;

FIG. 31 is a flowchart (overall operation process flow) for explaining an example of the overall operation of the apparatus shown in FIG. 30;

FIG. 32 is a flowchart (interrupt process flow) for explaining an example of an interrupt process in the operation of the apparatus shown in FIG. 30;

FIG. 33 is a flowchart (edit operation process flow) for explaining an example of an edit process (ST28) shown in FIG. 31;

FIG. 34 is a flowchart for explaining an example of a video recording operation (part 1) of the apparatus shown in FIG. 30;

FIG. 35 is a flowchart (video recording flow with an entry point appending process) for explaining an example of a video recording operation (part 2) of the apparatus shown in FIG. 30;

FIG. 36 is a flowchart (video recording pre-process flow) for explaining an example of a process before the beginning of video recording on a disc-shaped information storage medium (e.g., an optical disc using blue laser) shown in FIG. 1;

FIG. 37 is a flowchart (STI setting process flow) for explaining the contents of a stream information (VSTI and ASTI) generation process (ST120) shown in FIG. 35;

FIG. 38 is a flowchart (buffer fetch process flow) for explaining an example of a buffer fetch process (ST130) shown in FIG. 35;

FIG. 39 is a flowchart for explaining an example of a DCI & CCI setting process (ST1311) shown in FIG. 38;

FIG. 40 is a view for explaining an example of the data structure of a pack group in a process (pack group align process) in step ST13123 in FIG. 39;

FIG. 41 is a flowchart (stream file information generation process flow with an ESOB structure setting process and edit date setting process) for explaining an example of a stream file information (SFI or ESFI) generation process in the video recording end process (ST150) shown in FIG. 34;

FIG. 42 is a flowchart for explaining an example of the ESOB structure setting process (ST1522) shown in FIG. 41;

FIG. 43 is a flowchart (program setting process flow) for explaining an example of a program chain (PGC) generation process (including a program setting process) in the video recording end process (ST150) shown in FIG. 34;

FIG. 44 is a flowchart (item text setting process flow) for explaining an example of an item text (IT_TXT) generation process in the program update date setting process (ST1704) shown in FIG. 43;

FIG. 45 is a flowchart (EP appending process flow) for explaining an example of the entry point appending process (ST147) shown in FIG. 34;

FIG. 46 is a flowchart (reduced-scale picture setting process flow) for explaining an example of the process for setting thumbnail (reduced-scale picture or representative picture) data in correspondence with an entry point after the entry point is appended by the process shown in, e.g., FIG. 45 (when the entry point has already been appended);

FIG. 47 is a flowchart (reduced-scale picture display process flow) for explaining an example of the process for displaying thumbnail (reduced-scale picture or representative picture) data corresponding to the entry point;

FIG. 48 is a flowchart (reduced-scale picture registration process flow) for explaining an example of the process for registering thumbnail (reduced-scale picture or representative picture) data corresponding to the entry point;

FIG. 49 is a view for explaining an example of thumbnail (reduced-scale picture or representative picture) data displayed on a screen in the reduced-scale picture display process in FIG. 47;

FIG. 50 is a flowchart for explaining an example (part 1) of the playback operation of the apparatus shown in FIG. 30;

FIG. 51 is a flowchart for explaining an example (part 2) of the playback operation of the apparatus shown in FIG. 30;

FIG. 52 is a flowchart for explaining an example (part 1) of the process (ST220) upon cell playback in FIG. 51;

FIG. 53 is a flowchart for explaining an example (part 2) of the process (ST220) upon cell playback in FIG. 51;

FIG. 54 is a flowchart for explaining an example of a buffer decoder transfer process (ST2217) in FIG. 53;

FIG. 55 is a view for explaining an example of the data structure of a program map table (PMT) that can be used in the apparatus in FIG. 30;

FIG. 56 is a view for explaining an example of the contents of a digital copy control descriptor that can be used in the apparatus in FIG. 30, and an example of a copy control process using this descriptor;

FIG. 57 is a view for explaining an application example of digital copy control to video data;

FIG. 58 is a view for explaining an application example of digital copy control to audio data;

FIG. 59 is a view for explaining the contents of a contents use descriptor that can be used in the apparatus in FIG. 30;

FIG. 60 is a view for explaining the data structure of an event information table (EIT) that can be used in the apparatus in FIG. 30;

FIG. 61 is a view for explaining an example of the contents of an extended event descriptor that can be used in the apparatus in FIG. 30;

FIG. 62 is a view for explaining how to capture a target packet based on a playback time (PTM) if the PTM data is given;

FIG. 63 is a view for explaining another example (modification of FIG. 4) of the configuration of one management information (RTR_VMG) recorded on AV data management information recording area 130;

FIG. 64 is a view for explaining another example (modification of FIG. 15) of the configuration of the contents of elements of program chain information (ORG_PGC information or UD_PGC information);

FIG. 65 is a view for explaining another example (modification of FIG. 23) of the configuration of the contents of manufacturer's information (MNFI) included in the management information recorded on management information recording area 130 in FIG. 4 or 14;

FIG. 66 is a flowchart (video recording flow without any entry point appending process) for explaining another example (modification of FIG. 35) of the video recording operation of the apparatus shown in FIG. 30;

FIG. 67 is a flowchart (video recording pre-process flow) for explaining another example (modification of FIG. 36) of the process before the beginning of video recording on the information storage medium (optical disc);

FIG. 68 is a flowchart (program setting process flow) for explaining another example (modification of FIG. 43) of the program chain (PGC) generation process;

FIG. 69 is a flowchart (item text setting process flow) for explaining another example (modification of FIG. 44) of the item text (IT_TXT) generation process in the program update date setting process (ST1700X) shown in FIG. 68;

FIG. 70 is a flowchart (reduced-scale picture setting process flow) for explaining another example (modification of FIG. 46) of the process for setting thumbnail (reduced-scale picture or representative picture) data in manufacturer's information MNFI in correspondence with an entry point when the entry point has already been appended;

FIG. 71 is a flowchart (reduced-scale picture display process flow) for explaining another example (modification of FIG. 47) of the process for displaying thumbnail (reduced-scale picture or representative picture) data set in manufacturer's information MNFI; and

FIG. 72 is a flowchart (MNFI reliability check process flow) for explaining an example of a process for checking the reliability of manufacturer's information MNFI in FIG. 65.

Digital TV broadcast and broadcast which uses a wired network such as the Internet or the like broadcast (distribute) compress moving picture data. A transport stream (TS) as a basic format common to these broadcasting schemes is divided into a packet management data field and payload. The payload includes data to be played back in a scrambled state. According to ARIB (Association of Radio Industries and Businesses) as one digital broadcasting scheme, a PAT (Program Association Table), PMT (Program Map Table), and SI (Service Information) are not scrambled. Also, various kinds of management information can be generated using the contents (SDT: Service Description Table, EIT: Event Information Table, BAT: Bouquet Association Table) of the PMT and SI.

The digital broadcast contents to be played back include MPEG video data, Dolby AC3® audio data, MPEG audio data, data broadcast data, and the like. The digital broadcast contents include information (program information and the like) required upon playback (e.g., PAT, PMT, SI, and the like) although they are not directly related to the contents to be played back. The PAT includes the PID (Packet Identification) of the PMT for each program, and the PMT records the PID data of video data and audio data.

For example, a normal playback sequence of an STB (Set Top Box) or the like is as follows. That is, when the user determines a program based on EPG (Electronic Program Guide) information, the PAT is loaded at the start time of the target program, and the PID of a PMT, which belongs to the desired program, is determined on the basis of that data. The target PMT is read out in accordance with that PIT, and the PID data of video and audio packets to be played back, which are included in the PMT, are determined. Video and/or audio attributes are read out based on the PMT and SI and are set in respective decoders. The video and audio data are extracted and played back in accordance with their PID data. Note that the PAT, PMT, SI, and the like are transmitted at intervals of several 100 ms since they are used during playback.

Upon recording on a disc medium such as a DVD-RAM or the like using these data, it is advantageous to directly record broadcast data as digital data. Hence, the present invention proposes ESR (extend stream recording) as a format which is different from the existing VR (video recording) format and directly records a stream. This ESR is obtained by merging the conventional SR (stream recording) with VR (video recording), and supports stream recording of digital broadcast while taking advantages of existing VR resources.

Preferred embodiments of the present invention based on the ESR will be described in detail hereinafter with reference to the accompanying drawings. FIG. 1 is a view for explaining the data structure according to an embodiment of the present invention. As disc-shaped information recording medium 100 (FIG. 1(a)), recordable optical discs such as a DVD-RAM, DVD-RW, DVD-R, and the like, and recordable magnetic discs such as a hard disc and the like are available. The following explanation will be given taking an optical disc such as a DVD-RAM or the like as an example.

Disc 100 has lead-in area 110, volume/file structure information area 111, data area 112, and lead-out area 113 from its inner periphery side toward the outer periphery side (FIG. 1(b)). Volume/file structure information area 111 stores a file system. The file system includes information indicating the recording locations of files (will be described in detail later with reference to FIG. 3). Recorded contents are stored in data area 112 (FIG. 1(c)).

Data area 112 is divided into areas 120 that record general computer data, and area 121 that records AV data. AV data recording area 121 includes AV data management information area 130 that stores a file (VMG/ESMG file) used to manage AV data, VR object group recording area 122 that records object data (VOBS) files (VRO files) complying with the video recording standard, and EStream object group recording area 131 that records stream objects (ESOBS: Extend Stream Object Set) compatible to digital broadcast (FIG. 1(d)). That is, in this embodiment, stream objects of digital broadcast are recorded as EStream objects 132 (ESOBS) as files independent from VR objects (FIG. 1 (e)).

Each EStream object 132 is made up of one or more data units (ESOBU: Extend Stream Object Unit) 134 each of which serves as an access unit to disc 100 (FIG. 1(f)). Note that one ESOBU is a data unit delimited by pictures at given time intervals. Alternatively, one ESOBU may be a data unit delimited by one or more GOP data. Each data unit (ESOBU) 134 is made up of one or more packet groups (Packet_Group) 140, each of which includes a group of a plurality of TS packets (FIG. 1(g)).

In this embodiment, each packet group 140 includes a group of 8 or 16 packs (or 8 or 16 LBs (Logical Blocks)). If one pack size (or one LB size) is 2 kbytes, the size of each packet group 140 is 16 kbytes. This size is equal to an integer fraction of the ECC block size in the video recording standard.

Each packet group 140 forms packet recording area (DVD-TS packet recording area) 160 in stream recording (ESR) proposed by the present invention (FIG. 1(h)). DVD-TS packet recording area 160 can be formed of packet group header 161, a plurality of (e.g., 85) MPEG-TS packets 162, and a plurality of (e.g., 84) pieces of packet arrival time difference information 163 (IAPAT: Incremental Application Packet Arrival Time) (FIG. 1(i)). The contents of packet group 140 will be described in detail later with reference to FIG. 24.

Note that the directories of recording files are independently assured for respective formats (e.g., a VIDEO-TS directory for DVD-Video (ROM Video) and a DVD-RTAV directory for DVD-RTR (recordable/reproducible DVD)). In new stream recording (ESR) compatible to digital broadcast, a recording file is similarly recorded in, e.g., a DVD_HDVR directory (see FIG. 3).

FIG. 2 is a view for explaining the relationship among a playback management information layer, object management information layer, and object layer in the data structure according to the embodiment of the present invention. Management information (VMG/ESMG file) recorded on AV data management information recording area 130 in FIG. 1 has playback management information layer 10 used to manage the playback sequences of both the recorded contents based on the video recording standard and the stream recording recorded contents based on the present invention.

That is, a group of one or more cells 13 each of which serves as a playback unit of stream-recorded objects form program 12, and a group of one or more cells 13 each of which serves as a playback unit of video-recorded objects form program 12. A sequence (playback sequence) of these programs 12 is managed by management information (PGCI) of program chain (PGC) 11.

Even when the user wants to start playback from the middle of either cell 13 on the stream recording side or cell 13 on the video recording' side, he or she can designate the playback location using a playback time (PTS).

That is, when playback is to start from the middle of cell 13 on the stream recording side using the playback time (PTS), stream object ESOB 132 in stream object layer 30 is designated via stream object information ESOBI 21 in stream object management information layer 20, and stream object unit ESOBU 134 in stream object layer 30 is designated via stream object unit information ESOBUI 22 in stream object management information layer 20. When ESOB 132 and its ESOBU 134 are designated, the playback start location is specified. (ESOBUI in this case may be restated as global information 22.)

This ESOBU 134 is formed of one or more packet groups 140. ESOBU 134 is a data unit corresponding to, e.g., 1 or more GOP data. Alternatively, ESOBU 134 may be delimited by a unit corresponding to a data size for a given playback time. In this way, overflow of each information field is prevented.

Each packet group 140 includes 8 packs (or 8 LBs) (16384 bytes), and has packet group header 161 at its head position. Packet group header 161 is followed by a plurality of transport stream packets (TS_Packet) 162 and a plurality of pieces of packet arrival time difference information (IAPAT) 163. These TS packets 162 store stream recording recorded contents.

On the other hand, when playback is to start from the middle of cell 13 on the video recording side using the playback time (PTS), video object VOB 36 in video object layer 35 is designated via video object information VOBI 24 in video object (VOB) management information layer 23, and video object unit VOBU 37 in video object layer 35 is designated via video object unit information VOBUI 25 in video object management information layer 23. When VOB 36 and its VOBU 37 are designated, the playback start location is specified. VOBU 37 includes a plurality of packs 38, which store video recording recorded contents.

As will be described in detail later, when playback is to start from the middle of cell 13 on the stream recording side, the playback start location can be designated using a time in units of the number of fields by ESOBU_PB_TM (FIG. 12). On the other hand, when the playback is to start from the middle of cell 13 on the video recording side, the playback start location can be designated by VOBU_PB_TM (not shown) in time map information (TMAPI) specified by the video recording standard.

The contents of FIG. 2 can be summarized as follows. That is, the structure of ESOBS (Extend Stream Object Set) includes one or more ESOB (Extend Stream Object) data. This ESOB corresponds to, e.g., one program. The ESOB is formed of one or more ESOBU (Extend stream object unit) data, each of which corresponds to object data for a given time interval (which changes depending on the value of VOBU/ESOBU_PBT_IVL in FIG. 9) or one or more GOP data.

When the transfer rate is low, one GOP data cannot often be sent within 1 sec (1s) (DVD-VR that MPEG-encodes an analog video input inside the apparatus can freely set the data unit configuration since it adopts internal encoding, but digital broadcast cannot specify the next incoming data since encoding is done by a broadcast station). On the other hand, the transfer rate may be high, and I-picture data may be sent frequently. In such case, the ESOBU is delimited frequently, and ESOBU management information increases accordingly, thus ballooning the whole management information. For this reason, it is appropriate to delimit the ESOBU according to the embodiment of the present invention by a given time interval (a minimum limitation is to delimit ESOBU data by picture data except for the last ESOBU of the ESOB) or by one or more GOP data.

Each packet group includes a packet group header, (85) TS packets, and (84) IAPAT (Incremental Packet Arrival Time) data. As for the arrival time of each TS packet, the arrival time of the first TS packet in the packet group is expressed by ATS in the packet group header. The arrival time of the second TS packet is expressed by the sum of this ATS and IAPAT. Furthermore, the arrival time of each of the third and subsequent TS packets is expressed by the sum of the immediately preceding arrival time and IAPAT. In this manner, since the arrival times of the second and subsequent TS packets can be expressed by the differences from their immediately preceding arrival times, each IAPAT data can be expressed by a small data size (3 bytes), and the total data size can be reduced.

FIG. 3 is a view for explaining the file structure according to the embodiment of the present invention. Data in disc 100 in FIG. 1 includes volume/file structure information area 111 which stores a file system, and data area 112 which actually records data files. The file system stored in volume/file structure information area 111 includes information indicating the recording locations of files, as shown in FIG. 3. Data area 112 is divided into areas 120 that record general computer data, and area 121 that records AV data. AV data recording area 121 includes AV data management information area 130 that stores a VMG file (also including an ESMG file to be described later in the merged format) used to manage recorded AV data, VR object group recording area 122 that records object data (VOBS) files (VRO files) complying with the video recording standard, and EStream object group recording area 131 that records stream objects (ESOBS) compatible to digital broadcast.

Note that different directories are prepared in correspondence with formats (e.g., VIDEO-TS for DVD-Video (ROM Video) and DVD-RTAV for DVD-RTR (recordable/reproducible DVD), and the digital broadcast compatible DVD standard to be described below is recorded in, e.g., a DVD_HDVR directory.

That is, as shown in FIG. 3, the DVD_HDVR directory records a VMG file used to manage data, a VRO file as an object file used to record analog AV information such as analog broadcast, analog line input data, and the like, and an SRO file as a digital broadcast object file. Note that the SRO file forms ESOBS (Extend stream object set). As shown in FIG. 3, SR management data is recorded in the VMG file common to VR, and undergoes control common to VR. SR and VR management data are linked for respective CELLs, and their playback locations can be designated by playback times.

The DVD_HDVR directory includes HR_THNL.DAT as a reduced-scale picture file, a text file: HR_TEXT.DAT added independently of item text (IT_TXT), and HR_EXEP.DAT (this HR_EXEP.DAT file may be omitted when extended entry point EXEP is stored in VMG) used to save information added to an entry point (EP).

ESR (Extend stream Recording) management information (ESFIT in FIG. 4 or RTR_ESMG in FIG. 14) is saved in the VMG file (HR_MANGER.IFO) in FIG. 3, and can be managed in the same way as VR data. In this case, stream management information is saved in an ESFIT (Extend stream File Information table).

FIG. 4 is a view for explaining an example of the configuration of a field (RTR_VMGI) of one management information (RTR_VMG) recorded on AV data management information recording area 130 shown in FIG. 1. Note that stream recording in this embodiment will be abbreviated as ESR (Extend Stream Recording), and video recording will be abbreviated as VR. Then, management information of ESR data is saved in RTR_VMG 130, and is managed in the same way as VR data.

RTR_VMG 130 includes video manager information (RTR_VMGI) 1310, stream file information table (ESFIT: Extend Stream File Information Table) 1320, (original) program chain information (ORG_PGCI) 1330, playlist information (PL_SRPT; or user-defined program information table: UD_PGCIT) 1340, text data manager (TXTD_MG) 1350, manufacturer's information table (MNFIT) 1360, and extended entry point table (EX_EPIT) 1361.

Note that the playlist and user-defined program chain have substantially equivalent meanings although they have different names, and are synonymous with a playlist and user-defined program chain used in the video recording standard. Hence, in the following description, playlist related information (PL_SRP and the like) and user-defined program chain related information (UD_PGCIT_SRP and the like) are included as needed.

RTR_VMGI 1310 includes disc management identification information (VMG_ID/ESMG_ID) 1311, version information (VERN) 1312, EStream object management information start address (ESFIT_SA) 1313, program chain information start address (ORG_PGCI_SA) 1315, and playlist information start address (UD_PGCIT_SA) 1316. ESR stream management information is saved in ESFIT 1320.

FIG. 5 is a view for explaining an example of the configuration of another field (ESFIT) of one management information (RTR_VMG) in the data structure according to the embodiment of the present invention. ESFIT 1320 includes ESFIT general information ESFITI_GI (General Information) 1321, ESOBI_VSTI (Video Status Information) 1322, ESOBI_ASTI (Audio Status Information) 1323, and ESFI (Extend Stream File Information) 1324. The ESFITI_GI may include the number of ESOBs, the number of pieces of VSTI, the number of pieces of ASTI, the end address of the ESFIT, and the like.

Each of VSTI and ASTI is attribute information of a stream in the ESOB; video attribute information can be expressed by VSTI, and audio attribute information can be expressed by ASTI. In the VR standard, one STI is formed of a pair of VIDEO and AUDIO data. However, in case of digital broadcast, a broadcast signal is likely to include a plurality of video and/or audio data. For this reason, STI is not always expressed by a video/audio pair unlike in the VR standard. Hence, the total information size of STI can be reduced when video and audio data are managed using independent attribute information. These video attribute information (V_ATR) and audio attribute information (A_ATR) will be described in detail later with reference to FIG. 7.

FIG. 6 is a view for explaining an example of the configuration of the contents of the ESFITI_GI and ESFI of elements of the management information (ESFIT) shown in FIG. 5. ESFITI 1321 includes information 13211 indicating the number of ESOBs, information 13212 indicating the number of pieces of ESOB_VSTI, information 13213 indicating the number of pieces of ESOB_ASTI, and information 13214 indicating the end address of the ESFIT. ESFI 1324 includes general information ESFI_GI 13251, one or more pieces of stream object information (ESOBI#1 to ESOBI#K) 13253, and one or more search pointers (ESOBI_SRP#1 to ESOBI_RP#K) 13252 for these (ESOBI#1 to ESOBI#K).

FIG. 7 is a view for explaining an example of the configuration of the contents of ESOBI_VSTI and ESOBI_ASTI of elements of the management information (ESFIT) shown in FIG. 5.

Two different types of VSTI attribute information V_ATR 13221V are available. In example 01 in FIG. 7, a compression mode (0 = MPEG1; 1 = MPEG2; 2 = MPEG4/H264), a TV system (0 = NTSC525/60; 1 = PAL625/50), an aspect ratio (0 = 4 : 3; 1 = 16 : 9), an I/P (Interlaced/Progressive) identification flag (0 = interlaced; 1 = progressive), and video resolution information (0 = 720 × 480; 1 = 704 × 480; 2 = 352 × 480; 3 = 352 × 240; 4 = 544 × 480; 5 = 480 × 480; 6 = 1280 × 720; 7 = 1920 × 1080) are added as HD (High Definition) support information (although basically the same bit configuration as that of the VR standard is adopted).

On the other hand, in example 02, V_ATR is configured to utilize SI (Service Information). That is, data on SI are set in V_ATR without any modifications, and the values of a Component descriptor are used intact in stream content and component type setups.

In ASTI attribute information A_ATR 13221A, in example 11, a compression mode (0 = AC3®; 1 = MPEG1 or MPEG2 without any extension bitstream; 2 = MPEG2; 3 = linear PCM; 4 = MPEG2·AAC; 5 = DTS®), quantization/dynamic range control (0 = sampling frequency fs 48 kHz; 1 = fs 96 kHz), the number of audio channels (0 to 7 = 1ch to 8ch; 8 = 2ch dual monaural), and the like are added as HD support information (although the same bit configuration as that of VR is adopted). In example 12, the values of a Component descriptor of SI are directly set in A_ATR stream content and component type data.

FIG. 8 is a view for explaining an example of the configuration of the contents of the ESFI_GI and ESOBI of the management information shown in FIG. 6. The ESFI_GI includes the number of ESOBI_SRPs, APP_NAME, an ESOB file name, and the end address of the ESFI. Each ESOBI includes stream object general information ESOBI_GI, one or more pieces of ESOB elementary stream information, seamless information SMLI, audio gap information AGAPI, time map general information TMAP_GI, one or more pieces of elementary stream map information ES_MAPI, the number of ES groups, and one or more pieces of ES group information.

FIG. 9 is a view for explaining an example of the configuration of the contents of stream object general information ESOB_GI of the management information shown in FIG. 8. As shown in FIG. 9, stream object general information ESOBI_GI includes ESOBI type ESOBI_TY, video recording start time ESOB_REC_TM/ESOB_REC_TM_SUB, one of ESOB start PTS (presentation time stamp and ATS (arrival time), and one of ESOB end PTS and ATS.

The ESOB_GI further includes PCR_PKT_SHIFT indicating PCR packet position shift, received stream packet length AP_PKT_SZ (188, since a TS packet is discussed currently), the number PKT_GRP_SZ (85 packets, since a TS packet is discussed currently) of received stream packets in a packet group, the number of map groups, APP_NAME, TS_ID, NETWORK_PID, PID of PMT of the recorded stream (based on PAT), SERVICE PID, FORMAT ID, Version (the value of a registration descriptor indicating the type of data in case of an external input; set with a data type unique to a tuner in case of an internal tuner), ESOB_REP_PID (PID of a representative stream of the SOB to be played back, or a component group number; the representative PID is used upon generating the ESOBI_GI video recording start time, ESOB start and end PTS or ATS), PCR PID, and the number of ESs of the ESOB (based on PMT).

Moreover, the ESOBI_GI stores video default PID (or component tag) ESOB_REP_PID of the ESOB, ESOB edit time ESOB_EDIT_TIME, and the like. In this way, even if cell information CI does not describe the PID to be played back, playback can be made according to ESOB_REP_PID in the ESOBI.

In addition, the ESOBI_GI is set with VOBU/ESOBU_PBT_IVL used to change the time intervals of VOBUs/SOBUs (VOBU/ESOBU_PBT_IVL may be set in time map generation information TMAP_GI).

When the value of VOBU/ESOBU_PBT_IVL is 0, VOBU/ESOBU falls within the range from 0.4s to 1.0s; when the value of VOBU/ESOBU_PBT_IVL is 1, VOBU/ESOBU falls within the range from 1.0s to 2.0s; and when the value of VOBU/ESOBU_PBT_IVL is 2, VOBU/ESOBU falls within the range from 2.0s to 3.0s. In this manner, TMAPI information can be prevented from becoming extremely large even when a video recording time increases. (However, in such case, since the time interval between neighboring entries is broadened, it is more likely to disturb smooth double-speed playback and the like.)

Furthermore, it is checked if ESOB is cognizable. If ESOB is cognizable, 0 is set in ESOB_COG/NONCOG; otherwise, 1 is set in ESOB_COG/NONCOG. When 0 is set in ESOB_COG/NONCOG, TMAPI in this embodiment is formed to make playback and the like. However, when 1 is set in ESOB_COG/NONCOG, the file system has management information unique to a manufacturer to manage contents.

FIG. 10 is a view for explaining an example of the configuration of ESOB elementary stream information, time map general information (TMAP_GI), and elementary stream map information (ES_MAPI) of the management information shown in FIG. 8.

As shown in FIG. 10, ESOB_ESI is set with a stream type, the PID of that stream, and a VSTI number in case of Video, an ASTI number in case of Audio, or 0xffff for another stream. Note that the stream type is described in the PMT.

TMAP_GI includes ADR_OFS (start address of the head of SOB: Logical Block: LB units), ESOB_S_PKT_POS (start packet number in LB of ESOB), ESOB_E_PKT_POS (end packet number in LB of ESOB), and the number of ES_MAPs, as shown in FIG. 10.

FIG. 11 is a view for explaining an example of the configuration of the contents of ES_MAP_GI shown in FIG. 10. As shown in FIG. 11, ES_MAP_GI includes ESOBU entry information. ES_MAPGI 1324361 includes ES_PID (PID of that elementary stream) 13243611, the number of ESOBU entries 13243612, 1ST_ESOBU_S_PKT_POS (the TS packet number of the first TS packet of the first ESOBU from the head of a Packet Group) 13243613, ESOBU type 13243614, and PCR interval 13243615 indicated within ESOBU.

There are three types of ESOBU, i.e., a case wherein video data is available, a case wherein video data is not available and audio data is available, and a case of only other kinds of information. In the example of FIG. 11, these ESOBU types are respectively 00, 01, and 10.

As for the PCR interval, the PCR interval = "00" indicates the PCR position within ESOB ENT immediately before (one PCR before) reference picture REF_PIC (I-picture); the PCR interval = "01" indicates the PCR position within ESOB_ENT two PCR data before REF_PIC; the PCR interval = "10" indicates the PCR position within ESOB_ENT three PCR data before REF_PIC; and the PCR interval = "11" indicates another instruction state.

FIG. 12 is a view for explaining an example of the configuration of the contents of ESOBU_ENT shown in FIG. 10. FIG. 13 is a view for explaining an example of the contents of ESOBU shown in FIG. 2 depending on the availability of video and audio data.

There are three types of ESOBU, i.e., a case wherein video data is available, a case wherein video data is not available and audio data is available, and a case of other kinds of information, and these types are respectively indicated by [1], [2], and [3]. That is, there are three types of ESOBU entry information in correspondence with these types.

[1] When video data is available, ESOBU entry information includes end address information (LB unit) lst_Ref_PIC_SZ of the first reference picture (I-picture or the like) in an entry from the head of ESOBU, ESOBU playback time (the number of fields) ESOBU_PB_TM, ESOBU_SZ (a size expressed by the number of packet groups, i.e., the number of packet groups which belong to the ESOBU, as shown in FIG. 62 (to be described later)), ESOBU_START (the number of packets of a packet group that stores the head of ESOBU from the head position), PCR_POS, and Random_access_flag.

Note that PCR_POS represents PCR at the position indicated by the PCR interval using the address count from the head of ESOBU. If no PCR is available, PCR_POS = 0xffff. Also, the number of LBs of PCR_POS can also be expressed by PCR_POS $\times$ 2^PCR_POS_SHIFT. Note that the PCR is a position of the PCR which is located several minutes indicated by the PCR interval before the reference picture position. Random access_flag is a flag indicating whether or not I-picture is present at the head of ESOBU. If this flag is 1, I-picture is present; otherwise, no I-picture is present.

In this manner, in case of a time search, ESOBU at a target timing is obtained by accumulating ESOBU_PB_TM, and the playback start PTM can be calculated using the number of fields from the head of that ESOBU. Let K be the target ESOBU that is to undergo a time search, and A be the target address. Then, target address A is expressed by a "value obtained by multiplying the accumulated value of ESOBU_SZ(N) from N = 1 to N = K ñ 1 by 8, and adding 1 to the product". That is,

$$A = \sum_{N=1}^{k-1} \{ESOBU_SZ\ (N)\} \times 8 + 1 \qquad (1)$$

Furthermore, the first packet is indicated by the value of ESOBU_S_PKT_POS to access this address.
[2] When video data is not available and audio data is available, ESOBU entry information includes the end address information (the same as that described above) of the first audio frame in an entry from the head of ESOBU, ESOBU playback time (the number of fields), ESOBU size (the same as that described above), and PCR_POS.
[3] When only other kinds of information are available, since entry information cannot be formed, all data are padded with "FF"s.

FIG. 14 is a view for explaining an example of the configuration of PGC information (original PGC information ORG PGCI/user-defined information table information UD_PGCITI) included in another management information (stream data management information RTR_ESMG) recorded on AV data management information recording area 130. User-defined information table information UD_PGCITI 1340 includes UD_PGCIT 1341, one or more UD_PGCI_SRP#1 to UD_PGCI_SRP#r 1342, and one or more pieces of user-defined information UD_PGCI#1 to UD_PGCI#s 1343.

FIG. 15 is a view for explaining an example of the configuration of the contents of elements of program chain information (ORG_PGC information or UD_PGC information) shown in FIG. 14. This program chain information (PGC information; PGCI) includes program chain general information (PGC_GI) 1331, one or more pieces of program information (PGI#1 to PGI#p) 1332, one or more cell search pointers (CELL_SRP#1 to CELL_SRP#q) 1333, and one or more pieces of cell information (CI#1 to CI#q) 1334.

Program chain general information 1331 includes the number of programs 13311, and the number of cell search pointers 13312. Each program information 1332 includes program type 13321, the number of cells 13322 in the program, primary text information 13323, item text search pointer number 13324, representative picture information 13325, editor ID 13326, program index number (program absolute number) 13327, program update date 13328, and manufacturer's information number 13329. Each cell information 1334 includes cell type 13341, ESFI number 13342, corresponding ESOB number 13343, reference ID 13344, the number of pieces of cell entry point information 13345, cell start PTS/ATS 13346, cell start PTS/ATS 13347, and cell entry point information table (C_EPIT) 13348.

Note that the field of program update date 13328 saves date information (year, month, day, hour, minute, and second) when the program management information is updated. Also, the field of MNFI number 13329 describes the manufacturer's information search pointer number.

PGC information in FIG. 15 is playback information, and ORG_PGC information is automatically generated by an apparatus (recorder) upon video recording and is set in the order of video recording, as in a normal VR format. On the other hand, UD_PGC information is generated according to a playback order which is freely added by the user, and is called a playlist. These two formats have a common format in PGC level, and FIG. 15 shows the common format of the PGC information.

Each program information (PGI) saves update date information 13328 of that program (PG). Based on this date information, when this program was edited is identified. In order to use MNFI which is assured to implement functions unique to each manufacturer (of the recorder), the search pointer number (MNFI number) 13329 of manufacturer's information MNFI is set in program information PGI. That is, by also setting the PG number (program index number in FIG. 23 to be described later) in the MNFI information, data in the MNFI information are linked with data in PGCI.

In cell information 1334 in FIG. 15, the ESOB type is added to the cell type. Furthermore, in cell information 1334, the corresponding ESOB number is designated to designate the cell start time (cell start PTS/ATS) and end time (cell end PTS/ATS). Note that the cell start time and end time can be expressed by either of two methods, i.e., PTS units (playback time) and ATS units (transfer time).

When a time is designated by a playback time (real time upon playback), the same access method as in the conventional VR is allowed, and the user can designate a desired access position using a playback time. Hence, a user's desire can be perfectly reflected. However, this method can be designated only when the stream contents can be sufficiently cognizable. If the contents cannot be sufficiently cognizable, a time must be designated using a transfer time.

If a time is designated using a playback time in such case, playback cannot always be started from the head of I-picture data. If a frame at the playback start position is not I-picture, decoding starts from immediately preceding I-picture, and display of a playback video starts when the target frame is decoded, thus presenting a picture to the user as if playback were started from the designated frame.

As for "reference ID" included in cell information 1334 in FIG. 15, a method of setting the PID (or component tag value) of a representative one of streams to be played back, and a method of setting the ID of a component group in case of multi-view TV or the like are available. Also, when the setting value of this reference ID is 0xffff, displaying the contents of multiviews on sub windows, and a method of preferentially displaying views of a group which is set in advance (or a default main group) of multi-views, and switching display to other views later (during playback) are available.

As a new concept, by storing the "manufacturer ID (editor ID 13326) of the last apparatus used to execute an edit process" in PGI, information indicating the manufacturer of an apparatus used to execute an edit process (of the recorded disc) can be identified. With this information, the use state of information of MNFI used in respective manufacturers can be recognized. When the contents of a given area are rewritten using an apparatus of another manufacturer, each apparatus may recognize that information in that MNFI has poor reliability. For this reason, new MNFI must be formed after the edit process using the apparatus of the other manufacturer. A unique ID number (PG absolute number) 13327 is appended to PG, and the remaining PG can be designated by a number which remains unchanged even when a middle PG is deleted.

Furthermore, to cell entry point information table C_EPIT 13348, a serial number (index number: EP_INDX_NUM in FIG. 18 to be described later) and edit date (LAST_TM in FIG. 18 to be described later) of each entry point in a disc, PTM (position which is not always the same as the EP position; EP_PTM in FIG. 18 to be described later) used to designate a thumbnail which belongs to EP, a thumbnail number (TBN_PT in FIG. 18 to be described later) in a thumbnail file, and a pointer (TXT_NUM in FIG. 18 to be described later: an item number in case of item text; otherwise, a pointer of in an independent text data file) onto text other than PRM_TXT are added.

For the purpose of reducing the data size of VMG (HR_MANGR.IFO file in FIG. 3), VMG describes minimum required entry point information. If such entry point information does not suffice, extended entry point information (HR_EXEP.DAT in FIG. 3 or C_EPIT in FIG. 15) can be added. (Since VMG data is management information which is frequently referred to in terms of apparatus operations, it must reside on the apparatus memory. For this reason, if VMG data has a large size, the required work RAM capacity increases accordingly, resulting in an increase in cost of the apparatus. For this reason, the VMG data preferably has a small size.)

Note that extended entry point information can be provided in two methods: a method of appending that information after VMG as needed (C_EPIT in FIG. 15), and a method of storing that information as an independent file (HR_EXEP.DAT in FIG. 3). In this case, whether or not an extended entry point is present can be examined by checking if the entry point index number (EPL_INDEX in FIG. 22 to be described later) in the extended entry point information matches the target entry point number. However, when a flag indicating the presence of extended entry point information EXEP is added to original entry point information, the availability confirmation process of extended entry points can be simplified. In this case, since the management information increases, the data size of VMG increases accordingly.

That is, an information medium (100 in FIG. 1), which has a data area (131) that records AV information including moving picture information, and a management area (130) that stores management information used to manage AV information recorded on this data area as one or more programs (PG), is configured so that the management information (DVD_HDVR/HR_MANGR.IFO; VMG in FIG. 4 or ESMG in FIG. 14) has program chain information (PGCI in FIG. 4 or 14) used to manage playback of a chain of one or more programs (PG), and manufacturer's information (MNFI in FIG. 4 or 14) that can describe information unique to each manufacturer, the program chain information (PGCI in FIG. 15) includes program information (PGI) as management information of the program (PG), and update date information upon updating the program (PG) can be stored in both the program information (PGI in FIG. 15) and the manufacturer's information (MNFI in FIG. 23).

FIG. 16 is a view for explaining an example of the configuration of the contents of the text data manager (TXTD_MG) included in management information recorded on management information recording area 130 shown in FIG. 4 or 14. Text data manager (TXTD MG) 1350 includes text data information 1351, one or more item text search pointers 1352, one or more item text (IT_TXT) data 1353. Each item text 1353 can include program index number 13531, program update date 13532, and text data 13533.

Note that PRM_TXT in FIG. 15 is used for the name of a recorded program, and IT_TXT in FIG. 16 is used to save other kinds of text information as text information recorded on disc 100 in FIG. 1. The text data field of this IT_TXT can save other kinds of information (director name, leading actor name, and the like if the recorded program is a movie) In this case, program information PGI in FIG. 15 is set with a search pointer number of saved IT_TXT to establish a link. Also, a PG number (program index number) is set in IT_TXT data in FIG. 16. Note that the PG number is an absolute number from the beginning of recording on this disc, and is an index number which remains unchanged even after other programs PG are deleted.

Note that the PG update date information (13532, 13632) is set in both MNFI in FIG. 23 (to be described later) and IT_TXT in FIG. 16, and whether or not that disc has undergone an edit process or the like using a recorder of another manufacturer can be verified by checking upon, e.g., displaying a menu if the update times match.

FIG. 17 is a view for explaining an example of the configuration of the contents of the cell entry point information table (C_EPIT) included in the cell information shown in FIG. 15. This C_EPIT can have one or more pieces of cell entry point information (#1 to #n) 133481.

FIG. 18 is a view for explaining an example (EPI of example 1) of the configuration of the contents of cell entry point information (C_EPI) shown in FIG. 17. In this example (example 1), each C_EPI can include an entry point type (EP_TY), entry point absolute number (EP_INDX_NUM), entry point playback time (EP_PTM), last edit date (LAST_TM), primary text information (PRM_TXT), playback time pointer (EP_REP_PIC) of a thumbnail image (index still picture) on a program, which belongs to that entry point, thumbnail number (thumbnail pointer TBN_PT) in a thumbnail which belongs to that entry point, and number (a pointer used to refer to another text file) (TXT_NUM) of item text which belongs to that entry point.

That is, an information medium (100 in FIG. 1), which has a data area (131) that records AV information including moving picture information, and a management area (130) that stores management information used to manage AV information recorded on this data area as one or more programs (PG), is configured so that index picture information (thumbnail or representative picture) is included in an area (HR_THNL.DAT in FIG. 3) independent from the moving picture information (HR_STRMx.SRO or the like in FIG. 3), the management information (DVD_HDVR/HR__MANGR.IFO in FIG. 3; ESMG/PGCI in FIG. 14) includes information (CI in FIG. 15) of cells (C) corresponding to some of the programs (PG), this cell information (CI in FIG. 15) includes entry point information (C_EPI in FIG. 17) indicating an entry position into the program, and the entry point information (C_EPI in FIG. 17) can have index pointer information (TBN_PT in FIG. 18) used to designate the index picture information.

Alternatively, an information medium (100 in FIG. 1), which has a data area (131) that records AV information including moving picture information, and a management area (130) that stores management information used to manage AV information recorded on this data area as one or more programs (PG), is configured so that the management information (DVD_HDVR/HR_MANGR.IFO in FIG. 3; ESMG/PGCI in FIG. 14) includes primary text information (PRM_TXTI), one or more item text (IT_TXT in FIG. 16) data stored in an area (HR_TEXT.DAT; VMG/TXTDT_MG) independent from this primary text information (in PGCI), and information (CI in FIG. 15) of cells (C) corresponding to some of the programs (PG), this cell information (CI in FIG. 15) includes entry point information (C_EPI in FIG. 17) indicating an entry position into the program, and the entry point information (C_EPI in FIG. 17) can have item text pointer information (TXT_NUM in FIG. 18) used to designate one or more item text data (IT_TXT in FIG. 16) (so as to add required text information when C_EPI does not suffice to save PRM_TXTI).

FIG. 19 is a view for explaining an example of the configuration of the entry point type (EP_TY) included in C_EPI in FIG. 18. This EP_TY can store a thumbnail ON/OFF flag, primary text ON/OFF flag, item text ON/OFF flag, and the like.

If the thumbnail on/off flag is on, it indicates that TBN_PT in FIG. 18 is present; otherwise, it indicates that TBN_PT is not present. If the primary text on/off flag is on, it indicates that PRM_TXT in FIG. 18 is present; otherwise, it indicates that PRM_TXT is not present. Likewise, if the item text on/off flag is on, it indicates that TXT_NUM in FIG. 18 is present; otherwise, it indicates that TXT_NUM is not present.

That is, the entry point information (C_EPI in FIG. 18) can include the flag (Thumbnail on/off Flag in FIG. 19) indicating the presence/absence of the index pointer information (TBN_PT). The entry point information (C_EPI) can include the flag (IT_TXT on/off Flag in FIG. 19) indicating the presence/absence of the item text pointer information (TXT_NUM).

FIG. 20 is a view for explaining an example (EPI of example 2) of the configuration of the contents of cell entry point information (C_EPI) shown in FIG. 17. In this example (example 2), each C_EPI can include an entry point absolute number (EP_INDX_NUM), entry point playback time (EP_PTM), last edit date (LAST_TM), and playback time pointer (EP_REP_PIC) of a thumbnail image (index still picture) on a program, which belongs to that entry point. (Example 2 of FIG. 20 can reduce the data size compared to example 1 in FIG. 18. Instead, an extended entry point information table is assured, as shown in FIG. 21, and information omitted in FIG. 20 is stored in extended file HR_EXEP.DAT in FIG. 3 or each entry point information in the extended entry point information table.)

FIG. 21 is a view for explaining an example of files used to manage (or to form) the extended entry point information table (EX_EPIT) included in management information recorded on management information recording area 130 in FIG. 4 or 14. EX_EPIT is stored at the end (after MNFIT) of a management information sequence. However, when information with the same contents as those of EX_EPIT is described in extended file HR_EXEP.DAT in FIG. 3, EX_EPIT need not be stored after MNFIT (hence, note in FIG. 4 and the like describes that "EX_EPIT only in case of EPI of example 2").

FIG. 22 is a view for explaining an example (using EPI of example 2) of the configuration of the contents of the extended entry point information table (EX_EPIT) in FIG. 21. This EX_EPIT includes the total number (EX_EPI_NUMS) of extended entry points (EX_EP), and extended entry points (EX_EPI1 to EX_EPIn) as many as EX_EPI_NUMS. Each extended entry point (EX_EPI) has identical data fields. That is, each EX_EPI includes an absolute number (index number) (EPL_INDEX) of an entry point as a link destination, entry point type (EP_TY with the same contents as in FIG. 19), primary text information (PRM_TXT), thumbnail pointer (TBN_PT), and item text number (IT TXT NUM).

More specifically, an information medium (100 in FIG. 1), which has a data area (131) that records AV information including moving picture information, and a management area (130) that stores management information used to manage AV information recorded on this data area as one or more programs (PG), is configured so that index picture information (thumbnail or representative picture) is included in an object area (HR_THNL.DAT in FIG. 3) independent from the moving picture information (HR_STRMx.SRO or the like in FIG. 3), the management information (DVD_HDVR/HR_MANGR.IFO in FIG. 3; ESMG/PGCI in FIG. 14) includes absolute number information (program index number/PG absolute number in FIG. 15) of the programs (PG) and information (CI in FIG. 15) of cells corresponding to some of the programs (PG), the cell information (CI) includes entry point information (C_EPI in FIG. 17) indicating an entry position into the program, the entry point information (C_EPI in FIG. 17) has absolute number information (EP_INDX_NUM in FIG. 18) of the entry point, and a management area (HR_EXEP.DAT in FIG. 3 or EX_EPIT in FIG. 22) independent from the management information (DVD_HDVR/HR_MANGR.IFO in FIG. 3) can have the entry point extended information (the contents of EX_EPI#1 to EX_EPI#n in FIG. 22).

FIG. 23 is a view for explaining an example of the configuration of manufacturer's information (MNFI) included in the management information recorded on management information recording area 130 in FIG. 4 or 14. Manufacturer's information (MNFI) 1360 includes manufacturer's information table information 1361, one or more MNFI search pointers (#1 to #k) 1362, and one or more pieces of MNFI (#1 to #k) 1363. Each MNFI 1363 includes program index number 13631, MNFI recording date 13632*, program update date 13632, and MNFI data 13633. The manufacturer's information of the DVD recorder with this configuration is open to the public as information that can be accessed freely for respective manufacturers.

As can be seen from FIGS. 16 and 23, the program update date information can be set in both MNFI and IT_TXT. In this manner, whether or not that disc has undergone an edit process or the like using a recorder of another manufacturer can be verified by checking upon, e.g., displaying a menu if the update times match.

FIG. 24 is a view for explaining an example of the configuration of a data unit (ESOBU) for a stream object shown in FIG. 1 or 2. One ESOBU 134 includes one or more packet groups 140, each of which includes, e.g., 8 or 16 packs (1 pack = 1 sector: 2048 bytes).

Each packet group 140 includes packet group header (152 bytes) 161, one or more (85 or 170 in this case) MPEG-TS packets (188 bytes) 162, and one or more (84 in this case) IAPAT (Incremental Application Packet Arrival Time; 3 bytes) data 163.

Packet group header 161 includes sync pattern 151, packet arrival time (ATS) 152, information (DCI_CCI_SS) 153 indicating validity of DCI and CCI (to be described below), display control information (DCI) 154, copy generation management information (or copy control information CCI) 155, PCR position information (PCRI; Program Clock Reference Information) 156, and manufacturer's information (MNI (or manufacturer's information MNFI)) 157. (Note that this packet group header 161 may further include playback time information (PTS; Presentation time stamp) in another embodiment.)

Each MPEG-TS packet 162 includes 4-byte header 170 and adaptation field and/or payload 180. Note that header 170 includes sync byte 171, transport error indicator 172, payload unit start indicator 173, transport priority 174, packet identifier (PID) 175, transport scramble control 176, adaptation field control 177, and continuity index 178.

FIG. 25 is a view for explaining an example of the configuration of a packet arrival time (ATS), validity information (DCI_CCI_SS), and display control information (DCI) included in a pack group header shown in FIG. 24. For example, 6 bytes are assigned to ATS 152. Bits 38 to 0 of ATS 151 represent PAT_base (e.g., a counter value of 90 kHz) and bits 8 to 0 represent PAT_exten (e.g., a counter value of 27 MHz). Practical arrival time PAT is expressed by PAT_base/90000 Hz + PAT_exten/27,000, 000 Hz. In this manner, ATS 153 can be finely expressed for, e.g., respective video frames.

On the other hand, validity information (DCI CCI_SS) has 1 byte: 1-bit DCI_SS data indicates invalid if it is "0"; and valid if it is "1". Three-bit CCI_SS data indicates invalid if it is "0"; only APS is valid if it is "1"; only EPN is valid if it is "2"; APS and EPN are valid if it is "3"; only CGMS is valid if it is "4"; CGMS and APS are valid if it is "5"; CGMS and EPN are valid if it is "6", and all three APS, EPN, and CGMS are valid if it is "7".

Furthermore, 4 bytes are assigned to the display control information (DCI), and DCI for 32 streams is set for each ES. If no stream is available, this DCI field is padded with "0"s. In the contents of this DCI, aspect flags ("0" indicates an aspect ratio = 4 : 3, "1" indicates an aspect ratio = 16 : 9) of ES1 to ES32 are allocated in turn from the head.

FIG. 26 is a view for explaining an example of the configuration of copy generation management information (or copy control information CCI) included in the packet group header shown in FIG. 24. CCI includes digital copy control (00 = copy never, 01 = copy once, 11 = copy free), analog copy control (00 = no APS, 01 = APS type 1, 10 = APS type 2, 11 = APS type 3), EPN (0 = contents protection, 1 = no contents protection), and ICT (0 = analog video output resolution constraint, 1 = no constraint). Note that APS is an abbreviation for "Analog Protection System", and this embodiment assumes Macrovision®. Also, ICT is an abbreviation for image_constraint_token.

CCI and DCI respectively reflect the values of the digital copy control descriptor, contents use descriptor, and component descriptor. Especially, EPNI reflects the value (0: protection) of encryption_mode of the contents use descriptor, and ICT reflects the value (0: constraint) of image_constraint_token of the contents use descriptor.

When a change in CCI/DCI may take place in a single packet group of a single ES, that packet group is temporarily delimited, and the remaining data of the packet group are padded with dummy data to set the next packet group. In other words, an align process is executed to prevent CCI/DCI from changing in a packet group (this align process will be described later with reference to FIGS. 39 and 40).

FIG. 27 is a view for explaining an example of the configuration of an increment (IAPAT) of the packet arrival time and PCR position information (the number of packs, PCR_LB count number, or the like) included in a packet group shown in FIG. 24 after the packet group header. In this case, for example, 3 bytes are assigned to IAPAT 163. Bits 14 to 0 of IAPAT 163 express PAT_base (e.g., a counter value of 90 kHz) and bits 8 to 0 represent PAT_exten (e.g., a counter value of 27 MHz). Since IAPAT 163 can be expressed by an increment (change) from ATS 152 in place of an absolute time, the data size of IAPAT can be smaller than that of ATS.

Practical arrival time PAT in IAPAT 163 is' expressed by ATS + PAT_base/90000 Hz + PAT_exten/27,000,000 Hz. In this manner, IAPAT 163 can be finely expressed for, e.g., respective video frames. As another embodiment, a difference from the arrival time of the immediately preceding TS packet may be used (i.e., new PAT = immediately preceding pad + PAT_base/90000 Hz + PAT_exten/27,000,000 Hz). Note that "PAT" in "PAT_base and PAT_exten" above means not "Program Association Table" but "Packet Arrival Time".

This PCR position information 156 is expressed by, e.g., 2 bytes. These 2 bytes can express a PCR packet number. This PCR packet number can be expressed by the number of packs from the head of ESOBU closest to first reference picture (e.g., first I-picture) to logical a pack that stores the PCR. If no PCR is available, PCR position information 156 is set to be, e.g., "0xffff".

FIG. 28 is a view for explaining an example of the internal structure of an object file (HR_THNL.DAT; a file independent from a VMG file when EPI of example 2 is used) of thumbnail (or representative picture) data managed in the DVD_HDVR file in the file structure shown in FIG. 3. This file includes the number of thumbnails (NUM_THUM), and one or more thumbnail objects (THUM#1 to THUM#n). Each thumbnail object (e.g., THUM#1) includes THUM_STI indicating the compression method of that thumbnail, the data length (THUM_END_length) of the thumbnail, and real data (THUM_DATA) of the thumbnail. If THUM_STI = 0, it indicates that the real data of the thumbnail (THUM_DATA) is non-compressed bitmap data; if THUM_STI = 1, JPEG-compressed data; if THUM_STI = 2, MPEG1-compressed data; if THUM_STI = 3, data in the TIFF format; if THUM_STI = 4, data in the GIF format.

FIG. 29 is a view for explaining an example of the internal structure of an object file (HR_TEXT.DAT; additional text file) of text data managed in the file structure shown in FIG. 3.

This file includes the number of text data (NUM_TXT), and one or more text data (TEXT#1 to TEXT#n). Each text (e.g., TEXT#1) includes TEXT_STI indicating the character code method of that text, the data length of the text (TEXT_length), and real data of the text (TEXT_DATA). If TEXT_STI = 0, it indicates ASCII code; if TEXT_STI = 1, JIS code; if TEXT_STI =2, Shift JIS code; and if TEXT_STI = 3, Unicode.

Each text (TEXT#1 to TEXT#n) in FIG. 29 has a link from IT_TXT_NUM in the extended entry point information table in FIG. 22 (or extended entry point file HR_EXEP.DAT file in FIG. 3). If the text area of PRM_TXT in extended entry point information becomes short, TEXT_DATA in TEXT# in FIG. 29 linked via IT_TXT_NUM can make up the shortage as needed.

[PG(PL)_INDEX]

Note that two arbitrary programs (or playlists) never have an identical program index value (or identical playlist index value). That is, upon creating a new program (or playlist), an unused index value is searched for, and is described in the program index (or playlist index). This program index (or playlist index) remains unchanged even when another program (or playlist) is deleted or added.

[PG(PL)_LAST_MOD_TM]

A recorder which has changed information associated with a program (or playlist) is configured to also update PG_LAST_MOD_TM (or PL_LAST_MOD_TM) as one management information simultaneously with that change. In this case, "information associated with a program (or playlist)" is checked and specified.

The "information associated with a program (or playlist)" includes:

[information associated with a program]

every kinds of information in corresponding program information; and
every kinds of information in corresponding cell information (or every kinds of information in corresponding VOBI and/or SOBI).

[information associated with a playlist]

every kinds of information in the corresponding playlist search pointer; and
every kinds of information in corresponding user-defined PGC information (or every kinds of information in corresponding VOBI and/or SOBI).

An exception will be explained below wherein only VOB/VOBI or SOB/SOBI to be referred to by a corresponding program (or playlist) is changed without updating PG (or PL) associated with PGI, CI, PL_SRP, and UD_PGCI. However, if such exception takes place, PG (PL)_LAST_MOD_TM is updated.

Note that PG(PL)_INDEX and PG(PL) _LAST_MOD_TM may be option data which are linked with each PG (PL). A recorder which can handle such option data always updates PG(PL)_LAST_MOD_TM in an option data area when it has updated PG(PL) _LAST_MOD_TM in PGI (PL_SRP).

When only option data are updated without updating information associated with PGI (PL), PG(PL) LAST_MOD_TM in each of the two areas remains unchanged.

If the recorder detects that PG(PL)_INDEX and PG(PL)_LAST_MOD_TM described in the option data area have the same values as those described in PGI (PL_SRP), that recorder can recognize that the option data is consistent with the corresponding PG (PL). Otherwise, the recorder recognizes that the option data is inconsistent with the corresponding PG (PL).

At least theoretically, the aforementioned concept of consistency detection can be applied to other types of objects (e.g., VOB, cell, or entry point). In such application, the data size and processing speed must be taken into consideration.

FIG. 30 is a block diagram for explaining an example of the apparatus which records and plays back AV information (digital TV broadcast program or the like) on an information recording medium (optical disc, hard disc, or the like) using the data structure according to the embodiment of the present invention.

As shown in FIG. 30, this apparatus (digital video recorder/streamer) comprises MPU unit 80, key input unit 103, remote controller receiver 103b for receiving user operation information from remote controller 103a, display unit 104, decoder unit 59, encoder unit 79, system time counter (STC) unit 102, data processor (D-PRO) unit 52, temporary storage unit 53, disc drive unit 51 for recording/playing back information on/from recordable optical disc 100 (e.g., a DVD-RAM or the like), hard disc drive (HDD) 100a, video mixing (V-mixing) unit 66, frame memory unit 73, analog TV D/A converter 67, analog TV tuner unit 82, terrestrial digital tuner unit 89, and STB (Set Top Box) unit 83 connected to satellite antenna 83a. Furthermore, this apparatus comprises digital I/F 74 (e.g., IEEE1394) to support digital inputs/outputs as a streamer. Note that STC unit 102 counts clocks on a 27-MHz basis in correspondence with PAT_base shown in FIG. 25 or 27.

STB unit 83 decodes received digital broadcast data to generate an AV signal (digital). STB unit 83 sends the AV signal to TV 68 via encoder unit 79, decoder unit 59, and D/A converter 67 in the streamer, thus displaying the contents of the received digital broadcast. Alternatively, STB unit 83 directly sends the decoded AV signal (digital) to V-mixing unit 66, and can send an analog AV signal from it to TV 68 via D/A converter 67.

The apparatus shown in FIG. 30 forms a recorder comprising both the video and stream recording functions. Hence, the apparatus comprises components (IEEE1394 I/F and the like) which are not required in video recording, and those (AV input A/D converter 84, audio encode unit 86, video encode unit 87, and the like) which are not required in stream recording.

Encoder unit 79 includes A/D converter 84, video encode unit 87, input selector 85 to video encode unit 87, audio encode unit 86, a sub-picture encode unit (as needed although not shown), format unit 90, and buffer memory unit 91.

Decode unit 59 comprises demultiplexer 60 which incorporates memory 60a, video decode unit 61 which incorporates memory 61a and reduced-scale picture (thumbnail or the like) generator 62, sub-picture (SP) decode unit 63, audio decode unit 64 which incorporates memory 64a, TS packet transfer unit 101, video processor (V-PRO) unit 65, and audio D/A converter 70. An analog output (monaural, stereo, or AAC 5.1CH surround) from this D/A converter 70 is input to an AV amplifier or the like (not shown) to drive a required number of loudspeakers 72.

In order to display on TV 68 contents whose video recording is in progress, stream data to be recorded is sent to decoder unit 59 simultaneously with D-PRO unit 52, and can be played back. In this case, MPU unit 80 makes setups upon playback in decoder unit 59, which then automatically executes a playback process.

D-PRO unit 52 forms ECC groups by combining, e.g., every 16 packs (or 32 packs or 64 kbytes), appends ECC data to each group, and sends them to disc drive unit 51. When disc drive unit 51 is not ready to record on disc 100, D-PRO unit 52 transfers the ECC groups to temporary storage unit 53 and waits until disc drive unit 51 is ready to record. When disc drive unit 51 is ready, D-PRO unit 52 starts recording. As temporary storage unit 53, a large-capacity memory is assumed since it must hold recording data for several minutes or longer by high-speed access. Temporary storage unit 53 may be assured by using a given area of HDD 100a. Note that MPU unit 80 can make read/write access to D-PRO unit 52 via a dedicated microcomputer bus, so as to read/write the file management area and the like.

The apparatus shown in FIG. 30 assumes optical disc 100 such as DVD-RAM/-RW/-R/Blue media (recordable media using blue laser) and the like as primary recording media, and hard disc drive (HDD) 100a (and/or a large-capacity memory card (not shown) or the like) as its auxiliary storage device.

These plurality of types of media can be used as follows. That is, stream recording is done on HDD 100a using the data structure (format) shown in FIGS. 1 to 29. Of stream recording contents which are recorded on HDD 100a, programs that the user wants to preserve directly undergo stream recording (direct copy or digital dubbing) on disc 100 (if copying is not inhibited by copy control information CCI). In this manner, only desired programs having quality equivalent to original digital broadcast data can be recorded together on disc 100. Furthermore, since the stream recording contents copied onto disc 100 exploit the data structure of the present invention, they allow easy special playback processes such as time search and the like, although these contents are recorded by stream recording.

A practical example of a digital recorder having the aforementioned features (a streamer/video recorder using a combination of DVD-RAM/-RW/-R/Blue media and HDD) is the apparatus shown in FIG. 30. The digital recorder shown in FIG. 30 is configured to roughly include a tuner unit (82, 83, 89), disc unit (100, 100a), encoder unit 79, decoder unit 59, and a controller (80).

Satellite digital TV broadcast data is delivered from a broadcast station via a communication satellite. The delivered digital data is received and played back by STB unit 83. This STB 83 expands and plays back scrambled data on the basis of a key code distributed from the broadcast station. At this time, scramble from the broadcast station is descrambled. Data is scrambled to prevent users who are not subscribers of the broadcast station from illicitly receiving broadcast programs.

In STB unit 83, the broadcast digital data is received by a tuner system (not shown). When the received data is directly played back, it is descrambled by a digital expansion unit and is decoded by an MPEG decoder unit. Then, the decoded received data is converted into a TV signal by a video encoder unit, and that TV signal is externally output via D/A converter 67. In this manner, the digital broadcast program received by STB unit 83 can be displayed on analog TV 68.

Terrestrial digital broadcast data is received and processed in substantially the same manner as satellite broadcast data except that it does not go through any communication satellite (and is not scrambled if it is a free broadcast program). That is, terrestrial digital broadcast data is received by terrestrial digital tuner unit 89, and the decoded TV signal is externally output via D/A converter 67 when it is directly played back. In this way, a digital broadcast program received by terrestrial digital tuner unit 89 can be displayed on analog TV 68.

Terrestrial analog broadcast data is received by terrestrial tuner unit 82, and the received analog TV signal is externally output when it is directly played back. In this way, an analog broadcast program received by terrestrial tuner unit 82 can be displayed on analog TV 68.

An analog video signal input from external AV input 81 can be directly output to TV 68. Also, after the analog video signal is temporarily A/D-converted into a digital signal by A/D converter 84, and that digital signal is then re-converted into an analog video signal by D/A converter 67, that analog video signal may be output to the external TV 68 side. In this way, even when an analog VCR playback signal that includes many jitter components is input from external AV input 81, an analog video signal free from any jitter components (that has undergone digital time-base correction) can be output to the TV 68 side.

A digital video signal input from digital I/F (IEEE1394 interface) 74 is output to the external TV 68 side via D/A converter 67. In this way, a digital video signal input to digital I/F 74 can be displayed on TV 68.

A bitstream (MPEG-TS) input from satellite digital broadcast, terrestrial digital broadcast, or digital I/F 74 can undergo stream recording in stream object group recording area 131 (FIG. 1(d)) of disc 100 (and/or HDD 100a) as stream object 132 in FIG. 1(e). An analog video signal from terrestrial analog broadcast or AV input 81 can undergo video recording on VR object group recording area 122 (FIG. 1(d)) of disc 100 (and/or HDD 100a).

Note that the apparatus may be configured to temporarily A/D-convert an analog video signal from terrestrial analog broadcast or AV input 81 into a digital signal, and to make stream recording of the digital signal in place of video recording. Conversely, the apparatus may be configured to make video recording of a bitstream (MPEG-TS) input from satellite digital broadcast, terrestrial digital broadcast, or digital I/F 74 (after it undergoes required format conversion) in place of stream recording.

Recording/playback control of stream recording or video recording is done by firmware (control programs and the like corresponding to operations shown in FIGS. 31 to 72 to be described later) written in ROM 80C of main MPU unit 80. MPU unit 80 has management data generation unit 80B for stream recording and video recording, generates various kinds of management information using work RAM 80A as a work area, and records the generated management information on AV data management information recording area 130 in FIG. 1(d) as needed. MPU unit 80 plays back management information recorded on AV data management information recording area 130, and executes various kinds of control (FIGS. 31 to 72) on the basis of the played back management information. Note that manufacturer ID information and the like of the apparatus shown in FIG. 30 can be written on ROM 80C of MPU unit 80.

The features of medium 100 (100a) used in the apparatus of FIG. 30 will be briefly summarized below. That is, this medium has management area 130 and data area 131. Data is separately recorded on the data area as a plurality of object data (ESOB), and each object data is made up of a group of data units (ESOBU). One data unit (ESOBU) includes packet groups each of which is formed by converting a MPEG-TS compatible digital broadcast signal into TS packets and packing a plurality of packets (see FIGS. 1 and 24). On the other hand, management area 130 has PGC information (PGCI) as information used to manage the playback sequence. This PGC information contains cell information (CI). Furthermore, management area 130 includes information used to manage object data (ESOB).

The apparatus shown in FIG. 30 can make stream recording on medium 100 (100a) with the above data structure in addition to video recording. In this case, in order to extract program map table PMT and service information SI from a TS packet stream, MPU unit 80 has a service information extraction unit (not shown; firmware that forms management data generation unit 80B). Also, MPU unit 80 has an attribute information generation unit (not shown; firmware that forms management data generation unit 80B) that generates attribute information (PCR_pack number, PCR_LB count number, and the like) on the basis of information extracted by the service information extraction unit.

In the apparatus shown in FIG. 30, the flow of signals upon recording are, for example, as follows. That is, TS packet data received by the STB unit (or terrestrial digital tuner) are packed into packet groups by the formatter unit and the packet groups are saved on a work area (buffer memory unit 91). When the saved packet groups reach a predetermined size (for one or an integer multiple of CDA size), they are recorded on the disc. As the operations to be executed at that time, upon reception of TS packets, a group is formed every 85 packets, and a packet group header is generated.

On the other hand, an analog signal input from the terrestrial tuner or line input is converted into a digital signal by the A/D converter. That digital signal is input to respective encoder units. That is, a video signal is input to the video encode unit, an audio signal is input to the audio encode unit, and text data of, e.g., teletext broadcasting is input to an SP encode unit (not shown). The video signal is compressed by MPEG, the audio signal is compressed by AC3 or MPEG audio, and the text data is compressed by runlength coding.

Each encoder unit packs compressed data (or segments into blocks) to form 2084-byte packets (or blocks) and inputs them to the formatter unit. The formatter unit multiplexes the packets (or blocks), and sends them to the D-PRO unit. The D-PRO unit forms ECC blocks for every 16 (or 32) packets (or blocks), appends error correction data to them, and records the ECC packets (or blocks) on the disc via the disc drive unit.

When the disc drive unit is busy due to seek, track jump, and the like, data are stored in an HDD buffer unit, and wait until the disc drive unit is ready. Furthermore, the formatter unit generates segmentation information during video recording, and periodically sends it to the MPU unit (GOP head interrupt or the like). The segmentation information includes the number of packs (or the number of LBs) of VOBU (ESOBU), the end address of I-picture data from the head of VOBU (ESOBU), the playback time of VOBU (ESOBU), and the like.

In the flow of signals upon playback, data are read out from the disc by the disc drive unit, undergo error correction by the D-PRO unit, and are then input to the decode unit. The MPU unit determines the type of input data (i.e., VR or ESR data) (based on the cell type), and sets that type in the decoder unit before playback. In case of ESR data, the MPU unit determines PMT_ID to be played back based on cell information CI to be played back, determines the PIDs of items (video, audio, and the like) to be played back based on that PMT, and sets them in the decoder unit. In the decoder unit, the demultiplexer sends TS packets to the respective decode units based on the PIDs. Furthermore, the TS packets are sent to the TS packet transfer unit, and are transmitted to the STB unit (1394 I/F) in the form of TS packets. The respective decode units execute decoding, and decoded data are converted into an analog signal by the D/A converter, thus displaying data on the TV. In case of VR data, the demultiplexer sends data to the respective decode unit according to the fixed IDs. The respective decode units execute decoding, and decoded data are converted into an analog signal by the D/A converter, thus displaying data on the TV.

In the flow of signals upon recording, TS packet data received by the STB unit (or terrestrial digital tuner) are converted into packet groups by the formatter unit, and are saved in the work RAM. When data saved in the work RAM reach a predetermined size (for one or an integer multiple of CDA size), they are recorded on the disc.

FIG. 31 is a flowchart (overall operation process flow) for explaining an example of the overall operation of the apparatus shown in FIG. 30. In this case, data processes include five different processes, i.e., a video recording process, playback process, data transfer process (a digital output process to the STB or the like), program setting process, and edit process.

For example, when the power switch of the apparatus in FIG. 30 is turned on, MPU unit 80 makes initial setups (upon factory shipment or after user's setups (step ST10). MPU unit 80 also makes display setups (step ST12) and waits for a user's operation. If the user has made a key input from key input unit 103 or remote controller 103a (step ST14), MPU unit 80 interprets the contents of that key input (step ST16). The following five data processes are executed as needed in accordance with this input key interpretation result.

That is, if the key input is, for example, a key operation made to set timer program recording, a program setting process starts (step ST20). If the key input is a key operation made to start video recording, a video recording process starts (step ST22). If the key input is a key operation made to start playback, a playback process starts (step ST24). If the key input is a key input made to output digital data to the STB, a digital output process starts (step ST26). If the key input is a key operation of an edit process, the edit process starts (step ST28).

The processes in steps ST20 to ST28 are parallelly executed as needed for respective tasks. For example, the process for outputting digital data to the STB (ST26) is parallelly executed during the playback process (ST24). Or a new program setting process (ST20) can be parallelly executed during the video recording process (ST22) which is not timer program recording. Or by utilizing the feature of disc recording that allows high-speed access, the playback process (ST24) and digital output process (ST26) can be parallelly executed during the recording process (ST22). Also, the disc edit process (step ST28) can be executed during video recording on the HDD.

FIG. 32 is a flowchart (interrupt process flow) for explaining an example of an interrupt process in the operation of the apparatus shown in FIG. 30. In the interrupt process in the control operation of MPU unit 80, an interrupt factor is checked (step ST30). If the interrupt factor indicates that an interrupt is generated due to "completion of transfer for one pack (or one packet) to D-PRO unit 52", the number of recorded packs is counted up, or the number LBN of recorded logical blocks incremented by 1 (step ST301). If the interrupt factor indicates that an interrupt is generated due to "fetching of segmentation information from formatter unit 90", a fetch interrupt flag (not shown) of segmentation information 1 is set (step ST302).

FIG. 33 is a flowchart (edit operation process flow) for explaining an example of the contents of the edit process (ST28) shown in FIG. 31. When the control enters the edit process, the flow branches to one of four processes (one of A to D) (step ST280) in accordance with the edit contents. Upon completion of one of an entry point edit process (step ST282A), copy/move process (step ST282B), delete process (step ST282C), and playlist generation process (step ST282D), the program update date by this edit process is set in respective pieces of management information (PGI in FIG. 15, IT_TXT in FIG. 16, MNFI in FIG. 23, LAST_TM in FIG. 18 or 20) (step ST284).

When one of program information PGI, cell information CI in FIG. 15, or VOB/SOB in FIG. 2 has been changed, this program update date may be set. When VOBI and/or SOBI have/has been changed, the edit times/time (EDIT_TIME) of the VOBI and/or SOBI can be set in ESOB_EDIT_TIME in FIG. 9 or the like (step ST284).

In this connection, in the process in step ST284, the manufacturer ID of the apparatus that has made the operation in one of steps ST282A to ST282D may be set in editor ID (LAST_MNF_ID) 13326 in FIG. 15. Every time one of PGI, CI, and SOB (or VOB) has been changed, this editor ID can be set (or updated) to the ID information of the apparatus used at that time.

FIGS. 34 and 35 are flowcharts (video recording flow with an entry point appending process) for explaining an example of the video recording operation of the apparatus shown in FIG. 30.

[a1] A program to be recorded is determined using EPG (Electronic Program Guide) in the program setting process, reception of that program starts, and the determined program is recorded.

[a2] Upon reception of a video recording command from the key input unit, the MPU unit loads management data from disc drive unit and determines a write area. At this time, MPU unit checks the file system to determine whether or not video recording can be proceeded. If video recording can be proceeded, the MPU unit determines a recording position; otherwise, a message that advises accordingly is displayed for the user, thus aborting the recording process.

[a3] The contents of the management area are set to write data in the determined area, and the write start address of video data is set in the disc drive unit, thus preparing for data recording.

[a4] The time of the STC unit is reset. Note that the STC unit is a system timer, and video recording/playback is done with reference to the count value of this timer.

[a5] The PAT of a program to be recorded is loaded to determine the PID required to fetch the PMT of the target program. Then, the target PMT is loaded to determine the PID data of data (video, audio) to be decoded (to be recorded). At this time, the PAT and PMT are saved in the work RAM of the MPU unit, and are written in the management information. VMG file data is written in the file system, and required information is written in VMGI (step ST110; see FIG. 36 for details).

[a6] Video recording setups are made in respective units. At this time, a segmentation setup of data and a reception setup of TS packets are made in the formatter unit. Also, the PID of data to be recorded is set to record only a target video stream. Furthermore, the buffer is set to start holding of TS packets, and the formatter unit starts operation (step ST116).

[a7] VSTI and ASTI are generated based on the PMT (step ST120; see FIG. 37 for details).

[a8] If data stored in the buffer reaches a predetermined size, a ECC process is done via the D-PRO unit, thus recording the data on the disc (step ST130; see FIGS. 38 and 39 for details).

[a9] During video recording, segmentation information is saved in the work RAM of the MPU unit periodically (before the buffer RAM of the formatter unit becomes full of data). The segmentation information to be saved is that of ESOBU data, i.e., the ESOBU start address, ESOBU pack length, I-picture end address, the ESOBU arrival time (ATS), or the like may be saved.

[aX] After the segmentation information is fetched from the formatter unit, an entry point appending process (step ST147; see FIG. 45 for details) is executed (if it is set in advance to execute this process).

[a10] It is checked if video recording is to end (if the user has pressed a video recording end key or if no recordable space remains). If video recording is to end, remaining segmentation information is fetched from the formatter unit, and is added to the work RAM. These data are recorded in management data (VMGI), and remaining information is recorded in the file system.

[a11] If video recording is not to end, the control returns to [a7] to continue the data fetch and write processes.

In order to display contents on the TV, data is sent to the decoder unit simultaneously with the D-PRO unit, and is played back. In this case, the MPU unit makes setups upon playback in the decoder unit, which then automatically executes a playback process. The D-PRO unit forms ECC groups by combining, e.g., every 16 packs, appends ECC data to each group, and sends them to the disc drive unit. When the disc drive unit is not ready to record on the disc, the D-PRO unit transfers the ECC groups to the temporary storage unit and waits until the disc drive unit is ready to record data. When the disc drive unit is ready, the D-PRO unit starts recording. As the temporary storage unit, a large-capacity memory is assumed since it must hold recording data for several minutes or longer by high-speed access. Also, the MPU unit can make high-speed read/write access to the D-PRO unit via a dedicated microcomputer bus, so as to read/write the file management area and the like.

FIG. 36 is a flowchart (video recording pre-process flow) for explaining an example of a process before the beginning of video recording on a disc-shaped information storage medium (e.g., an optical disc using blue laser) shown in FIG. 1.

[b1] A DVD_HDVR directory is searched for (a directory that stores new VR). If no such directory is found, that directory is created; otherwise, the control advances to the next step.

[b2] It is checked if data has already been recorded in the directory. If the data has already been recorded, VMGI as its management information is loaded onto the work RAM, and it is checked based on the recorded broadcasting scheme (APP_NAME) if this apparatus supports that broadcasting scheme. If this apparatus does not support the recorded broadcasting scheme, a message that advises accordingly is displayed, thus ending this process.

[b3] If no data is recorded, VMGI is created in the work RAM.

[b4] The broadcasting scheme of data to be recorded is checked (step ST1116). (In case of an internal tuner, a default method in the apparatus is set; in case of an external digital input, the value of Registration_Descriptor sent from the digital input is checked to determine the broadcasting scheme of data to be recorded).

[b5] The broadcasting scheme of data to be recorded is compared with that in the disc (step ST1122). If the two methods are different, a message that advises accordingly is displayed, thus ending this process.

[b6] It is checked if this apparatus supports the broadcasting scheme of data to be recorded, and if this apparatus does not support the broadcasting scheme, a message that advises accordingly is displayed, thus ending this process.

[b7] The broadcasting scheme is set in APP_NAME in VMGI prepared in the work RAM (step ST1126). If EPs are to be automatically set, the control prompts the user to set their time intervals, and then advances to the next process.

If a plurality of different recording methods (broadcasting schemes) are allowed to be present together.in the disc, APP_NAME must be described in each ESOBI_GI; if such state is inhibited, APP_NAME may be described in ESFI_GI or VMG_MAT.

[b8] Finally, the control prompts the user to input a setting time (e.g., a 10-min interval) upon automatically setting entry points (step ST1134), thus ending this video recording pre-process.

FIG. 37 is a flowchart (STI setting process flow) for explaining the contents of the stream information (VSTI and ASTI) generation process (ST120) shown in FIG. 35.

[c1] VSTI and ASTI recorded on the disc are loaded onto the work RAM.

[c2] The PMT is examined to check the number of set streams.

[c3] [c4] and [c5] are repeated in correspondence with the number of set streams.

[c4] A stream type is checked based on the PMT to determine if the stream of interest is a video/audio stream or another type of stream to branch the control to the next stream check processes.

[c5] The stream type is categorized to MPEG1 video, MPEG2 video, MPEG1 audio, MPEG2 audio, and the like, and internal data are checked depending on the determined type to read out respective kinds of attribute information.

[c6] The readout attribute information is compared with VSTI and ASTI. If an identical attribute information item is found, that number is set in the corresponding ESOB_ESI, and the control advances to the next stream check process.

[c7] New VSTI or ASTI is set based on the attribute information, that number is set in the corresponding ESOB_ESI, and the control advances to the next stream check process.

FIG. 38 is a flowchart (buffer fetch process flow) for explaining an example of the buffer fetch process (ST130) shown in FIG. 35. As the operations to be executed upon recording, when TS packets are received, a group is formed every 85 packets, and a packet group header is generated.

[d1] A TS packet is received.

[d2] If the fetched TS packet includes a PCR, the STC is corrected.

[d3] If the packet of interest corresponds to the head of a packet group, Sync_Pattern: 00ffffa5a5 is set, its arrival time is fetched from the STC and is set as ATS; otherwise, the difference between the arrival time of the immediately preceding TS packet and that of the TS packet of interest is allocated as IAPAT before that TS packet.

[d4] A DCI & CCI setting process (step ST1311; see FIG. 39 for details) is executed.

[d5] It is checked if formation of a packet group is complete (i.e., whether or not 85 TS packets are grouped). If formation of a packet group is not complete yet, the control returns to [d1]; otherwise, group data is temporarily saved in the buffer RAM.

FIG. 39 is a flowchart for explaining an example of a DCI & CCI setting process (ST1311) shown in FIG. 38.

[e1] It is checked if the latest PMT and EIT include copy information. If the copy information is found, copy information is formed for each stream (a maximum of 32 ESs) based on that information and is set. After that, the control advances to [e3].

[e2] If the received TS packet does not include any copy information, the same information as that in the previous pack is formed as copy information.

[e3] It is checked if the latest PMT and EIT include contents use descriptors. If contents use descriptors are found, ICT and EPN are set for each ES (a maximum of 32 ESs) based on such information, and the control advances to [e5].

[e4] If the received TS packet does not include any copy information, the same information as that in the previous pack is formed as ICT and EPN.

[e5] It is checked if resolution information is available. If no resolution information is available, the same information as that in the previous pack is formed; otherwise, resolution information is formed for each ES (a maximum of 32 ESs) based on that information.

[e6] It is checked if a change in CCI/DCI takes place in 85 packets in a single ES. If such change takes place, that packet group is delimited at a TS packet before the change, and the remaining data of the packet group are padded with dummy data to register packets after the change as a new packet group.

If the head of a picture is included in a group, the PTS is saved with reference to the contents of the TS packet. If the TS packet contains no video data but audio data alone, CCI is formed in accordance with audio copy information.

Upon playback, the demultiplexer interprets packet data read out from the disc and sends a pack that includes TS packets to the TS packet transfer unit. After that, the readout packet data are sent to respective decoders and undergo corresponding playback processes. Upon transferring TS packets to the STB (or to an external apparatus such as a digital TV or the like), the TS packet transfer unit transfers data of only TS packets at the same time intervals as they arrived. Then, the STB unit decodes an incoming stream to generate an AV signal, and displays that AV signal via the video encoder unit in the streamer.

FIG. 40 is a view for explaining an example of the data structure of a pack group in the process (pack group align process) in step ST13123 in FIG. 39. When a change in CCI/DCI may take place in a single packet group of a single ES, that packet group is temporarily delimited, and the remaining data of the packet group are padded with dummy data to set the next packet group, as shown in FIG. 40. In other words, an align process is executed to prevent CCI/DCI from changing in a packet group.

FIG. 41 is a flowchart (stream file information generation process flow with an ESOB structure setting process and edit date setting process) for explaining an example of a stream file information (SFI or ESFI) generation process in the video recording end process (ST150) shown in FIG. 34.

[f1] In order to increase the number of pieces of SOBI by one, its search pointer (SRP) is added, and a recording area for that information is assured.

[f2] The recording time is set in SOB_REC_TM. The internal clock of the apparatus (recorder) is set/corrected based on a TDT (Time Data Table), and an accurate time is always obtained.

[f3] A start PTM and end PTM are set.
[f4] PCR_POS_SHIFT is set in accordance with the required recording rate.
[f5] If the stream type is a TS stream (ARIB or DVB), "188" is set in packet size AP_PKT_SZ, and "8" is set in packet group size PKT_GRP_SZ; otherwise, values corresponding to the broadcasting scheme are set.
[f6] The broadcasting scheme is set in APP_NAME.
[f7] TS_ID, NETWORK_PID, and PMT_ID (the PID of the PMT used in this ESOB) are set based on the PAT.
[f8] SERVICE_ID (Program_Number in the PMT) and PCR_PID are set based on the PMT. Furthermore, as for FORMAT_ID and VERSION, default values in the apparatus are set in case of the built-in tuner, or the values of Registration_Descriptor sent from the digital input are set in case of an external digital input.
[f9] Moreover, the number of recorded ESs is set. (Although the PMT is set with information: number of all ESs to be broadcasted, all ESs are not always recorded upon video recording, and the number of recorded ESs is set.)
[f10] Since a component group descriptor stores information indicating ESs to be played back as a set, these pieces of information of ESs that form the set are grouped. Furthermore, component tag information of that group is converted into a PID using a stream descriptor in the PMT, and that information is saved as group information. (This EIT information is likely to change depending on the broadcasting scheme.)
[f11] A recording start LB address is set in ADR_OFS, and MAPI is generated for each stream based on each segmentation information.
[f12] A default PID/component tag is set. Note that the default video PID corresponds to that with a component tag value = 00 or that of a stream corresponding to a component tag described in a main component group.
[f13] An ESOB structure setting process (step ST1522; see FIG. 42 for details) is executed. After that, an edit date is set (step ST1524).

FIG. 42 is a flowchart for explaining an example of the ESOB structure setting process (ST1522) shown in FIG. 41.

[g1] The recorded time is checked. If the recorded time is equal to or shorter than two hours, the control advances to [g2]; if it falls within the range from two to four hours, the control advances to [g3]; or if it is equal to or longer than four hours, the control advances to [g4].
[g2] "0" is set in ESOB_PB_IVL 13243118 in FIG. 9, and ESOBU_ENT data are generated based on segmentation information (information of 0.4s to 1s) so that each ESOBU falls within the range of 0.4s to 1s. The control then advances to [g5].
[g3] "1" is set in ESOB_PB_IVL, and ESOBU_ENT data are generated based on segmentation information (information of 0.4s to 1s) so that each ESOBU falls within the range of 1s to 2s. The control then advances to [g5].
[g4] "2" is set in ESOB_PB_IVL, and ESOBU_ENT data are generated based on segmentation information (information of 0.4s to 1s) so that each ESOBU falls within the range of 2s to 3s.
[g5] It is checked if data is cognizable. If data is cognizable, "0" is set in ESOB_COG/NONCOG (step ST15227). Then, it is set to execute the ESOB management process of this application, thus ending this process.
[g6] If data is non-cognizable (encryption cannot be decrypted), "1" is set in ESOB_COG/NONCOG to set to execute a private ESOB management process of each manufacturer (step ST15228), thus ending this process.

FIG. 43 is a flowchart (program setting process flow) for explaining an example of a program chain (PGC) generation process (including a program setting process) in the video recording end process (ST150) shown in FIG. 34.

[h1] It is checked if a disc of interest undergoes the first video recording. If the disc of interest undergoes the first video recording, ORG_PGC is generated; otherwise, a setup is made to add PG information after the ORG_PGC.
[h2] Erase permission: 0 is set in PG_TY (program type 13321 in FIG. 15), and the number of cells is set in the field of Cell_Ns (the number of cells 13322 in a program in FIG. 15).
[h3] In case of ARIB, if language_code in a short event descriptor in EIT is "jpn", "0x12" is set in CHR (character code field) in VMG_MAT, EVENT_NAME is set in the second field of PRM_TXTI, and representative picture information is set in REP_PICTI (ESOB_REP_PID in FIG. 9, representative PIC information 13325 in FIG. 15, EP_REP_PIC in FIG. 18, or the like).
[h4] The manufacturer ID of this apparatus is set in LAST_MNF_ID (e.g., editor ID 13326 in FIG. 15). As for this value, when PGI, CI, or VOB has been changed, the manufacturer ID of the apparatus used to change such information is set to identify the manufacturer of the last apparatus used to execute edit and record processes. In this way, when the apparatus of another manufacturer is used to change the recorded contents of a disc, a reaction can be easily taken.
[h5] The absolute number of a program is set in PG_INDEX to allow another application software or the like to refer to each program. Furthermore, this program update date information is recorded. At this time, if MNFI and IT_TXT (with the same manufacturer code) supported by this apparatus are found, the update date information of corresponding data is also set.

[h6] Information unique to each manufacturer is set in MNFI in FIG. 23.

[h7] Information indicating a streamer is set in the cell type in FIG. 15.

[h8] The reference ESOB number is set, the representative (video) PID or Component_Group_Id is set as the ID to be played back, and the number of pieces of EPI, playback start and end PTM data, and EP are set.

FIG. 44 is a flowchart (item text setting process flow) for explaining an example of an item text (IT_TXT) generation process in the program update date setting process (ST1704) shown in FIG. 43. IT_TXT is text information which can be freely described by the apparatus and can store information from the user and text information in broadcast. In the embodiment of the present invention, if the EIT includes an extended event descriptor, that text information is stored in IT_TXT. Hence, the IT_TXT setting process is executed as follows.

[i1] It is checked if IT_TXT, information is present in the disc. If no IT_TXT information is present, TXTDTI is set; otherwise, a setup is made to add IT_TXT information.

[i2] A PG number of ORG_PGC to which text of interest belongs is set, it is confirmed if a language code is "JPN" (if it is not "JPN", this process ends), and this information is saved as TEXT_DATA. This information stores a detailed description of a program.

[i3] Program update date information in PGI is updated, and those in IT_TXT and MNFI are also updated at the same time.

FIG. 45 is a flowchart (EP appending process flow) for explaining an example of the entry point appending process (ST147) shown in FIG. 34.

[j1] It is checked if an EP automatic setting time has been reached. If the time has not been reached yet, this process ends.

[j2] The STC is checked to check video recording time PTM, and an additional setup is made in EPI according to that value. Note that the PTM is set in EP_PTM and REP_PIC, and serial absolute numbers of all EPs in the disc are set in EP_INDEX_NUM.

[j3] Edit date information is set in PGI and EPI_LAST_TM.

[j4] It is checked if MNFI is linked with a PG to which the EP of interest belongs. If the linked MNFI is found, the PG update date in that MNFI is set.

[j5] It is checked if IT_TXT is linked with the PG to which the EP of interest belongs. If the linked IT_TXT is found, the PG update date in IT_TXTI is set.

FIG. 46 is a flowchart (reduced-scale picture setting process flow) for explaining an example of the process for setting thumbnail (reduced-scale picture or representative picture) data in correspondence with an entry point after the entry point is appended by the process shown in, e.g., FIG. 45 (when the entry point has already been appended).

[k1] The control prompts the user to select an entry point (EP) to which a reduced-scale picture is to be added.

[k2] The picture of the EP of user's choice is displayed. At this time, the picture is designated by PTM. If the designated frame is not I-picture, decoding starts from the immediately preceding I-picture (without any display), and a target frame is displayed when it is reached.

[k3] Frames are displayed step by step from the target frame, and the control prompts the user to select a frame to be used as a reduced-scale picture.

[k4] The PTM of the selected frame (or the number of frames from the first frame) is set in EP_REP_PIC.

[k5] The displayed target frame is reduced in size by the video decode unit, and that data is converted into JPEG data. The JPEG data is read out, and is additionally saved in a Thumbnail file. At this time, an EP index number is recorded as Thumbnail data.

[k6] The control asks for the user if another EP is to be set. If another EP is to be set, the control returns to [k1] to confirm the next EP.

[k7] The PG update date in PGI is updated.

[k8] It is checked if MNFI is linked with a PG to which the EP of interest belongs. If the linked MNFI is found, the PG update date in that MNFI is set.

[k9] It is checked if IT_TXT is linked with the PG to which the EP of interest belongs. If the linked IT_TXT is found, the PG update date in IT_TXTI is set.

FIGS. 47 and 48 are flowcharts (reduced-scale picture display process flow) for explaining an example of the process for displaying thumbnail (reduced-scale picture or representative picture) data corresponding to the entry point. FIG. 49 is a view for explaining an example of thumbnail (reduced-scale picture or representative picture) data displayed on a screen in the reduced-scale picture display process in FIG. 47.

[m1] A PG to be played back is determined, and EPI corresponding to that PG is read out. At this time, if no corresponding EPI is available, this process ends, and a title alone is displayed.

[m2] The display position is set at the left end (e.g., the upper left field in FIG. 49).

[m3] First EPI data is loaded, and a thumbnail file is opened.

[m4] Whether or not a reduced-scale picture is registered in the EP is checked by examining if the thumbnail file includes the EP index number. If the reduced-scale picture is registered, the control advances to [m7].

[m5] A frame at the location of the PTM of REP_PIC in the EPI is played back, its picture is reduced to a prescribed size, and is displayed on the target field (the upper left field in FIG. 49 in the above example).

[m6] The reduced-scale picture is compressed by JPEG, its data is read out, and is additionally recorded in the thumbnail file. At this time, the EP index number is added and recorded, and the control advances to [m8].

[m7] The reduced-scale picture data is loaded, and is displayed at a target coordinate position.

[m8] It is checked if other reduced-scale pictures are available. If such pictures are available, the next EP information is loaded; otherwise, the control advances to [m12].

[m9] If the next picture is the fourth picture, the display position is set at the lower left end (linefeed on the display of FIG. 49), and the control returns to [m4].

[m10] If the sixth picture has not been displayed yet, the display position is shifted rightward by one field, and the control returns to [m4].

[m11] A next page symbol is displayed.

[m12] The control waits until the user selects a picture. If the user selects the next page symbol ("next page" on the display of FIG. 49), the next EP data is loaded, and the control returns to [m3].

[m13] A setup is made to start playback from the EP of the selected picture, thus ending this process.

FIGS. 50 and 51 are flowcharts for explaining an example of the playback operation of the apparatus shown in FIG. 30.

[n1] A disc check process is made to check if the disc is a rewritable disc (R, RW, RAM). If the disc is not a rewritable disc, a message that advises accordingly is returned.

[n2] The file system of the disc is read out to check if data has already been recorded. If no data is recorded, a message "no data is recorded" is displayed, thus ending the process.

[n3] The VMG file is loaded to determine programs and cells to be played back (by prompting the user to select them). If a playback process in the recorded order is selected, playback is made according to ORG_PGCI. If a playback process for respective programs is to be made (in the sequence of user's choice), playback is made according to UD_PGCI (or playlist) with a number corresponding to the program to be played back.

[n4] The value of APP_NAME is read out to check if the apparatus supports the broadcasting scheme. If the apparatus does not support the broadcasting scheme, a message that advises accordingly is displayed, thus ending the process. (Or the control advances to the next cell process.)

[n5] ESOB/VOB to be played back is determined based on cell information CI to be played back, and a playback start file pointer (logical address) is determined based on the playback start PTM. Furthermore, respective decoder units are set based on STI values to prepare for playback. Also, APS setups are made in the video decoder based on CCI in the packet group header at the head position. That is, APS = ON/OFF, APS type, and the like are set, and CGMSA setups are made in the video recorder based on digital copy control.

Furthermore, if a digital output (IEEE1394, Internet, or the like) is available, "0: scramble ON or output inhibition or 1: direct output" is set in the output IC based on the EPN value. If ICT = 0, the image resolution is constrained, i.e., high-definition HD is converted into standard-definition SD; if ICT = 1, "direct output" is set in the output IC. At this time, if the playback start frame is not I-picture data, decoding starts from the immediately preceding I-picture, and display starts when the target frame is decoded, thus starting normal playback.

[n6] A process upon playback start is executed.

[n7] Initial setups of respective decoders are made.

[n8] A cell playback process (to be described later) is executed, and it is then checked if playback is to end. If playback is to end, an error check process is executed. If any error is found, a message that advises accordingly is displayed; otherwise, a playback end process is executed, thus ending this operation.

[n9] The next cell is determined based on PGCI, and it is checked if setups of decoders are changed. If the setups are changed, change attributes are set in the decoders so as to change decoder setups in response to the next sequence end code.

[n10] It is checked if playback is to end. If playback is not to end, the control returns to [n6].

FIGS. 52 and 53 are flowcharts for explaining an example of the process (ST220) upon cell playback in FIG. 51.

[p1] Start file pointer FP (logical block number) and end address FP of a cell are determined on the basis of the contents of map information (e.g., ES_MAPI 132536 in FIG. 8). Furthermore, start ESOBU_ENT and end ESOBU_ENT are determined based on the start and end times in cell information CI in FIG. 15. The data lengths of entries until target ESOBU_ENT are accumulated in ADR_OFS, thus obtaining a start address (logical block LB = file pointer FP) and end address. The remaining cell length is calculated by subtracting the start address from the end address, and the playback start time is set in the STC.

[p2] If the reference ID is 0xffff, there are two different multi-angle display methods, i.e., a sub-window multi-view display method and a method of displaying a group which is set in advance. In the former method, all Video PIDs and main audio PID are set in decoders, which are set in the sub-window multi-view display mode. In the latter case, the PID of the group set in cell information CI is set in the decoders. If no setup is included in CI, the default PID is in ESOBI is set.

[p3] If the reference ID = PID, a group to which an ES to be referred to belongs is specified based on the component group descriptor to determine the PIDs to be played back, and these PIDs are set in the decoders. If the reference ID = group ID, the PID in the group is specified based on the component group descriptor to determine the PIDs to be played back, and these PIDs are set in the decoders.

[p4] A setup is made to execute the decode process in the decoder unit.

[p5] A read process during playback is executed to determine the read address and read size based on the start file pointer.

[p6] The read unit size to be read out is compared with the remaining cell length. If the remaining cell length is larger than the read unit size, a value obtained by subtracting the read unit size to be read out from the remaining cell length is set as the remaining cell length. If the remaining cell length is smaller than the read unit size, the read unit size is set to be the remaining cell length, and the remaining cell length is set to be zero.

[p7] The read length is set to be a read unit length, and the read address, read length, and read command are set in the disc drive unit.

[p8] The control waits until data for one ESOBU are stored. If data for one ESOBU are stored, the control advances to [p9].

[p9] Data in the buffer RAM is read out, a CCI check process is executed, and data are transferred to the decoders.

[p10] In the decoder unit, readout packet group data is received by the demultiplexer and is demultiplexed into packets. In accordance with the stream ID and sub-stream ID, video packet data (MPEG video data) are transferred to the video decode unit, audio packet data are transferred to the audio decode unit, and sub-picture packet data are transferred to the SP decode unit. The TS transfer unit converts readout packet group data into an elemental stream, and sends it to respective decoders (61, 64) via an internal bus, thus executing decode processes.

[p11] During playback, the contents of the STC are displayed as a playback time. If the STB unit can display a playback time based on the PTS in video data, that time can be used.

[p12] It is checked if transfer is complete. If transfer is not complete yet, the control returns to [p5].

[p13] The sum of the read FP and the read length set in [p5] is substituted in the read FP.

[p14] It is checked if transfer is complete. If transfer is complete, the remaining cell length is checked. If the remaining cell length is not "00", the control returns to [p2]; if it is "00", this process ends.

[p15] If transfer is not complete yet, a key input is checked. If special playback is to be made, its direction is set. Then, the read FP is calculated using map information MAPI (ES_MAPI in FIG. 8) to execute a read process upon special playback, thus ending this process. Otherwise, the control returns to [p8].

The target FP of special playback is calculated from MAPI to skip a predetermined period of time. Alternatively, a method of calculating the FP by skipping the predetermined number of ESOBUs in place of the predetermined period of time is available. At this time, when the end of the cell is reached, next cell information is read out from PGCI (FIG. 15), and the ESOB number and MAPI used by that cell are selected, thus similarly calculating the read FP. If no next cell is present, the process ends at that time.

FIG. 54 is a flowchart for explaining an example of the buffer decoder transfer process (ST2217) in FIG. 53.

[q1] The number of packet groups in the buffer RAM is checked. If no packet group is found, this process ends. If one or more packet groups are stored, a setup is made to process the first packet group.

[q2] A target packet group is read out from the buffer RAM. The head of the packet group is detected based on the packet group length and Sync_Pattern (151 in FIG. 24).

[q3] CCI in the packet group is read out, and it is checked if an ES corresponding to the ES to be played back includes a CCI setup and that setup has changed from the previous one. If the setup remains the same, the control advances to [q8].

[q4] Analog protection (e.g., Macrovision system) is set in the video decoder in accordance with the APS value. If this analog protection is ON, a protection type is set.

[q5] Copy free/copy never is set in CGMSA based on digital copy control. In addition, copy once is available. However, in case of digital broadcast, since copy once was changed to copy never upon video recording, no status "copy once" appears.

[q6] EPN is checked. If EPN indicates protection, a setup is made to output scrambled data onto the digital output (IEEE1394 or Internet) or to inhibit output. If EPN does not indicate protection, data is directly output.

[q7] ICT is checked. If ICT indicates image output constraint, the resolution of an analog HD output (D terminal or color difference output) is down-converted from HD to SD upon output. If ICT does not indicate constraint, data is output intact.

[q8] DCI in a packet group is read out, and it is checked if an ES corresponding to the ES to be played back includes a DCI setup and that setup has changed from the previous one. If the setup remains the same, the control advances to [q10].

[q9] Aspect information is set in the video decoder on the basis of aspect information.

[q10] A setup is made in the decoder unit to transfer data for one packet group.

[q11] The control waits for the end of transfer. It is then checked if pack groups to be processed still remain on the buffer RAM. If no pack group remains, this process ends.

[q12] A setup is made to process the next packet group, and the control returns to [q2].

With the above process, flexible control operations suited to digital broadcast can be implemented.

FIG. 55 is a view for explaining an example of the data structure of the program map table (PMT) that can be used in the apparatus in FIG. 30. With this PMT, various streams can be identified by 8-bit stream type 3421. For example, a stream type = "0x01" indicates an MPEG1 video stream; a stream type = "0x02" indicates an MPEG2 video stream (in case of Hi-Vision); a stream type = "0x03" indicates an MPEG1 audio stream; and a stream type = "0x04" indicates an MPEG2 audio stream (in case of AAC multi-channel audio).

FIG. 56 is a view for explaining an example of the contents of a digital copy control descriptor that can be used in the apparatus in FIG. 30, and an example of a copy control process using this descriptor. In this descriptor (ST3000), a "descriptor tag" field is set to be, e.g., "0xC1", and a "descriptor length" field indicates the descriptor length. A "digital recording control" field describes "copy generation control data". A "maximum bit rate flag" field describes "whether or not the maximum transfer rate of the service of interest is to be described". If the maximum transfer rate is not described, the flag is set to be, e.g., "0"; otherwise, the flag is set to be, e.g., "1". If "0" is described in a "component control flag" field, for example, the overall program is specified (in case of PMT). If "1" is described in this field, another state is described. A "copy control type" field describes "copy generation control data" (see FIG. 26).

After the respective fields of the descriptor are filled (step ST3000), a copy control type is checked (step ST3002). If the copy control type is 01 or 11, analog output control data is determined in accordance with APS control data (step ST3004). If the copy control type is other than 01 or 11, copy control is reserved (step ST3006).

Subsequently, a maximum bit rate flag is checked (step ST3008). If this flag is 1, the maximum transfer rate is determined according to the maximum bit rate (step ST3010). Next, a component control flag is checked (step ST3012). If this flag is 1, component control length n is determined in accordance with the component control length (step ST3014).

Next, the component tag, digital recording control, maximum bit rate flag, and copy control flag fields are described (step ST3020). Steps ST3022 to ST3030 similar to steps ST3002 to ST3010 are successively executed in correspondence with value n determined in step ST3014. If it is determined in step ST3012 that the component control flag is not 1, the processes in steps S3014 to ST3030 are skipped, thus ending the process of FIG. 56.

FIG. 57 is a view for explaining an application example of digital copy control to video data. Copy control of video data is roughly categorized into three types, i.e., "unlimited copy permission (copy free)", "copy inhibition (copy never or copy no more)", and "copy permission of only one generation (copy once)".

In case of "unlimited copy permission", analog copy control is set to be "unlimited copy permission", digital recording control is set to be, e.g., "01", control type is set to be, e.g., "00", and APS control data is set to be, e.g., "Don't care (ignore)

In case of "copy inhibition", (1) analog copy control is set to be "copy inhibition (digital copy is inhibited, but analog copy is not inhibited since no copy protection pulses of the Macrovision® system are inserted)", digital recording control is set to be, e.g., "01", control type is set to be, e.g., "11", and APS control data is set to be, e.g., "00".

In case of "copy inhibition", (2) analog copy control is set to be "copy inhibition (both analog copy and digital copy are inhibited)", digital recording control is set to be, e.g., "01", control type is set to be, e.g., "11", and APS control data is set to be, e.g., "other than 00".

In case of "copy permission of only one generation", (3) analog copy control is set to be "copy permission of only one generation (analog copy is permitted since no copy protection pulses are inserted)", digital recording control is set to be, e.g., "01", control type is set to be, e.g., "10", and APS control data is set to be, e.g., "00".

In case of "copy permission of only one generation", (4) analog copy control is set to be "copy permission of only one generation (both analog copy and digital copy of the next and subsequent generation are inhibited)", digital recording control is set to be, e.g., "01", control type is set to be, e.g., "10", and APS control data is set to be, e.g., "00".

FIG. 58 is a view for explaining an application example of digital copy control to audio data. Copy control of audio data is also roughly categorized into three types, i.e., "unlimited copy permission (copy free)", "copy inhibition (copy never or copy no more)", and "copy permission of only one generation (copy once)".

In case of "unlimited copy permission", digital recording control is set to be, e.g., "01/11", and control type is set to be, e.g., "00". In case of "copy permission of only one generation", digital recording control is set to be, e.g., "01/11", and control type is set to be, e.g., "10". In case of "copy inhibition", digital recording control is set to be, e.g., "01/11", and control type is set to be, e.g., "11".

FIG. 59 is a view for explaining the contents of the contents use descriptor that can be used in the apparatus in FIG. 30. In this descriptor, a "descriptor tag" field is set to be, e.g., "0xDE", and a "descriptor length" field indicates the descriptor length. An "image constraint token (ICT in FIG. 26)" field describes a "resolution constraint bit". If this bit is "0", a video output is constrained (e.g., high-definition HD video is constrained to standard-resolution SD when it is output); if this bit is "1", a video output is made without any constraint. A "retention mode" field stores a "temporary storage control bit". If this bit is "0", temporary storage of a video is permitted; if this bit is "1", temporary storage is inhibited. A "retention state" field" describes a "temporary storage permission time". If the contents of this field are "7", temporary storage for 1.5 hours is permitted; if they are "6", temporary storage for 3 hours; if they are "5", temporary storage for 6 hours; if they are "4", temporary storage for 12 hours; if they are "3", temporary storage for one day; if they are "2", temporary storage for two days; if they are "1", temporary storage for one week; and if they are "0", unlimited temporary storage. An "encryption mode" field describes an "output protection bit". If this bit is "0", a high-speed digital I/F output is protected; if this bit is "1", no protection (i.e., digital output free).

FIG. 60 is a view for explaining the data structure of the event information table (EIT) that can be used in the apparatus in FIG. 30. This EIT has descriptor recording field 3426a, which can store a descriptor such as "component group descriptor" and the like.

FIG. 61 is a view for explaining an example of the contents of the extended event descriptor that can be used in the apparatus in FIG. 30. In this descriptor, a "descriptor tag" field is set to be, e.g., "0x4E", and a "descriptor length" field indicates the descriptor length. A "descriptor number" field describes a descriptor number (0 to n). A "last descriptor number" field describes a last descriptor number (0 to n). A "0x4dISO_639_LANGUAGE_CODE" field describes, for example, the broadcasting scheme "ARIB: jpn" adopted in Japan. A "length of items" field describes, e.g., the "number of items (the number of bytes of each subsequent item).

If the number of items is one or more, the following contents are repeated in correspondence with the number of items. That is, item name fields (8-bit character code) are repeated for an item name length after the item name length (the number of bytes of an item name) of an "item description length" field, item description fields (8-bit character code) are repeated for the item length name after an item name length (the byte length of an item description) of an "item length" field, and extended description fields (8-bit character code) are repeated for the item name length after an extended description length (the byte length of an extended description) of a "Text length" field. Then, sets of these "item description length", "item length", and "Text length" fields are repeated in correspondence with the number of items.

FIG. 62 is a view for explaining how to capture a target packet based on the playback time (PTM) if the PTM data is given. A method of acquiring a target packet corresponding to the given playback time PTM on the basis of the PTM is as follows.

(1) The ESOBU number to which the given PTM belongs is calculated from that PTM using time map TMAP as management information (by summing up ESOBU playback times).

(2) The packet group number to which the start packet of that ESOBU is calculated from the calculated ESOBU number using the TMAP (by summing up ESOBU sizes).

(3) The start packet of that ESOBU is specified based on the ESOBU start packet number in the time map.

FIG. 63 is a view for explaining another example (modification of FIG. 4) of the configuration of one management information (RTR_VMG) recorded on AV data management information recording area 130. This configuration has no extended entry point information (EXEPIT) 1361 in FIG. 4, and extended file HR_EXEP.DAT in FIG. 3 has extended entry point information instead. In this case, cell entry point information C_EPI in PGCI adopts the data structure as in example 1 of FIG. 18.

FIG. 64 is a view for explaining another example (modification of FIG. 15) of the configuration of the contents of elements of program chain information (ORG_PGC information or UD_PGC information). This configuration adopts entry point information (EPI) 13348X in place of entry point information table (C_EPIT) 13348 in FIG. 15. When C_EPIT in FIG. 15 includes only one C_EPI, cell information 1334X in FIG. 64 becomes substantially the same as cell information 1334 in FIG. 15.

FIG. 65 is a view for explaining another example (modification of FIG. 23) of the configuration of the contents of manufacturer's information (MNFI) included in the management information recorded on management information recording area 130 in FIG. 4 or 14. In FIG. 65, MNFI data 13633X included in manufacturer's information (MNFI) 1363X includes the number of reduced-scale pictures (the number of thumbnails) 136631X, corresponding cell number 136632X, corresponding entry point number 136633X, data length (size) 136634X of thumbnail data when that data is compressed by JPEG, and JPEG data body 136635X of that thumbnail.

FIG. 66 is a flowchart (video recording flow without any entry point appending process) for explaining another example (modification of FIG. 35) of the video recording operation of the apparatus shown in FIG. 30.

[r7] VSTI and ASTI are generated based on the PMT (step ST120).

[r8] If data stored in the buffer reaches a predetermined size (for 1 CDA), a ECC process is done via the D-PRO unit, thus recording the data on the disc (step ST130).

[r9] During video recording, segmentation information is saved in the work RAM of the MPU unit periodically (before the buffer RAM of the formatter unit becomes full of data). The segmentation information to be saved is that of ESOBU data, i.e., the ESOBU start address, ESOBU pack length, I-picture end address, the ESOBU arrival time (ATS), or the like may be saved.

[r10] The remaining space is checked. If the remaining space becomes equal to or smaller than a predetermined value, a small remaining space process is executed.

[r11] It is checked if video recording is to end (if the user has pressed a video recording end key or if no recordable space remains). If video recording is to end, the remaining segmentation information is fetched from the formatter unit, and is added to the work RAM. These data are recorded in management data (VMGI), and the remaining information is recorded in the file system.

[r12] If video recording is not to end, the control returns to [r7] to continue the data fetch and write processes.

FIG. 67 is a flowchart (video recording preprocess flow) for explaining another example (modification of FIG. 36) of the process before the beginning of video recording on the information storage medium (optical disc).

[s1] A DVD_HDVR directory is searched for (a directory that stores new VR). If no such directory is found, that directory is created; otherwise, the control advances to the next step.

[s2] It is checked if data has already been recorded in the directory. If the data has already been recorded, VMGI as its management information is loaded onto the work RAM, and it is checked based on the recorded broadcasting scheme (APP_NAME) if this apparatus supports that broadcasting scheme. If this apparatus does not support the recorded broadcasting scheme, a message that advises accordingly is displayed, thus ending this process.

[s3] If no data is recorded, VMGI is created in the work RAM.

[s4] The broadcasting scheme of data to be recorded is checked. (In case of an internal tuner, a default method in the apparatus is set; in case of an external digital input, the value of Registration_Descriptor sent from the digital input is checked to determine the broadcasting scheme of data to be recorded).

[s5] The broadcasting scheme of data to be recorded is compared with that in the disc. If the two methods are different, a message that advises accordingly is displayed, thus ending this process.

[s6] It is checked if this apparatus supports the broadcasting scheme of data to be recorded, and if this apparatus does not support the broadcasting scheme, a message that advises accordingly is displayed, thus ending this process.

[s7] The broadcasting scheme is set in APP_NAME in VMGI prepared in the work RAM, and the control advances to the next process.

FIG. 68 is a flowchart (program setting process flow) for explaining another example (modification of FIG. 43) of the program chain (PGC) generation process.

[t1] It is checked if a disc of interest undergoes the first video recording. If the disc of interest undergoes the first video recording, ORG_PGC is generated; otherwise, a setup is made to add PG information after the ORG_PGC.

[t2] Erase permission: 0 is set in PG_TY, and the number of cells is set in Cell_Ns.

[t3] In case of ARIB, if language_code in a short event descriptor in EIT is "jpn", "0x12" is set in CHR in VMG_MAT, EVENT_NAME is set in the second field of PRM_TXTI, and representative picture information is set in REP_PICTI.

[t4] The manufacturer ID of this apparatus is set in LAST_MNF_ID. As for this value, when PGI, CI, or VOB has been changed, the manufacturer ID of the apparatus used to change such information is set to identify the manufacturer of the last apparatus used to execute edit and record processes. In this way, when the apparatus of another manufacturer is used to change the recorded contents of a disc, a reaction can be easily taken.

[t5] The absolute number of PG is set in PG_INDEX to allow another application software or the like to refer to each PG. Furthermore, this PG update date information is recorded. At this time, if MNFI and IT_TXT (with the same manufacturer code) supported by this apparatus are found, the update date information of corresponding data is also set.

[t6] Information unique to each manufacturer is set in MNFI.

[t7] Information indicating a streamer is set in the cell type.

[t8] The reference ESOB number is set, the representative (video) PID or Component_Group_Id is set as the ID to be played back, and the number of pieces of EPI, playback start and end PTM data, and EP are set.

FIG. 69 is a flowchart (item text setting process flow) for explaining another example (modification of FIG. 44) of the item text (IT_TXT) generation process in the program update date setting process (ST1700X) shown in FIG. 68.

IT_TXT is text information which can be freely stored by an apparatus, and information from the user and text information in broadcast may be stored. A case will be examined below wherein if EIT includes an extended event descriptor, that text information may be stored in IT_TXT. The IT_TXT setting process is executed as follows.

[u1] It is checked if IT_TXT information is present in the disc. If no IT_TXT information is present, TXTDTI is set; otherwise, a setup is made to add IT_TXT information.

[u2] A PG number of ORG_PGC to which text of interest belongs is set, it is confirmed if a language code is "JPN" (if it is not "JPN", this process ends), and this information is saved as TEXT_DATA. This information stores a detailed description of a program.

FIG. 70 is a flowchart (reduced-scale picture setting process flow) for explaining another example (modification of FIG. 46) of the process for setting thumbnail (reduced-scale picture or representative picture) data in manufacturer's information MNFI in correspondence with an entry point when the entry point has already been appended. An embodiment adopted when reduced-scale picture data corresponding to EPs are stored in MNFI used for a menu and the like will be described below.

[v1] It is checked if MNFI information is present in the disc. If no MNFI information is present, MNFI is set; otherwise, a setup is made to add MNFI information.

[v2] The manufacturer ID of this apparatus is set in the manufacturer ID of MNFI. This ID is a default value recorded in ROM 80B in MPU unit 80 in FIG. 30.

[v3] The video recording time of MNFI is set.

[v4] Cells in a program are searched to check all entry points EP, thereby extracting the number of EPs and playback locations (playback positions of actual objects) where the EPs are set.

[v5] Information of the first EP is extracted.

[v6] A frame designated by that EP is played back, and is stored in the frame memory. At this time, if the frame set with the EP is not I-picture (B- or P-picture), playback starts from the immediately preceding I-picture, data up to a target frame are decoded to obtain frame data.

[v7] The decode unit converts data in the frame memory into reduced-scale data and compresses it by JPEG.

[v8] The decode unit reads out the reduced-scale data, and saves it in MNFI_DATA (13633 in FIG. 23 or 13633X in FIG. 65) together with the corresponding cell number and entry point number.

[v9] It is checked if EPs to be converted into reduced-scale pictures still remain. If such EPs still remain, the next EP information is extracted, and the control returns to [v6].

FIG. 71 is a flowchart (reduced-scale picture display process flow) for explaining another example (modification of FIG. 47) of the process for displaying thumbnail (reduced-scale picture or representative picture) data set in manufacturer's information MNFI. The process upon displaying reduced-scale pictures using a menu key or the like is done as follows.

[w1] A PG to be played back is determined, and MNFI corresponding to that PG is read out. At this time, if no corresponding MNFI is available, this process ends, and a title alone is displayed.

[w2] First EP data is loaded.

[w3] The display position is set at the left end.

[w4] Reduced-scale picture data is loaded, and is displayed at a target coordinate position.

[w5] It is checked if reduced-scale pictures to be displayed still remain.

[w6] If such pictures still remain, the next EP information is loaded.

[w7] If the next picture is the fourth picture, the display position is set at the lower left end (linefeed), and the control returns to [w4].

[w8] If the sixth picture has not been displayed yet, the display position is shifted rightward by one field, and the control returns to [w4].

[w9] A next page symbol is displayed.

[w10] The control waits until the user selects a picture. If the user selects the next page symbol (next page), the next EP data is loaded, and the control returns to [w3].

[w11] A setup is made to start playback from the EP of the selected picture, thus ending this process.

FIG. 72 is a flowchart (MNFI reliability check process flow) for explaining an example of a process for checking the reliability of manufacturer's information MNFI in FIG. 65. In this process, the reliability of MNFI and IT_TXT is checked upon insertion of a disc. If inconsistency is found, that MNFI or IT_TXT is deleted. (Since the program edit date is set in PGI, IT_TXT, and MNFI when a program is edited, if the recorder does not support IT_TXT and MNFI, inconsistency occurs.)

[x1] ORG_PGC in the disc is loaded.
[x2] Information of each PG is read out.
[x3] The update date information of PGI is read out, and IT_TXT corresponding to that PG is searched. If IT_TXT is found, its update date information is read out.
[x4] MNFI corresponding to that PG is searched. If MNFI is found, its update date information is read out.
[x5] The update dates are compared. If the update date does not match the date information of PGI, that data (IT_TXT or MNFI) is deleted. (The mismatched update dates mean that data of that portion was edited by an apparatus of another manufacturer, and where that data is related cannot be detected. For this reason, that data is deleted.)
[x6] It is checked if the next PG is available. If the next PG is available, a setup is made to check the next PG, and the control returns to [x3].
[x7] This process ends.

With the above process, flexible control operations suited to digital broadcast can be implemented.

[Summary of Embodiment]

(01) Each entry point (C_EPI in FIG. 18) has a pointer (TBN_PT, EP_REP_PIC) to a thumbnail picture, a pointer (TXT_NUM) to item text, an entry point type (EP_TY in FIG. 19), and the like.

That is, various kinds of information can be added to each entry point, and information included in EP_TY can be immediately determined. Furthermore, since the position of a representative picture can be set and held independently of the entry point itself, this representative picture can be used as a chapter thumbnail and the like.

(02) Both mandatory information (PGI) and extended information (EP_EPIT; option) in management information (VMG, ESMG) have identical search information (information such as a program index number, program update date, and the like in FIGS. 15 and 23).

That is, the extended information (EP_EPIT) as an option is configured to store the same information such as a program index number, program update date, and the like as that of the mandatory information (PGI). When information associated with a program (PG) has been changed, the program index number, program update date, and the like in the mandatory information (PGI) and corresponding extended information are updated at the same time (when only the extended information has been changed, this simultaneous update process is not necessary).

With this configuration, only required extended information associated with programs, playlists, entry points, and the like can be added and held any time. Especially, when a model (recorder) which has no function of processing extended information has changed the recorded contents of a disc of the present application, inconsistency of recorded information can be detected for each program (the process in ST4014X in FIG. 72 and the like). Since extended information can be added, the information size of the mandatory information in the management information can be minimized, and management information (various kinds of extended information such as text information and the like) can be easily added (e.g., the process in ST1806 in FIG. 44).

(03) Display control information (CCI) and/or copy control information (CCI) can be handled for each packet identifier (PID) in units of packet groups (not in units of packets) (the packet group header in FIG. 24 can include DCI and CCI). This embodiment supports a maximum of 32 PIDs. When the attributes change in the middle of a pack group, the pack group is terminated by padding dummy data, so as to align the boundary positions of respective pack groups (see FIG. 40).

Since DCI, CCI, and the like are managed for respective pack groups (as units larger than packet units), the information size of its header (packet group header in FIG. 24) can be reduced (compared to management for respective packets).

(04) The default PID of a stream object (SOB) is described in its management information (SOBI in FIGS. 8 to 11). In this way, if the PID is not especially described, the default PID allows to detect a target PID. Hence, the PID of each individual locations need not be described.

Note that the present invention is not limited to the aforementioned embodiments intact, and various modifications may be attained by modifying required constituent elements when it is practiced.

Various inventions can be formed by appropriately combining a plurality of required constituent elements disclosed in the embodiments. For example, some required constituent elements may be deleted from all the required constituent elements disclosed in the embodiments. Also, required constituent elements associated with different embodiments may be combined as needed.

## Claims

**1.** An information medium configured to have a data area that records AV information including moving picture information, and a management area that stores management information used to manage the AV information recorded on the data area as at least one program.

**2.** The medium according to claim 1, **characterized in that**

the information medium includes index picture information in an area independent from the moving picture information,

the management information includes cell information corresponding to a part of the program, and the cell information includes entry point information indicating an entry point to the program, and

the entry point information can have index pointer information used to designate the index picture information.

**3.** The medium according to claim 2, **characterized in that** the entry point information includes a flag indicating the availability of the index pointer information.

**4.** The medium according to claim 1, **characterized in that**

the management information includes primary text information, at least one item text stored at a location independent from the primary text information, and cell information corresponding to a part of the program, and the cell information includes entry point information indicating an entry point to the program, and

the entry point information can have item text pointer information used to designate the at least one item text.

**5.** The medium according to claim 4, **characterized in that** the entry point information includes a flag indicating the availability of the item text pointer information.

**6.** The medium according to claim 1, **characterized in that**

the information medium includes index picture information in an area independent from the moving picture information,

the management information includes program information including absolute number information of the program and cell information corresponding to a part of the program, and the cell information includes entry point information indicating an entry point to the program,

the entry point information is configured to have absolute number information of the entry point, and

the information medium can have extended information of the entry point in a management area independent from the management information.

**7.** The medium according to claim 1, **characterized in that**

the management information is configured to have program chain information used to manage playback of a chain of the at least one program, and manufacturer's information that can describe information unique to a manufacturer,

the program chain information includes program information as management information of the program, and

update date information upon updating the program can be stored in both the program information and the manufacturer's information.

**8.** A recording method using the medium of any one of claims 1 to 7, **characterized by** further comprising: recording the AV information on the data area, and recording the management information on the management area.

**9.** A playback method using the medium of any one of claims 1 to 7, **characterized by** further comprising: playing back the management information from the management area, and playing back the AV information from the data area.

**10.** A playback apparatus using the medium of any one of claims 1 to 7, **characterized by** further comprising:

means for playing back the management information from the management area; and
means for playing back the AV information from the data area.

**11.** A recording/playback apparatus that uses the medium of claim 7, **characterized by** further comprising:

means for detecting first update date information stored in the program information, and second update date information stored in the manufacturer's information; and
means for determining if the detected first update date information matches the detected second update date information.

**12.** An apparatus according to claim 11, **characterized by** further comprising

means for, when the detected first update date information does not match the detected second update date information, deleting information corresponding to this update date information mismatch in the manufacturer's information.

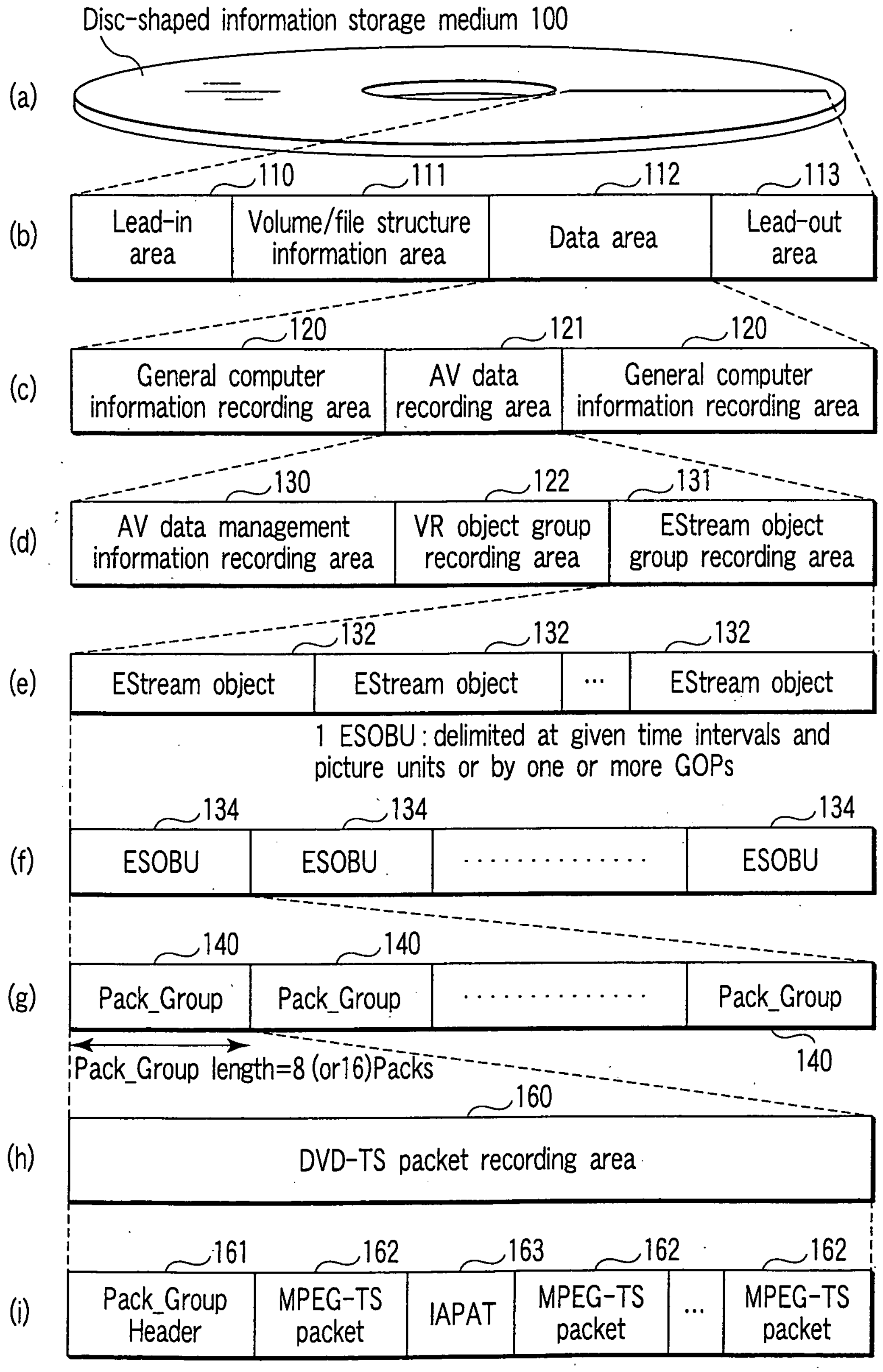
Disc-shaped information storage medium 100
(a)
(b)
110
111
112
113
Lead-in area
Volume/file structure information area
Data area
Lead-out area
(c)
120
121
120
General computer information recording area
AV data recording area
General computer information recording area
(d)
130
122
131
AV data management information recording area
VR object group recording area
EStream object group recording area
(e)
132
132
132
EStream object
EStream object
...
EStream object
1 ESOBU : delimited at given time intervals and picture units or by one or more GOPs
(f)
134
134
134
ESOBU
ESOBU
ESOBU
(g)
140
140
Pack_Group
Pack_Group
Pack_Group
140
Pack_Group length=8 (or16)Packs
(h)
160
DVD-TS packet recording area
(i)
161
162
163
162
162
Pack_Group Header
MPEG-TS packet
IAPAT
MPEG-TS packet
...
MPEG-TS packet

FIG. 1

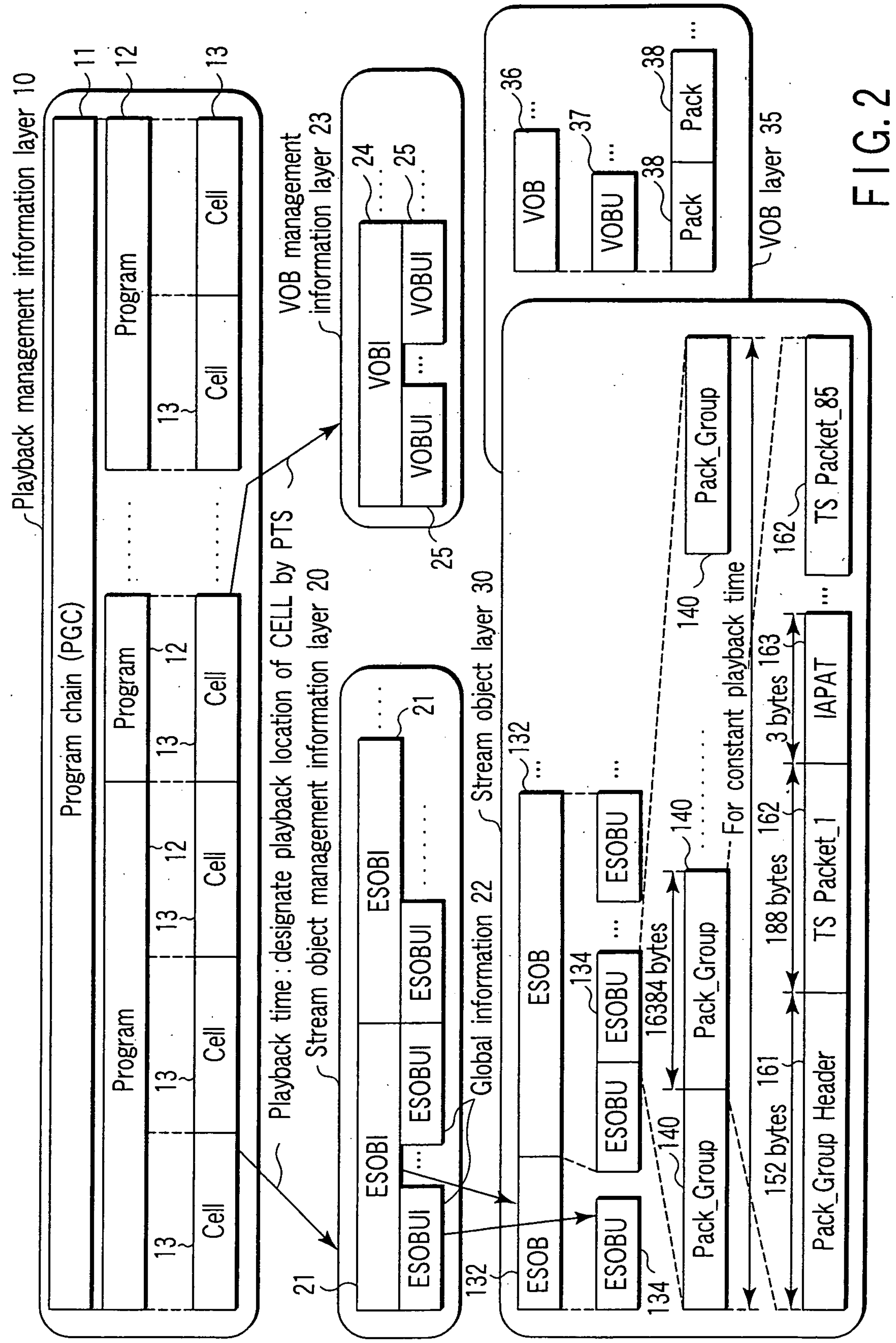
Playback management information layer 10
Program chain (PGC)
Program
Cell
11
12
13
Playback time : designate playback location of CELL by PTS
Stream object management information layer 20
ESOBI
ESOBUI
21
Global information 22
VOB management information layer 23
VOBI
VOBUI
24
25
Stream object layer 30
ESOB
ESOBU
132
134
Pack_Group
140
16384 bytes
For constant playback time
Pack_Group Header
TS Packet_1
IAPAT
TS Packet_85
152 bytes
188 bytes
3 bytes
161
162
163
VOB layer 35
VOB
VOBU
Pack
36
37
38

FIG. 2

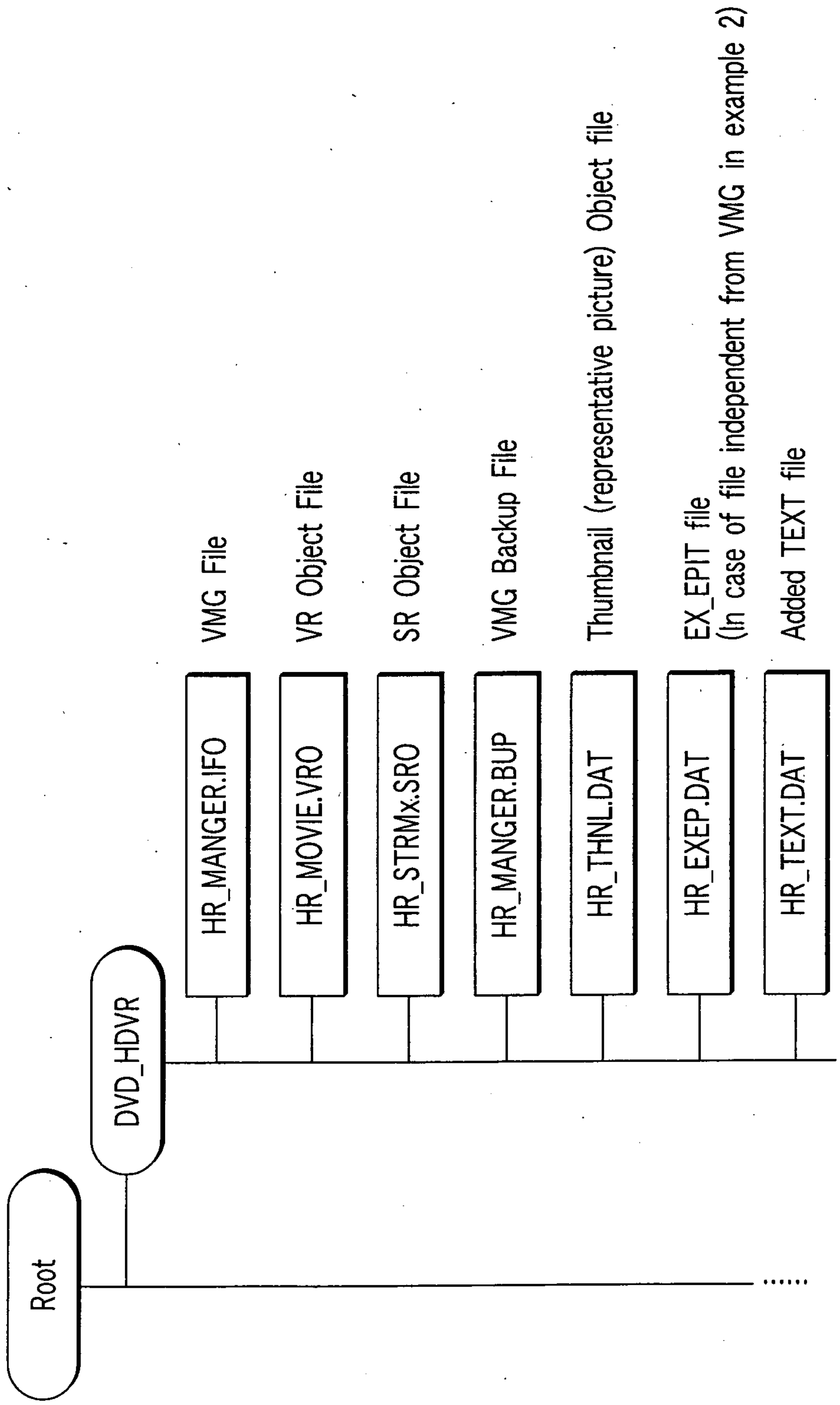
Root
DVD_HDVR
HR_MANGER.IFO
VMG File
HR_MOVIE.VRO
VR Object File
HR_STRMx.SRO
SR Object File
HR_MANGER.BUP
VMG Backup File
HR_THNL.DAT
Thumbnail (representative picture) Object file
HR_EXEP.DAT
EX_EPIT file
(In case of file independent from VMG in example 2)
HR_TEXT.DAT
Added TEXT file
......

FIG. 3

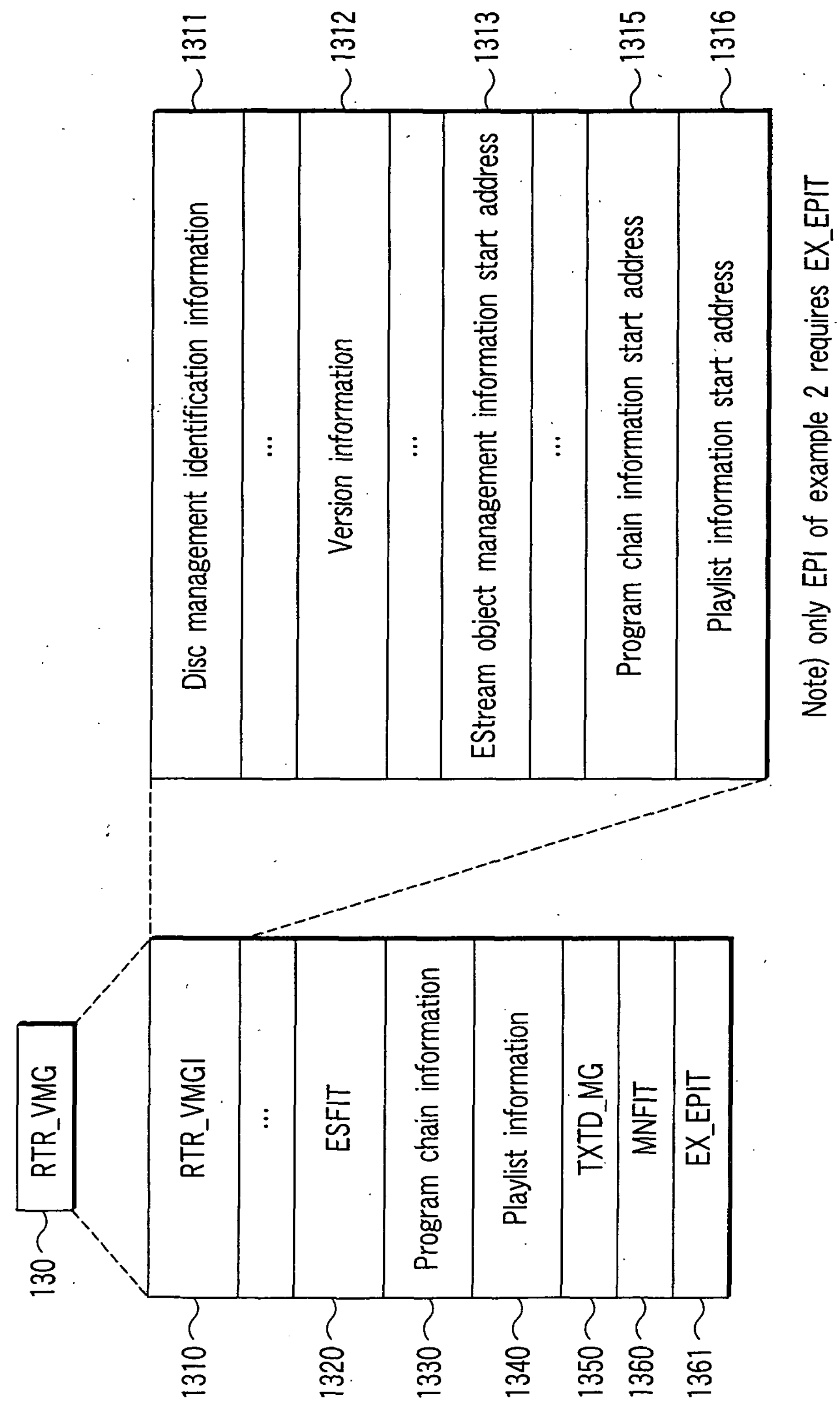
130
RTR_VMG
1310
RTR_VMGI
...
1320
ESFIT
1330
Program chain information
1340
Playlist information
1350
TXTD_MG
1360
MNFIT
1361
EX_EPIT
1311
Disc management identification information
...
1312
Version information
...
1313
EStream object management information start address
...
1315
Program chain information start address
1316
Playlist information start address
Note) only EPI of example 2 requires EX_EPIT

FIG. 4

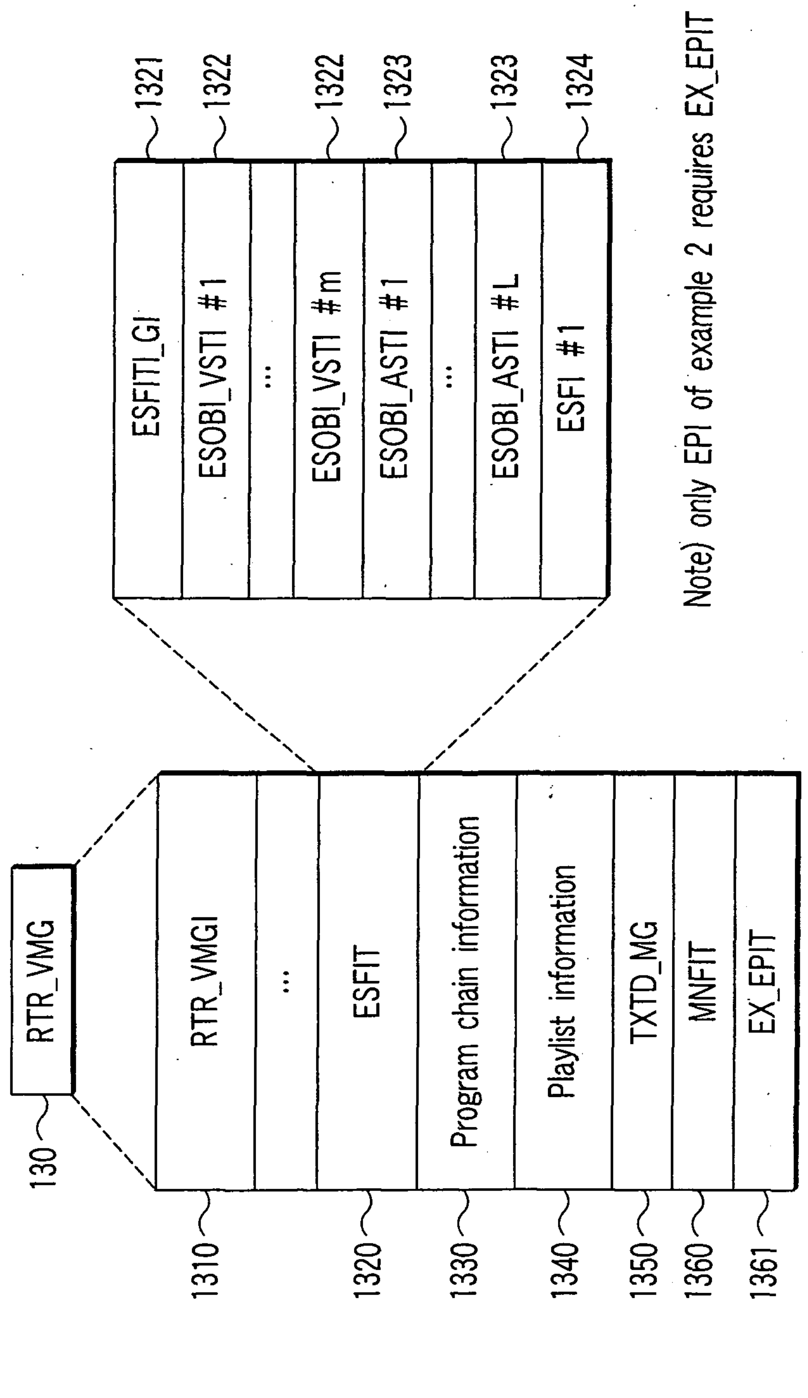
RTR_VMG
130
RTR_VMGI
...
ESFIT
Program chain information
Playlist information
TXTD_MG
MNFIT
EX_EPIT
1310
1320
1330
1340
1350
1360
1361
ESFITI_GI
ESOBI_VSTI #1
...
ESOBI_VSTI #m
ESOBI_ASTI #1
...
ESOBI_ASTI #L
ESFI #1
1321
1322
1322
1323
1323
1324
Note) only EPI of example 2 requires EX_EPIT

FIG.5

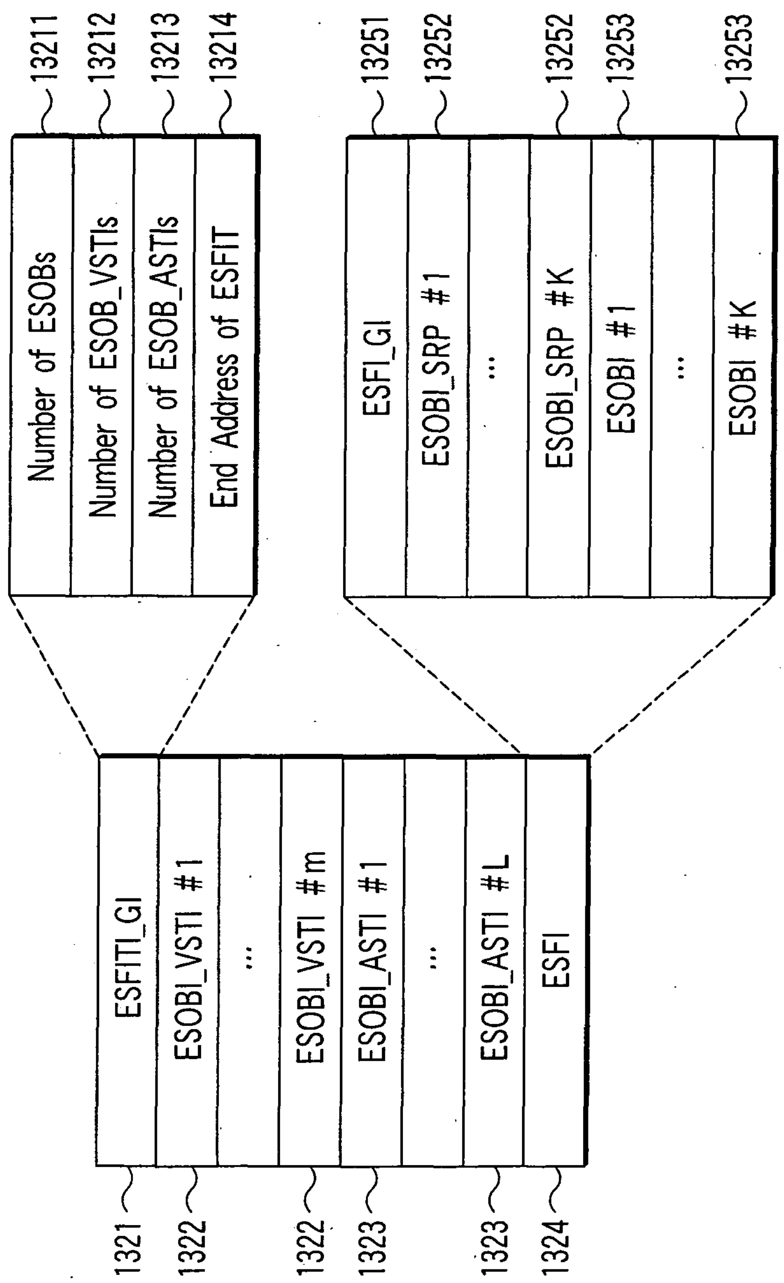
Number of ESOBs
Number of ESOB_VSTIs
Number of ESOB_ASTIs
End Address of ESFIT
13211
13212
13213
13214
ESFI_GI
ESOBI_SRP #1
...
ESOBI_SRP #K
ESOBI #1
...
ESOBI #K
13251
13252
13252
13253
13253
ESFITI_GI
ESOBI_VSTI #1
...
ESOBI_VSTI #m
ESOBI_ASTI #1
...
ESOBI_ASTI #L
ESFI
1321
1322
1322
1323
1323
1324

FIG.6

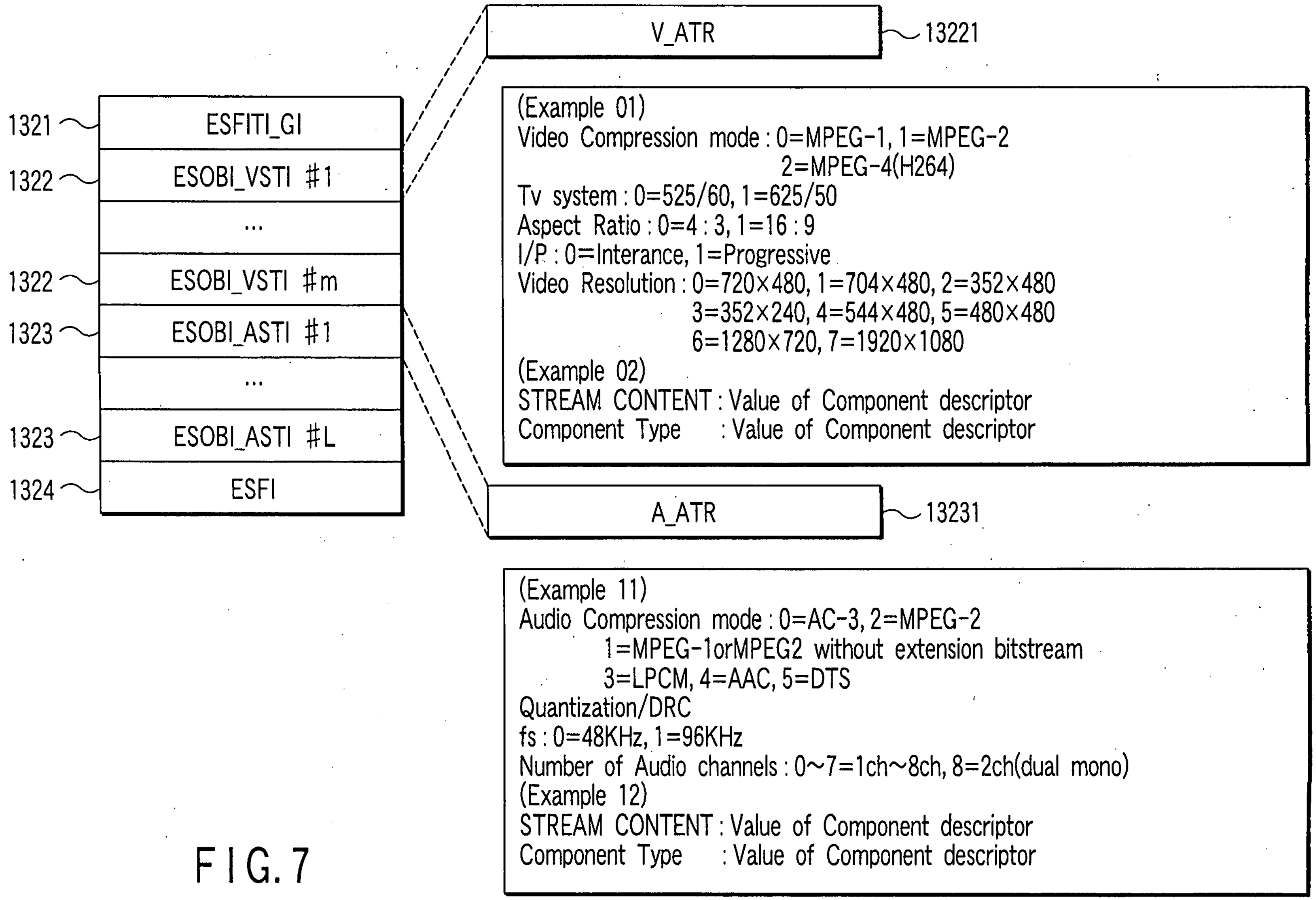

1321
ESFITI_GI
1322
ESOBI_VSTI #1
...
1322
ESOBI_VSTI #m
1323
ESOBI_ASTI #1
...
1323
ESOBI_ASTI #L
1324
ESFI
V_ATR
13221
(Example 01)
Video Compression mode : 0=MPEG-1, 1=MPEG-2
2=MPEG-4(H264)
Tv system : 0=525/60, 1=625/50
Aspect Ratio : 0=4 : 3, 1=16 : 9
I/P : 0=Interance, 1=Progressive
Video Resolution : 0=720×480, 1=704×480, 2=352×480
3=352×240, 4=544×480, 5=480×480
6=1280×720, 7=1920×1080
(Example 02)
STREAM CONTENT : Value of Component descriptor
Component Type : Value of Component descriptor
A_ATR
13231
(Example 11)
Audio Compression mode : 0=AC-3, 2=MPEG-2
1=MPEG-1orMPEG2 without extension bitstream
3=LPCM, 4=AAC, 5=DTS
Quantization/DRC
fs : 0=48KHz, 1=96KHz
Number of Audio channels : 0~7=1ch~8ch, 8=2ch(dual mono)
(Example 12)
STREAM CONTENT : Value of Component descriptor
Component Type : Value of Component descriptor


FIG. 7

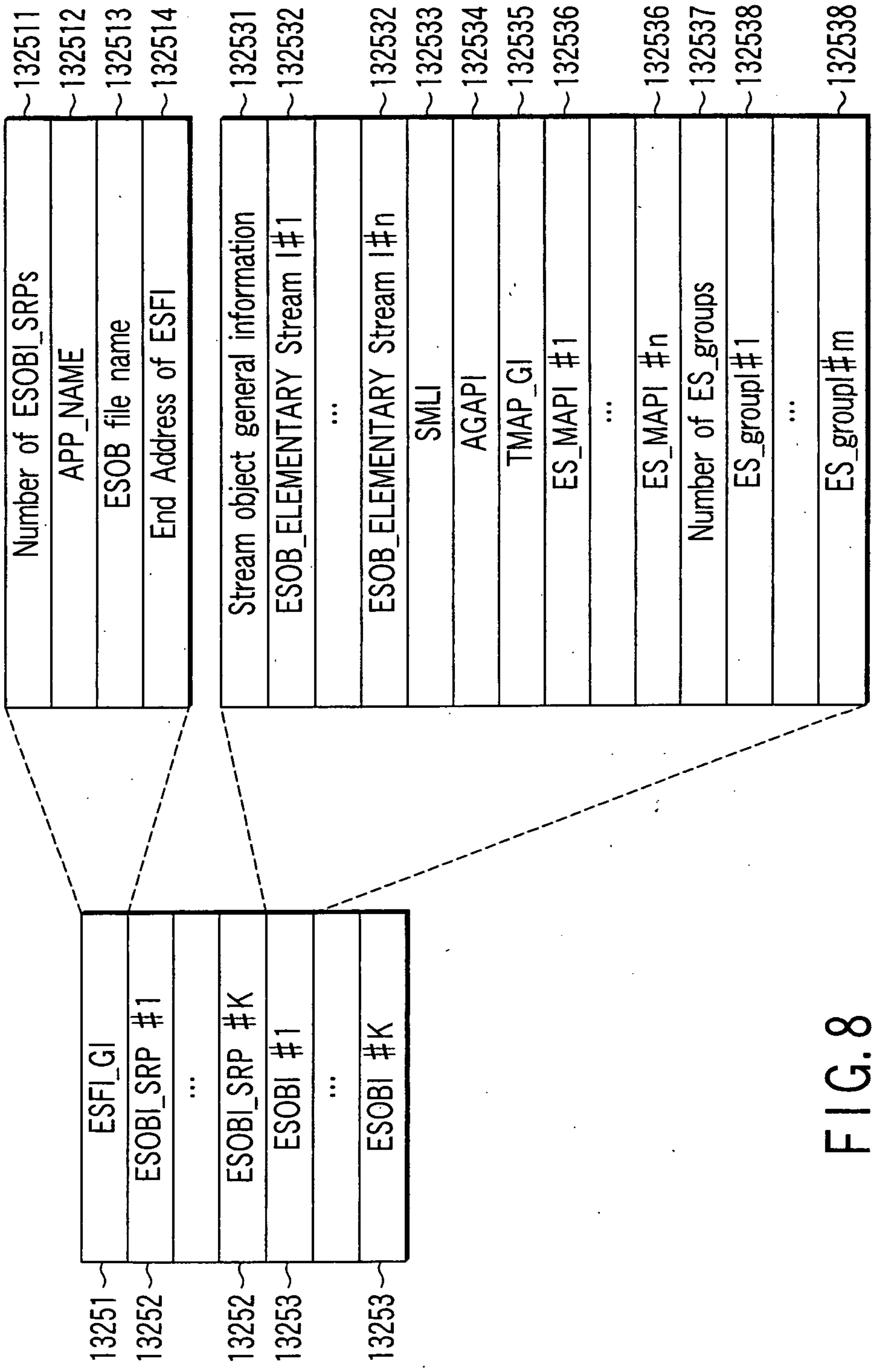

ESFI_GI
ESOBI_SRP #1
...
ESOBI_SRP #K
ESOBI #1
...
ESOBI #K
13251
13252
13252
13253
13253
Number of ESOBI_SRPs
APP_NAME
ESOB file name
End Address of ESFI
132511
132512
132513
132514
Stream object general information
ESOB_ELEMENTARY Stream I#1
...
ESOB_ELEMENTARY Stream I#n
SMLI
AGAPI
TMAP_GI
ES_MAPI #1
...
ES_MAPI #n
Number of ES_groups
ES_groupI#1
...
ES_groupI#m
132531
132532
132532
132533
132534
132535
132536
132536
132537
132538
132538


FIG. 8

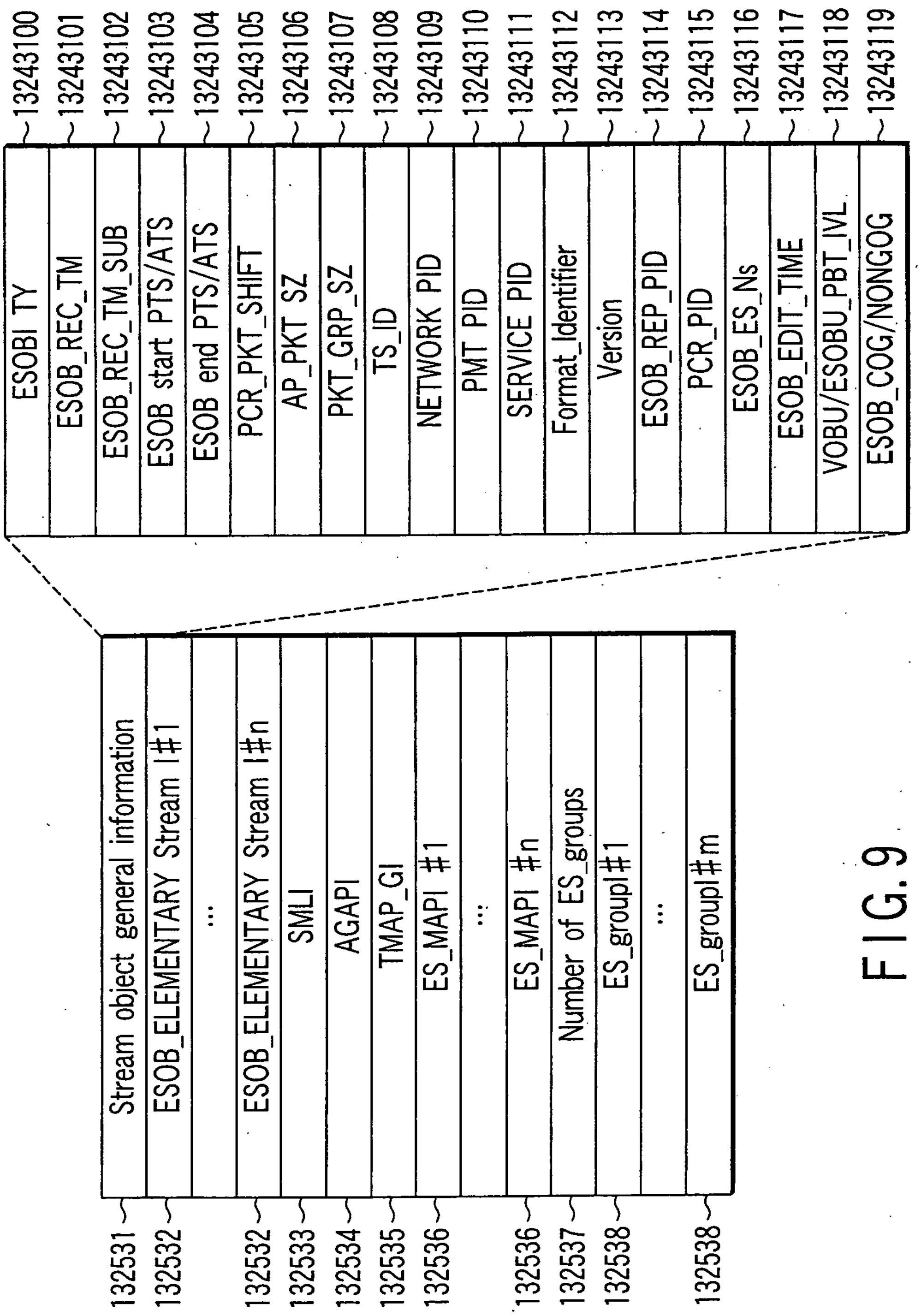

Stream object general information
ESOB_ELEMENTARY Stream I#1
...
ESOB_ELEMENTARY Stream I#n
SMLI
AGAPI
TMAP_GI
ES_MAPI #1
...
ES_MAPI #n
Number of ES_groups
ES_groupI#1
...
ES_groupI#m
132531
132532
132532
132533
132534
132535
132536
132536
132537
132538
132538
ESOBI TY
ESOB_REC_TM
ESOB_REC_TM_SUB
ESOB start PTS/ATS
ESOB end PTS/ATS
PCR_PKT_SHIFT
AP_PKT SZ
PKT_GRP_SZ
TS_ID
NETWORK PID
PMT PID
SERVICE PID
Format_Identifier
Version
ESOB_REP_PID
PCR_PID
ESOB_ES_Ns
ESOB_EDIT_TIME
VOBU/ESOBU_PBT_IVL
ESOB_COG/NONGOG
13243100
13243101
13243102
13243103
13243104
13243105
13243106
13243107
13243108
13243109
13243110
13243111
13243112
13243113
13243114
13243115
13243116
13243117
13243118
13243119

FIG.9

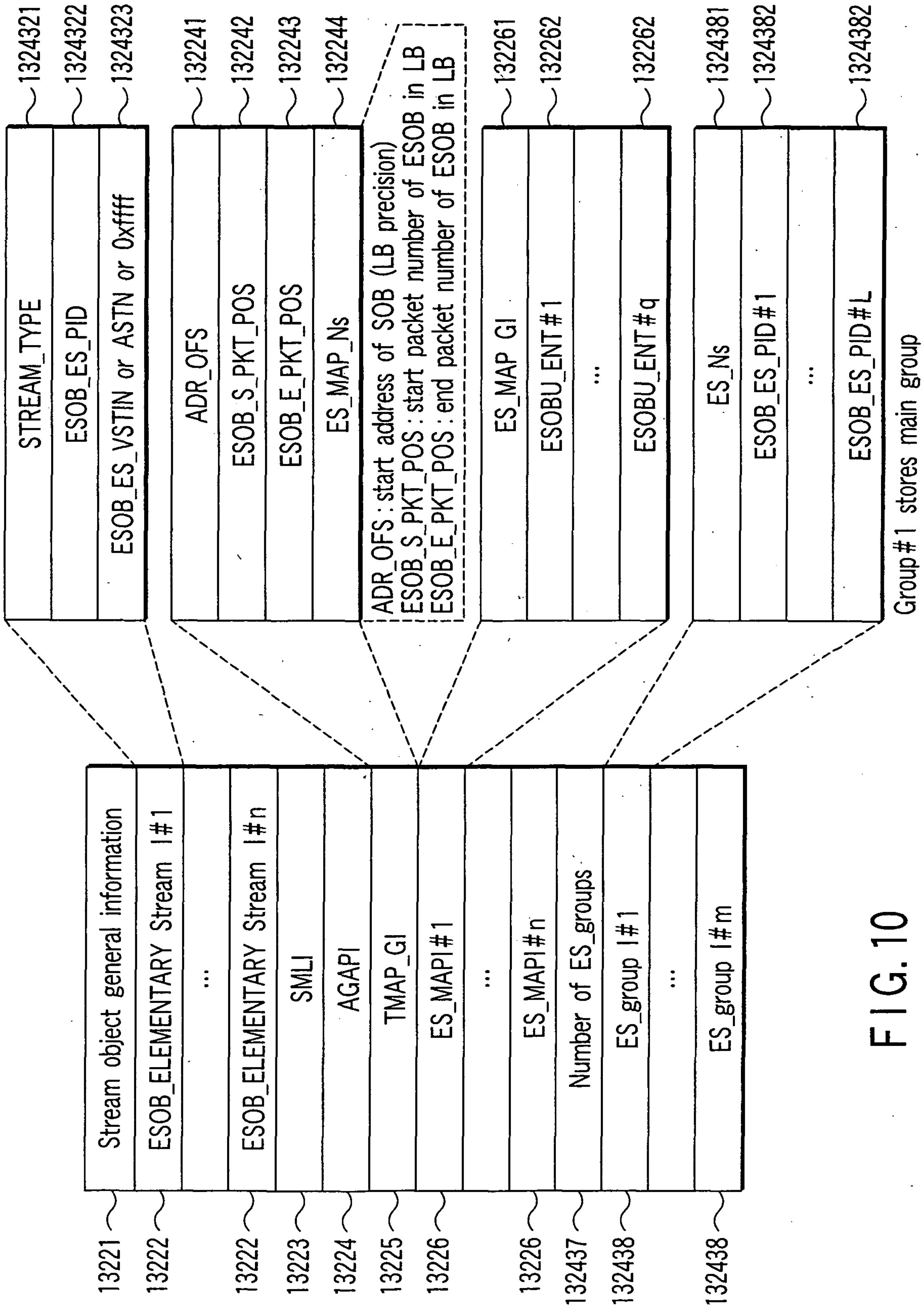

STREAM_TYPE
ESOB_ES_PID
ESOB_ES_VSTIN or ASTN or 0xffff
1324321
1324322
1324323
ADR_OFS
ESOB_S_PKT_POS
ESOB_E_PKT_POS
ES_MAP_Ns
132241
132242
132243
132244
ADR_OFS : start address of SOB (LB precision)
ESOB_S_PKT_POS : start packet number of ESOB in LB
ESOB_E_PKT_POS : end packet number of ESOB in LB
ES_MAP_GI
ESOBU_ENT#1
...
ESOBU_ENT#q
132261
132262
132262
ES_Ns
ESOB_ES_PID#1
...
ESOB_ES_PID#L
1324381
1324382
1324382
Group#1 stores main group
Stream object general information
ESOB_ELEMENTARY Stream I#1
...
ESOB_ELEMENTARY Stream I#n
SMLI
AGAPI
TMAP_GI
ES_MAPI#1
...
ES_MAPI#n
Number of ES_groups
ES_group I#1
...
ES_group I#m
13221
13222
13222
13223
13224
13225
13226
13226
132437
132438
132438


FIG.10

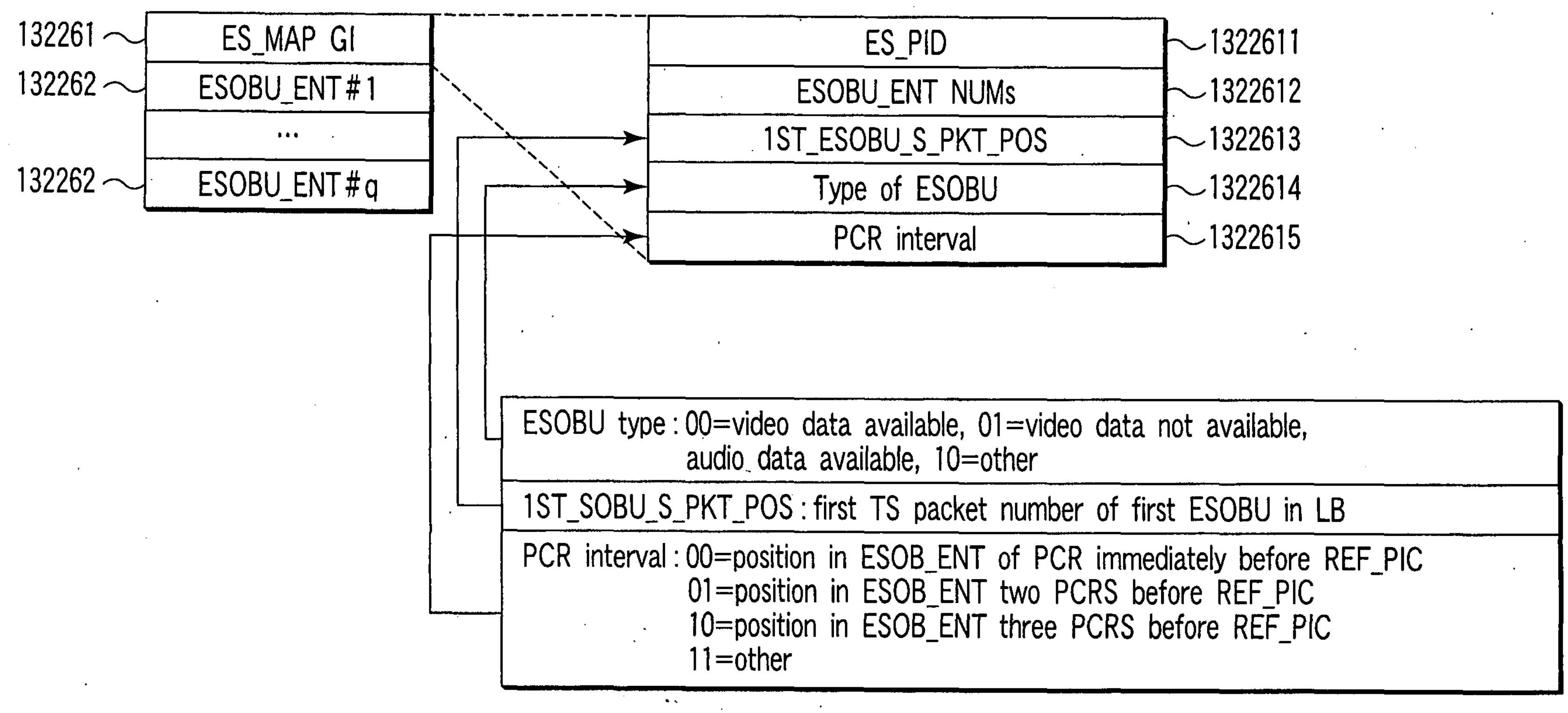
132261
ES_MAP GI
132262
ESOBU_ENT#1
...
132262
ESOBU_ENT#q
ES_PID
1322611
ESOBU_ENT NUMs
1322612
1ST_ESOBU_S_PKT_POS
1322613
Type of ESOBU
1322614
PCR interval
1322615
ESOBU type : 00=video data available, 01=video data not available, audio data available, 10=other
1ST_SOBU_S_PKT_POS : first TS packet number of first ESOBU in LB
PCR interval : 00=position in ESOB_ENT of PCR immediately before REF_PIC
01=position in ESOB_ENT two PCRS before REF_PIC
10=position in ESOB_ENT three PCRS before REF_PIC
11=other

FIG. 11

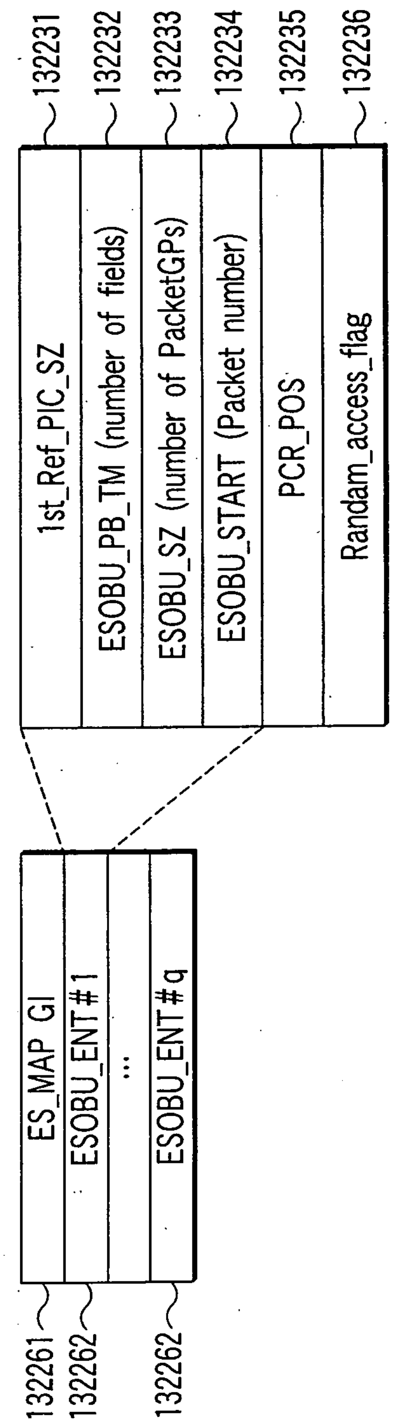
1st_Ref_PIC_SZ
ESOBU_PB_TM (number of fields)
ESOBU_SZ (number of PacketGPs)
ESOBU_START (Packet number)
PCR_POS
Randam_access_flag
132231
132232
132233
132234
132235
132236
ES_MAP GI
ESOBU_ENT#1
...
ESOBU_ENT#q
132261
132262
132262

FIG. 12

<1> When video data is available

ESOBU : (1) delimited at randomly accessible positions
(2) delimited by minimum VOBU/ESOBU_PBT_IVL=0 : 0.4s, =1 : 1s, =2 : 2s or more except for last ESOBU
(3) delimited by maximum VOBU/ESOBU_PBT_IVL=0 : 1s, =1 : 2s, =2 : 3s or less

ESOBU_SZ : number of packet groups belonging to ESOBU
ESOBU_START : head packet number (1-85) in packet group of start ESOBU

Example

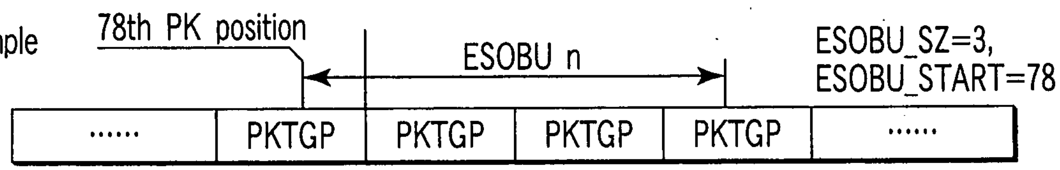


ESOBU_SZ=3,
ESOBU_START=78

1st Ref PIC SZ : LB count from head of ESOBU to end of Ref_PIC When 1st_Ref_PIC_SZ=0xffffffff, no Ref PIC is included in ESOBU.
PCR_POS : PCR position indicated by PCR_POS_COUNT using address count from head of ESOBU
If no PCR is available, PCR_POS=0xffff LB count is given by PCR_POS×2^PCR_POS_SHIFT
Random_access_flag : 1=I is present at head of ESOBU; 0 : no I is present at head of ESOBU

<2> When video data is not available, and audio data is available
SOBU : delimited at same intervals as in maximum of <1>.
1st_Ref_PIC_SZ=number of last TS Packets of audio frame at head of ESOBU
PCR_POS : same as in <1>

<3> When neither video data nor audio data are available, and data broadcast is available
ESOBU : delimited at same intervals as in maximum of <1>.
1st_Ref_PIC_SZ=0xffffffff (fixed)
PCR_POS=0xffffffff (fixed)

FIG. 13

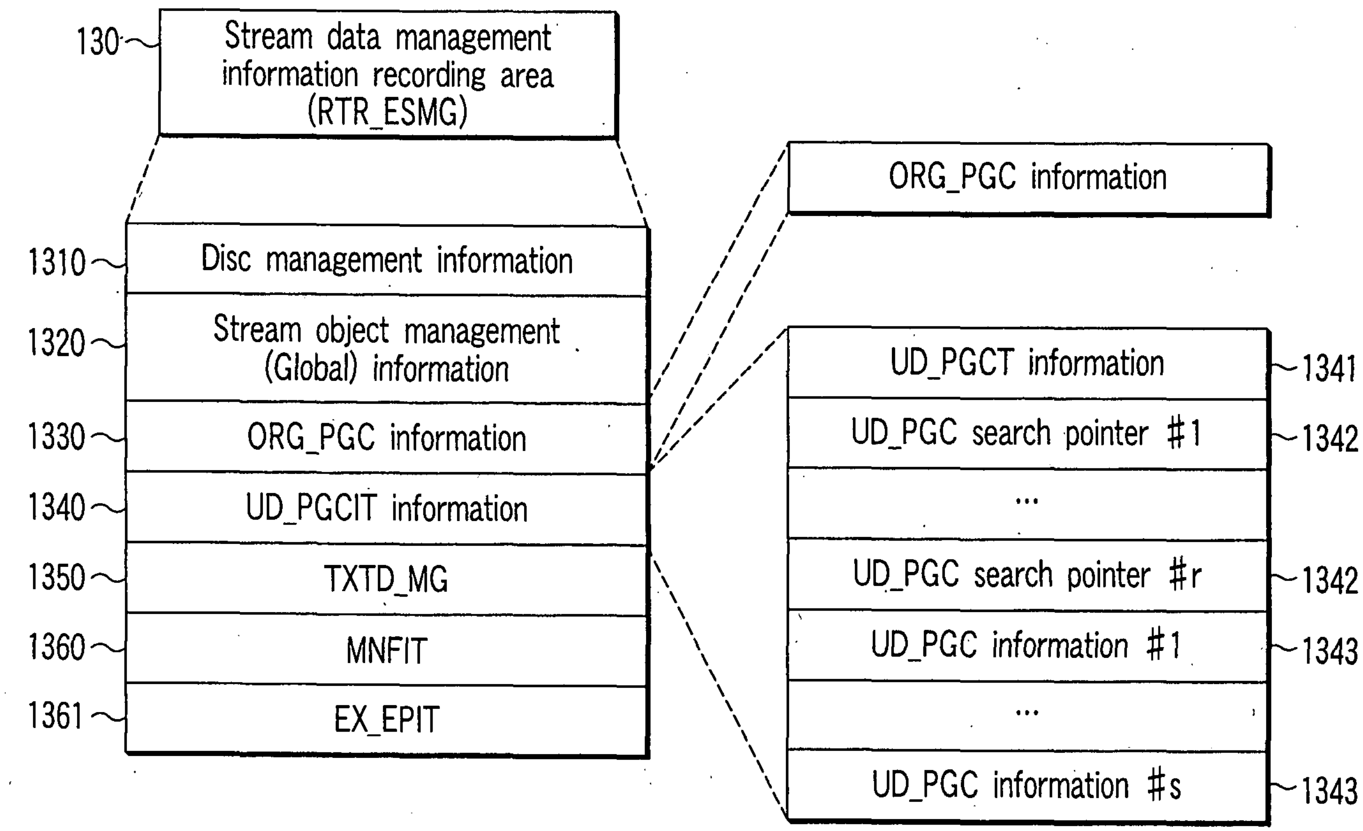


F I G. 14

Note) only EPI of example 2 requires EX_EPIT

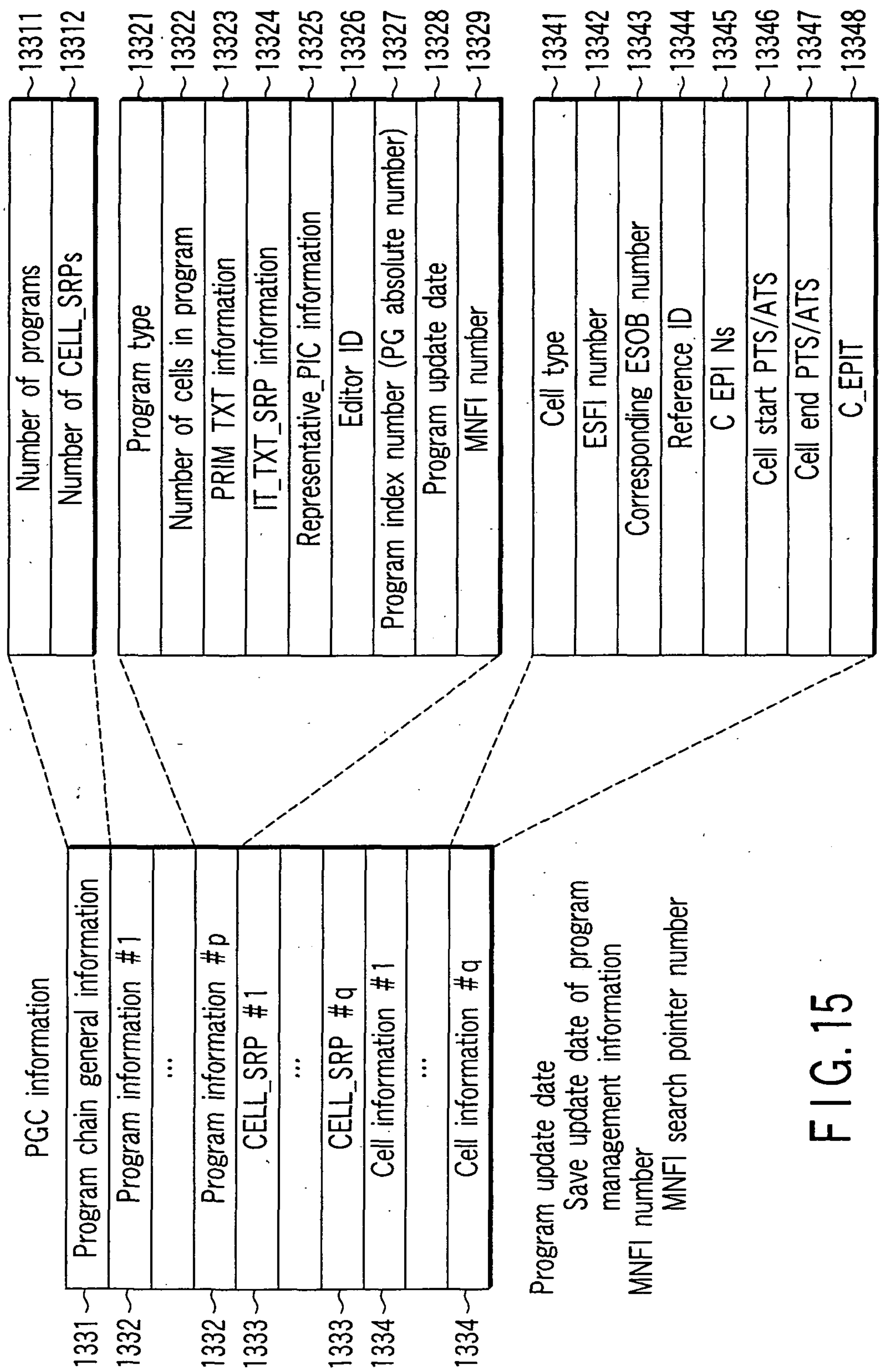
PGC information
1331 Program chain general information
1332 Program information #1
...
1332 Program information #p
1333 CELL_SRP #1
...
1333 CELL_SRP #q
1334 Cell information #1
...
1334 Cell information #q
Number of programs 13311
Number of CELL_SRPs 13312
Program type 13321
Number of cells in program 13322
PRIM TXT information 13323
IT_TXT_SRP information 13324
Representative_PIC information 13325
Editor ID 13326
Program index number (PG absolute number) 13327
Program update date 13328
MNFI number 13329
Cell type 13341
ESFI number 13342
Corresponding ESOB number 13343
Reference ID 13344
C EPI Ns 13345
Cell start PTS/ATS 13346
Cell end PTS/ATS 13347
C_EPIT 13348
Program update date
Save update date of program management information
MNFI number
MNFI search pointer number

FIG. 15

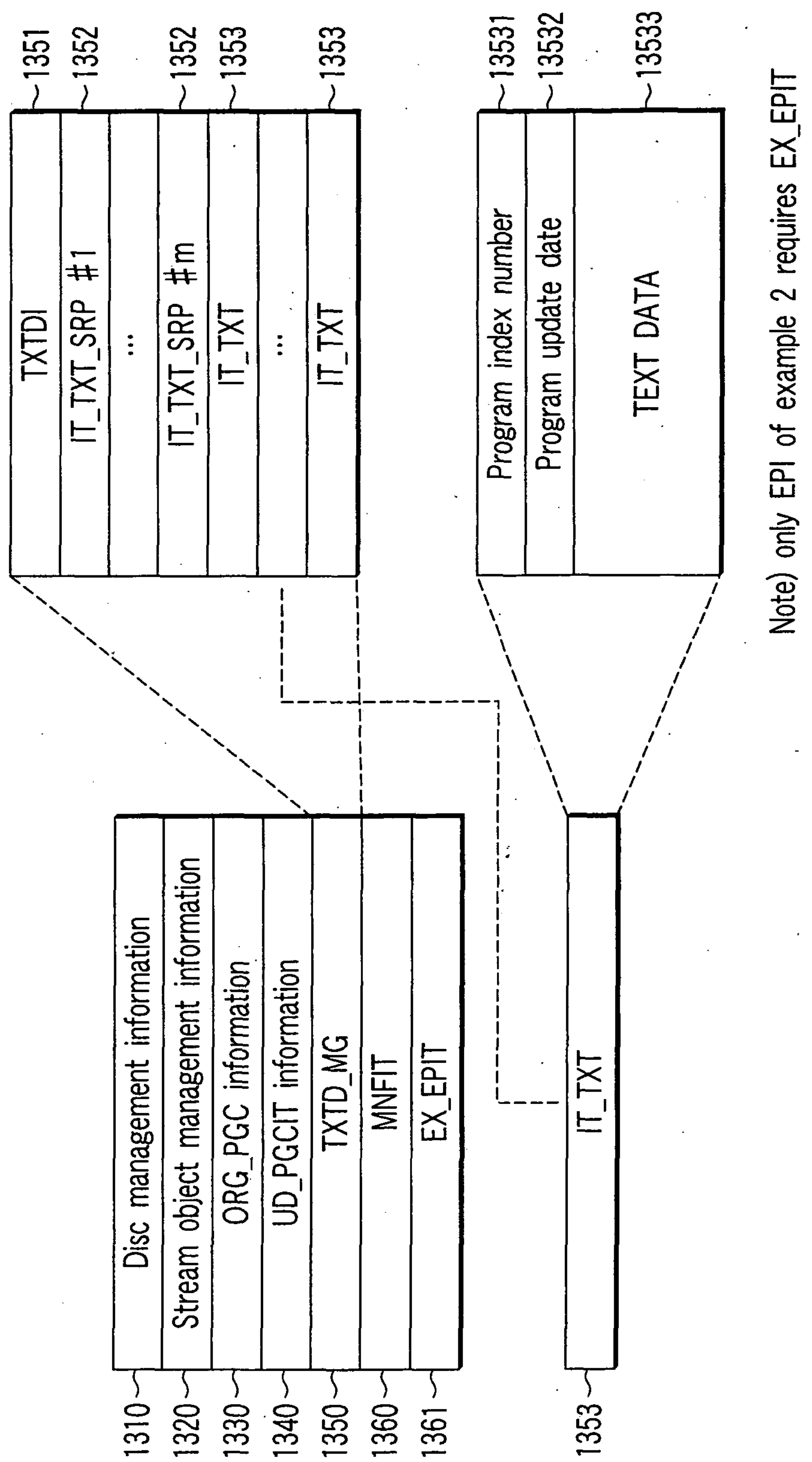
Disc management information
Stream object management information
ORG_PGC information
UD_PGCIT information
TXTD_MG
MNFIT
EX_EPIT
1310
1320
1330
1340
1350
1360
1361
TXTDI
IT_TXT_SRP #1
...
IT_TXT_SRP #m
IT_TXT
...
IT_TXT
1351
1352
1352
1353
1353
IT_TXT
1353
Program index number
Program update date
TEXT DATA
13531
13532
13533
Note) only EPI of example 2 requires EX_EPIT

FIG. 16

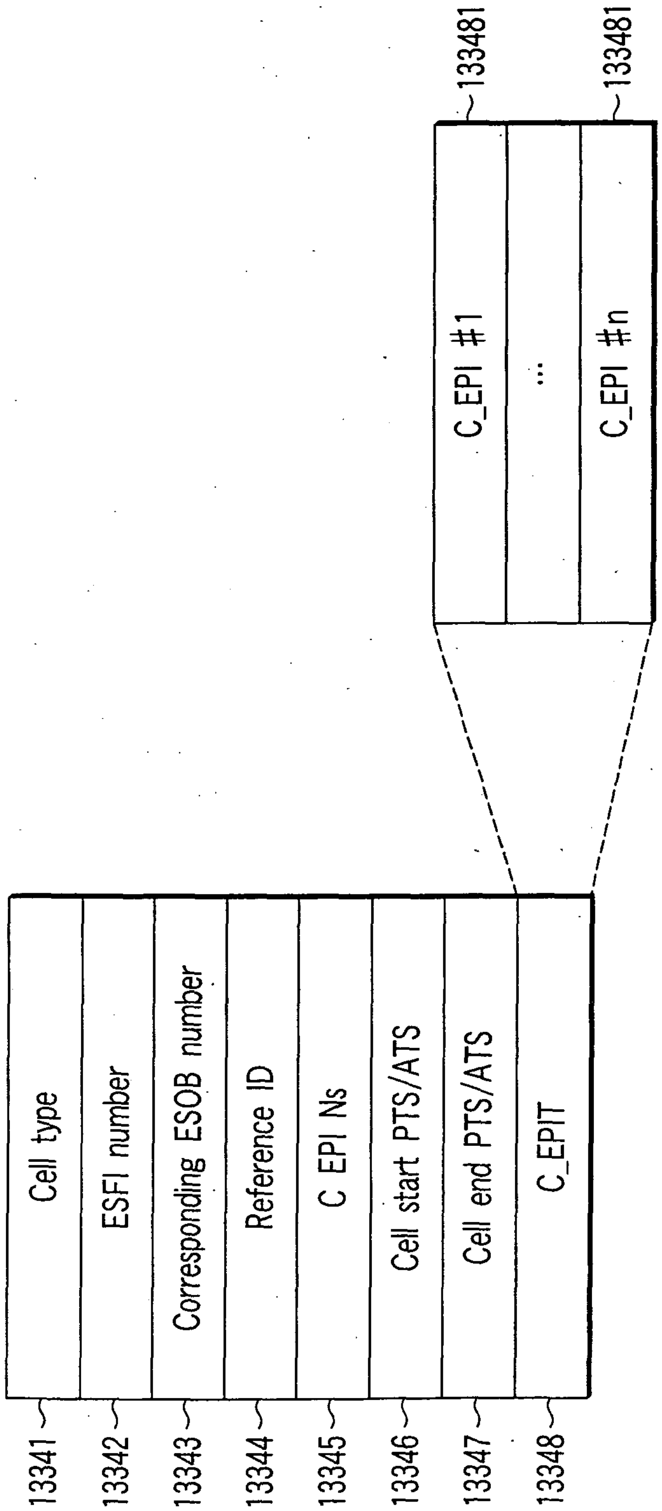

13341 Cell type
13342 ESFI number
13343 Corresponding ESOB number
13344 Reference ID
13345 C EPI Ns
13346 Cell start PTS/ATS
13347 Cell end PTS/ATS
13348 C_EPIT
133481 C_EPI #1
...
133481 C_EPI #n


FIG. 17

C_EPI (Contents of EPI of example 1)

| | | | |
|---|---|---|---|
| 0 | EP_TY | Entry Point Type (EP_TY) | 1 |
| 1-4 | EP_INDX_NUM | EP absolute number | 4 |
| 5-10 | EP_PTM | PTM of Entry Point | 6 |
| 11-16 | LAST_TM | Last edit date (date a time) | 6 |
| 17-144 | PRM_TXT | Primary Text Information | 128 (If available) |
| 145-150 | EP_REP_PIC | PTM pointer for thumbnail picture on program, which belongs to this EP | 6 (If available) |
| 151-154 | TBN_PT | Thumbnail_pointer : thumbnail number in thumbnail file which belongs to this EP | 4 (If available) |
| 155-158 | TXT_NUM | text Number : number of IT_TXT which belongs to this EP/pointer to another text file | 4 (If available) |

FIG. 18

EP_TY

| 7 | 6 | 5 | 4 | 3 | 2 | 1 | 0 |
|---|---|---|---|---|---|---|---|
| Thumbnail on/off | PRM_TXT on/off | IT_TXT on/off | reserve | | | | |

Thumbnail on/off : on : TBN_PT is present; off : TBN_PT is not present
PRM_TXT on/off : on : PRM_TXT is present : off : PRM_TXT is not present
IT_TXT on/off : on : IT_TXT_NUM is present : off : IT_TXT_NUM is not present

FIG. 19

C_EPI (Contents of EPI of example 2)

| RBP | Field Name | Contents | Number of bytes |
|---|---|---|---|
| 0-1 | EP_INDEX_NUM | Entry Point index number (EP absolute number) | 2 |
| 2-7 | EP_PTM | PTM of Entry Point | 6 |
| 8-13 | EP_REP_PIC | PTM pointer for thumbnail picture on program, which belongs to this EP | 6 (If available) |
| 14-19 | LAST_TM | Last edit date (date & time) | 6 |

F I G. 20

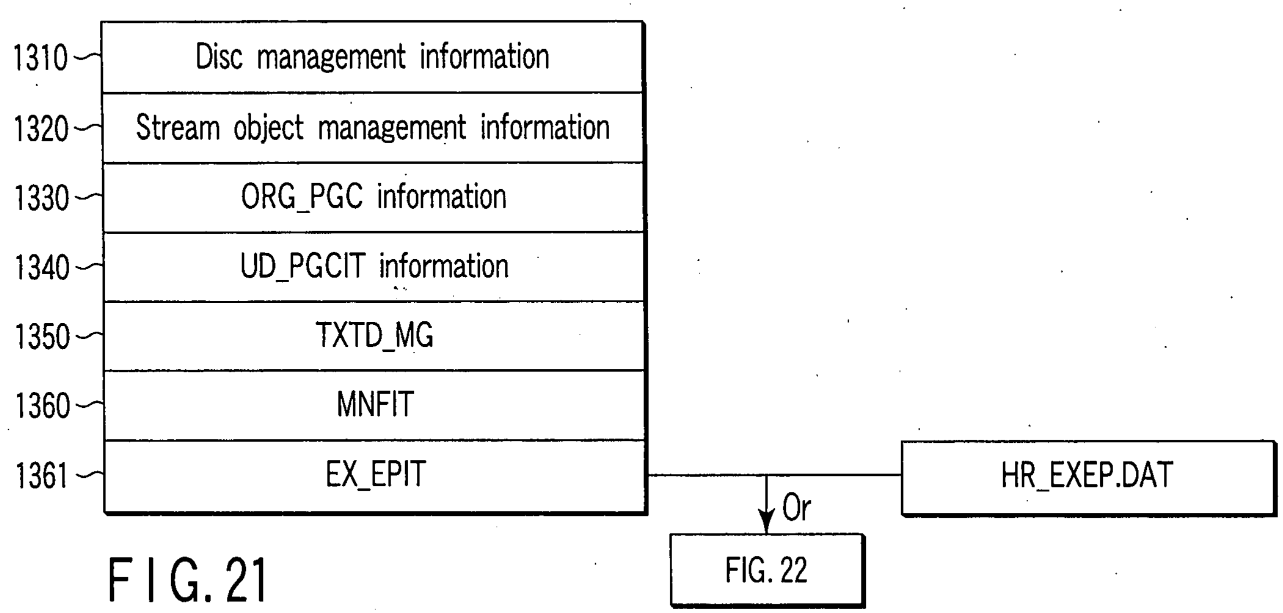


F I G. 21

Contents of EX_EPIT (Contents of EX_EPIT of example 2)

| RBP | Field Name | | Contents | Number of bytes |
|---|---|---|---|---|
| 0-1 | EX EP NUMS | | Total number of EX_EPs | 2 |
| 2-5 | EX_EPI1 | EPL_INDEX | Absolute number (index number) of linked EP | 4 |
| 6 | | EP_TY | Entry Point Type | 1 |
| 7-134 | | PRM_TXT | Primary Text Information | 128 (If available) |
| 135-140 | | EP_REP_PIC | PTM pointer for thumbnail picture on program, which belongs to this EP | 6 (If available) |
| 141-144 | | EBN_PT | Thumbnail_pointer : thumbnail number in thumbnail file which belongs to this EP | 4 (If available) |
| 145-148 | | IT_TXT_NUM | IT text Number : number of IT_TXT which belongs to this EP | 4 (If available) |
| | ... | ... | ... | |
| | EX_EPIn | EPL_INDEX | Absolute number (index number) of linked EP | 4 |
| | | EP_TY | Entry Point Type | 1 |
| | | PRM_TXT | Primary Text Information | 128 (If available) |
| | | EP_REP_PIC | PTM pointer for thumbnail picture on program, which belongs to this EP | 6 (If available) |
| | | EBN_PT | Thumbnail_pointer : thumbnail number in thumbnail file which belongs to this EP | 4 (If available) |
| | | IT_TXT_NUM | IT text Number : number of IT_TXT which belongs to this EP | 4 (If available) |

FIG. 22

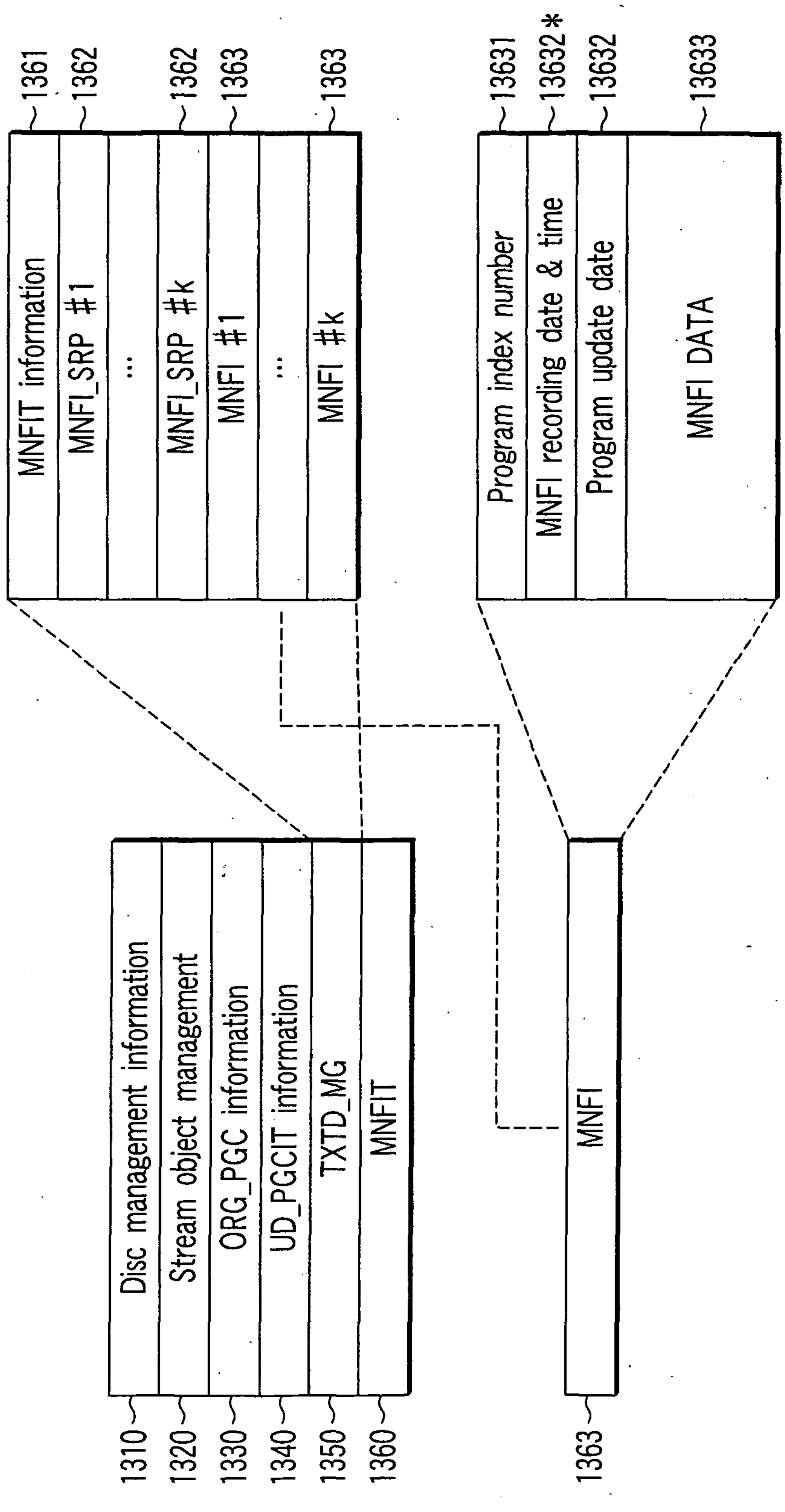

MNFIT information
MNFI_SRP #1
...
MNFI_SRP #k
MNFI #1
...
MNFI #k
1361
1362
1362
1363
1363
Program index number
MNFI recording date & time
Program update date
MNFI DATA
13631
13632*
13632
13633
Disc management information
Stream object management
ORG_PGC information
UD_PGCIT information
TXTD_MG
MNFIT
1310
1320
1330
1340
1350
1360
MNFI
1363


FIG. 23

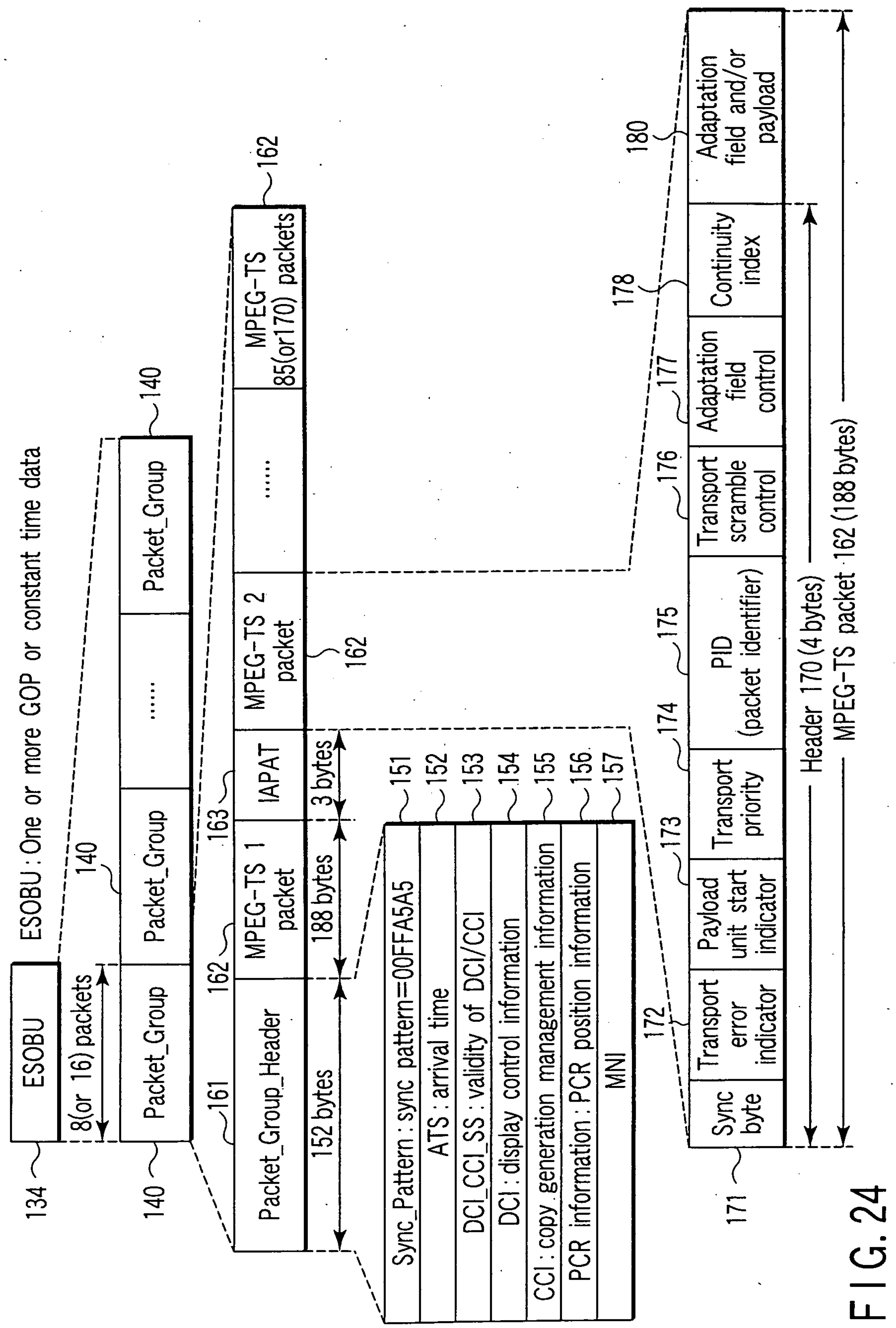
134
ESOBU
ESOBU : One or more GOP or constant time data
8(or 16) packets
140
Packet_Group
140
Packet_Group
......
Packet_Group
140
161
Packet_Group_Header
162
MPEG-TS 1 packet
163
IAPAT
MPEG-TS 2 packet
162
......
MPEG-TS 85(or170) packets
162
152 bytes
188 bytes
3 bytes
Sync_Pattern : sync pattern=00FFA5A5
151
ATS : arrival time
152
DCI_CCI_SS : validity of DCI/CCI
153
DCI : display control information
154
CCI : copy generation management information
155
PCR information : PCR position information
156
MNI
157
171
Sync byte
172
Transport error indicator
Payload unit start indicator
173
Transport priority
174
PID (packet identifier)
175
Transport scramble control
176
Adaptation field control
177
Continuity index
178
Adaptation field and/or payload
180
Header 170 (4 bytes)
MPEG-TS packet 162 (188 bytes)

FIG. 24

ATS : 6 bytes

| |
|---|
| PAT_base (38-0 bits) |
| PAT_exten (8-0 bits) |

PAT_base : Counter value of 90kHZ
PAT_exten : Counter value of 27MHZ
PAT = PAT_base/90000Hz + PAT_exten/27,000,000Hz

DCI_CCI_SS : 1 byte ···

| | | | |
|---|---|---|---|
| DCI_SS (1 bit) | Reserve (3 bits) | CCI_SS (3 bits) | Reserve (1 bit) |

DCI_SS : 0=invalid, 1=valid
CCI_SS : 0=invalid, 1=valid (ASP alone), 2=valid (EPN alone), 3=valid (ASP & EPN), 4=valid (CGMS alone), 5=valid (CGMS & ASP), 6=valid (CGMS & EPN), 7=valid (APS, EPN, & CGMS)

DCI (display control information) : 1 bit×32=4 bytes
Set for each ES for 32 streams : if DCI is not available, DCI field is padded with "0"s

| | | |
|---|---|---|
| Aspect of ES1 (1 bit) | ··· | Aspect of ES32 (1 bit) |

···Aspect : 0=4 : 3, 1=16 : 9

FIG. 25

CCI : 6bits+reserve 2×32=32 bytes : Set for each ES for 32 streams; if CCI is not available, CCI field is padded with "0"s

| Digital copy control (2 bits) | Analog copy control (2 bits) | ICT | EPN | Reserved |
|---|---|---|---|---|

Repeat 32 sets

Digital copy control : 00=copy never, 01=copy once, 11=copy free
Analog copy control : 0=no APS, 1=append APS type 1, 2=append APS type 2, 3=append APS type 3
EPN : 0=contents protection, 0=no contents protection
ICT 0=resolution constraint, 1=no constraint

FIG. 26

IAPAT : 3 bytes

| PAT_base(14-0 bits) |
|---|
| PAT_exten(8-0 bits) |

PAT_base : Counter value of 90 kHz
PAT_exten : Counter value of 27 MHz
PAT=ATS+PAT_base/90000Hz+PAT_exten/27,000,000Hz
or added to immediately preceding PAT

PCR position information : 2 bytes

| PCR_Packet number : number of Packets from head of ESOBU to Packet with PCR; if no PCR is available. PCR Packet number=0xffff |
|---|

FIG. 27

HR_THNL.DAT

| Field Name | | Contents | |
|---|---|---|---|
| NUM_THUM | | Number of Thumbnails | 4bytes |
| THUM 1 | THUM 1_STI | Compression method of Thumbnail 1 : BITMAP (no compression)=0, JPEG=1, MPEG=2, TIFF=3, GIF=4 | 1byte |
| | THUM 1_END length | Data length of Thumbnail 1 | 6bytes |
| | THUM_DATA | Thumbnail data | |
| ... | ... | ... | |
| THUM n | THUM n_STI | Compression method of Thumbnail n : BITMAP (no compression)=0, JPEG=1, MPEG=2, TIFF=3, GIF=4 | 1byte |
| | THUM n END length | Data length of Thumbnail n | 6bytes |
| | THUM_DATA | Thumbnail data | |

F I G. 28

HR_TEXT.DAT

| Field Name | | Contents | |
|---|---|---|---|
| NUM_TEXT | | Number of TEXTs | 4bytes |
| TEXT 1 | TEXT_STI | Code format of TEXT 1 : ASCII code=0, JIS code=1, Shift JIS code=2, Unicode=3 | 1byte |
| | TEXT length | Data length of TEXT 1 | 6bytes |
| | TEXT_DATA | TEXT data | |
| ... | ... | ... | |
| TEXT n | TEXT_STI | Code format of TEXT n : ASCII code=0, JIS code=1, Shift JIS code=2, Unicode=3 | 1byte |
| | TEXT length | Data length of TEXT n | 6bytes |
| | TEXT_DATA | TEXT data | |

FIG. 29

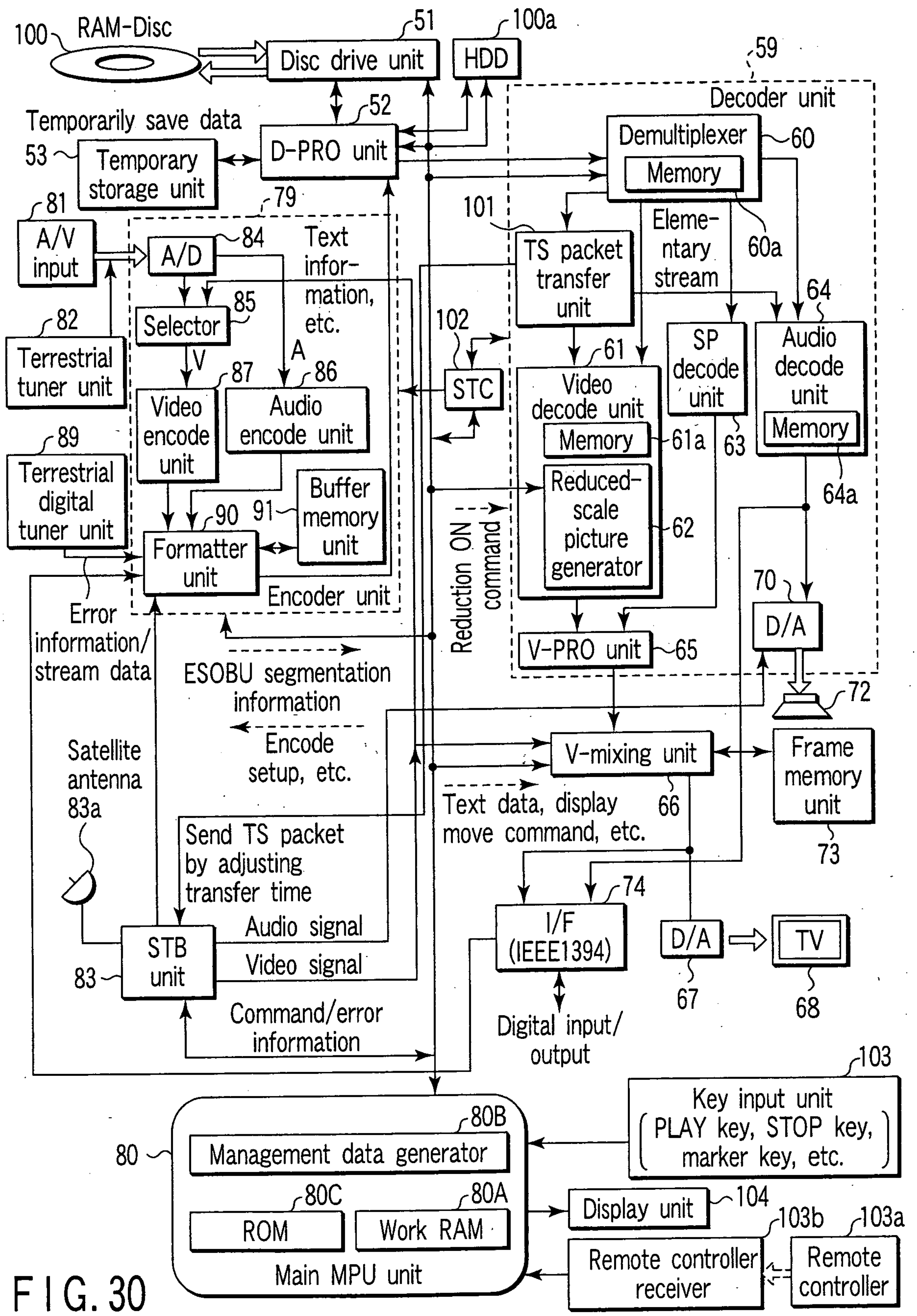
100
RAM-Disc
51
Disc drive unit
100a
HDD
59
Decoder unit
Temporarily save data
52
D-PRO unit
53
Temporary storage unit
Demultiplexer
Memory
60
60a
81
A/V input
79
84
A/D
Text information, etc.
101
TS packet transfer unit
Elementary stream
64
85
Selector
82
Terrestrial tuner unit
V
A
87
86
102
STC
61
SP decode unit
Audio decode unit
Video encode unit
Audio encode unit
Video decode unit
Memory
61a
63
Memory
64a
89
Terrestrial digital tuner unit
90
91
Buffer memory unit
Formatter unit
Reduction ON command
Reduced-scale picture generator
62
Encoder unit
70
D/A
Error information/stream data
V-PRO unit
65
ESOBU segmentation information
72
Satellite antenna 83a
Encode setup, etc.
V-mixing unit
Frame memory unit
Text data, display move command, etc.
66
73
Send TS packet by adjusting transfer time
74
Audio signal
I/F (IEEE1394)
D/A
TV
83
STB unit
Video signal
67
68
Command/error information
Digital input/output
103
Key input unit
( PLAY key, STOP key, marker key, etc. )
80B
80
Management data generator
80C
80A
104
Display unit
103b
103a
ROM
Work RAM
Remote controller receiver
Remote controller
Main MPU unit

FIG. 30

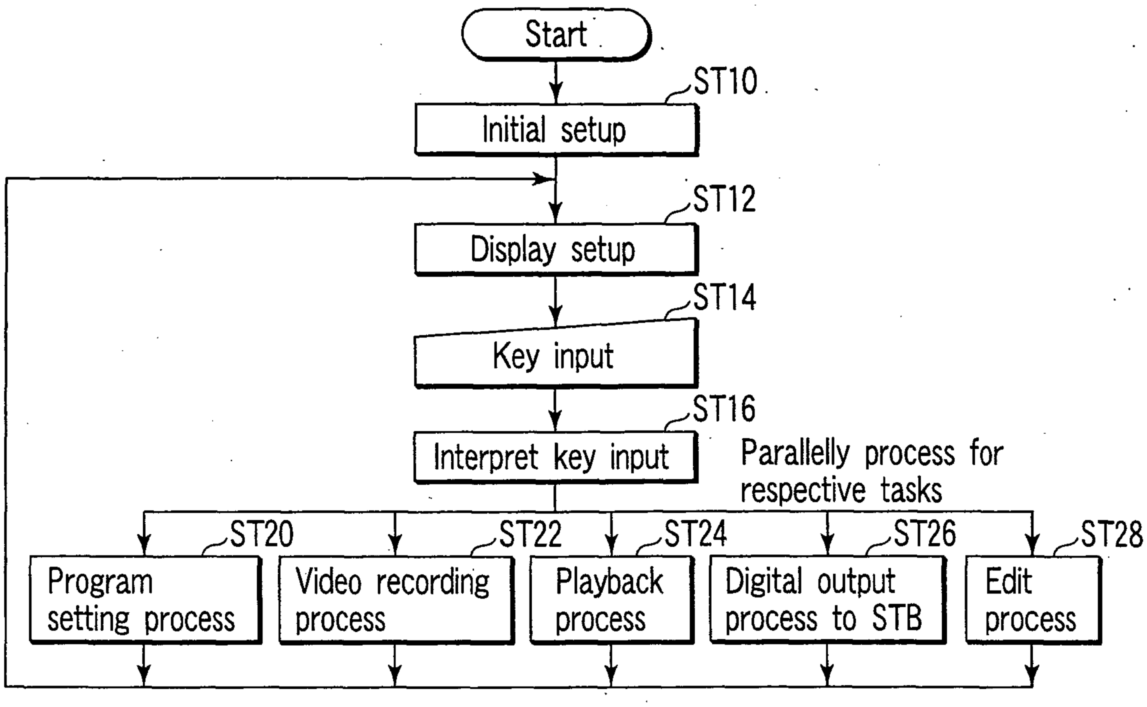
Start
ST10
Initial setup
ST12
Display setup
ST14
Key input
ST16
Interpret key input
Parallelly process for respective tasks
ST20
Program setting process
ST22
Video recording process
ST24
Playback process
ST26
Digital output process to STB
ST28
Edit process

FIG. 31

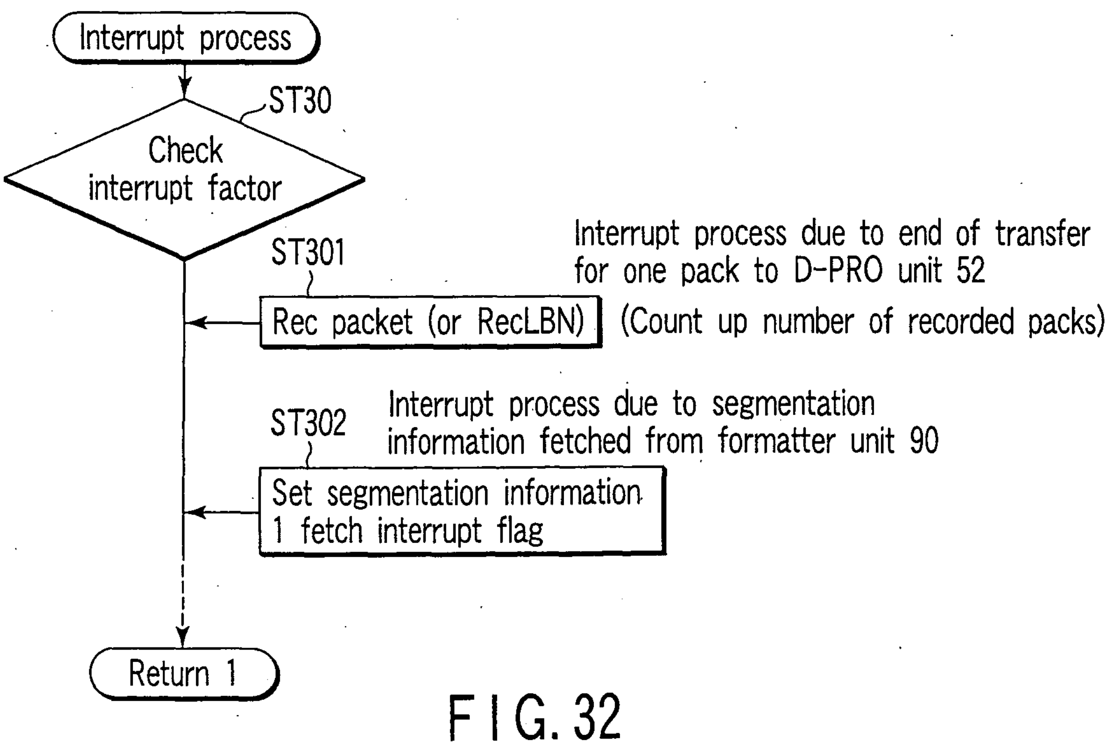
Interrupt process
ST30
Check interrupt factor
ST301
Interrupt process due to end of transfer for one pack to D-PRO unit 52
Rec packet (or RecLBN)
(Count up number of recorded packs)
ST302
Interrupt process due to segmentation information fetched from formatter unit 90
Set segmentation information 1 fetch interrupt flag
Return 1

FIG. 32

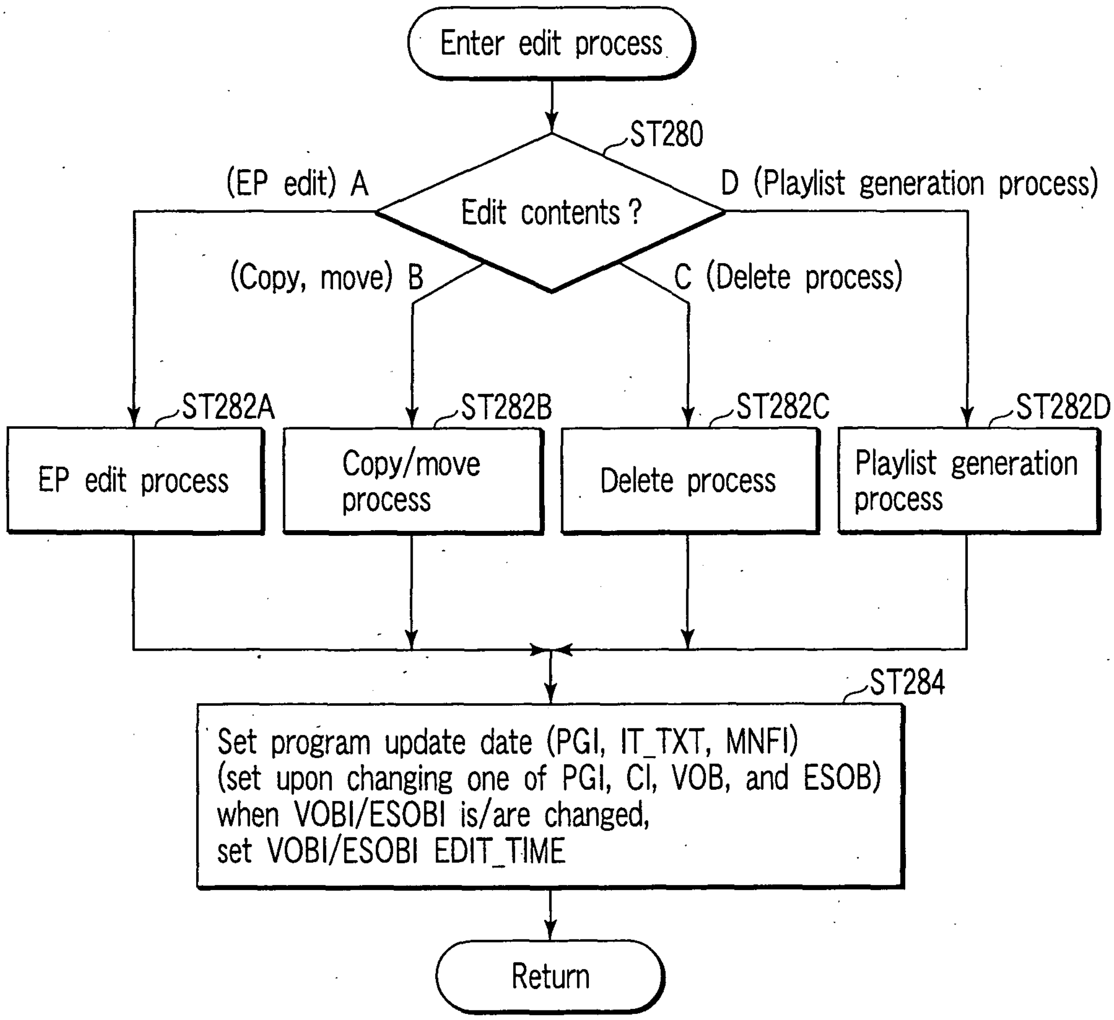

Enter edit process
ST280
Edit contents ?
(EP edit) A
D (Playlist generation process)
(Copy, move) B
C (Delete process)
ST282A
ST282B
ST282C
ST282D
EP edit process
Copy/move process
Delete process
Playlist generation process
ST284
Set program update date (PGI, IT_TXT, MNFI)
(set upon changing one of PGI, CI, VOB, and ESOB)
when VOBI/ESOBI is/are changed,
set VOBI/ESOBI EDIT_TIME
Return


F I G. 33

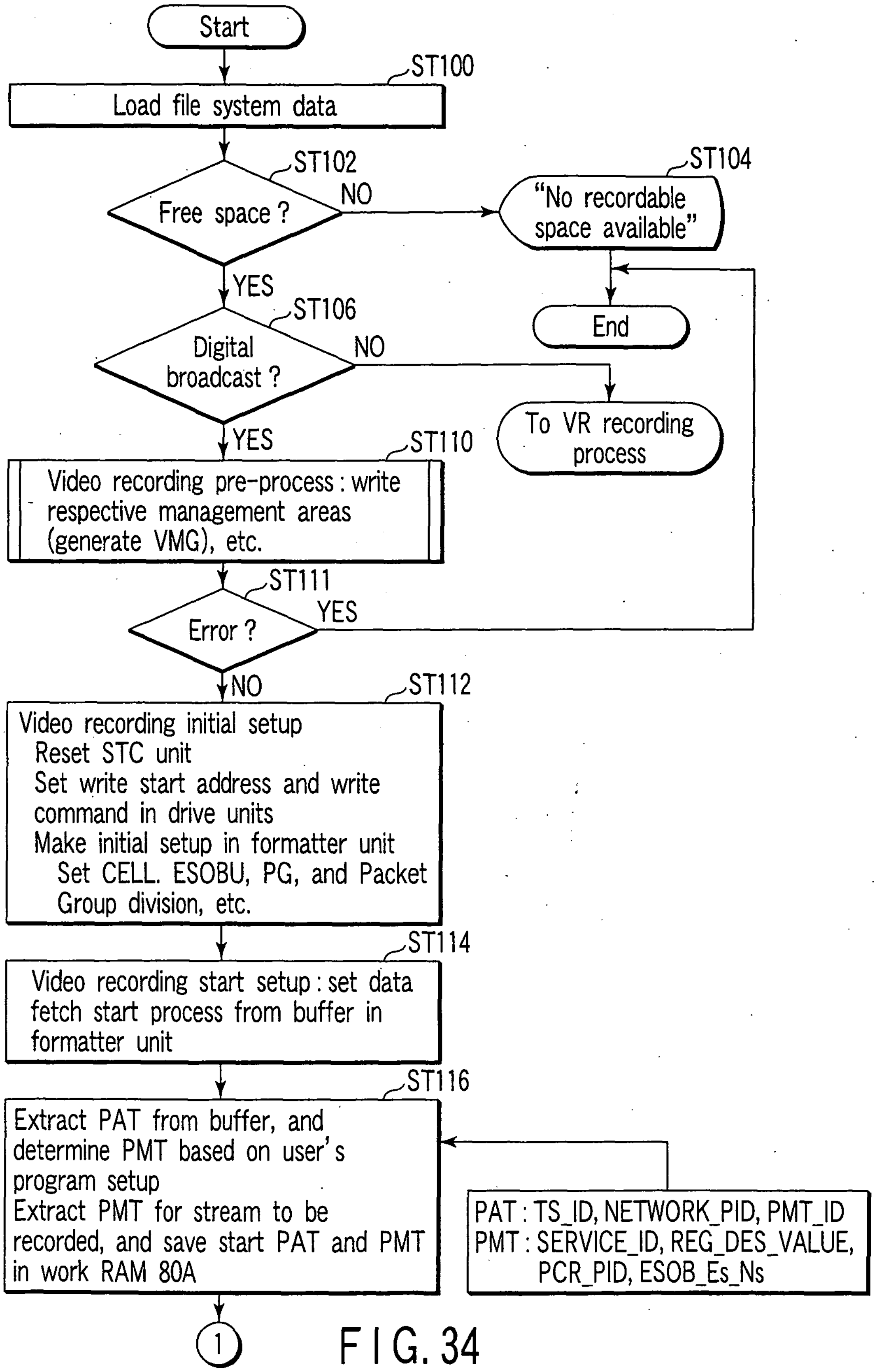
Start
ST100
Load file system data
ST102
Free space ?
NO
ST104
"No recordable space available"
YES
ST106
Digital broadcast ?
NO
End
To VR recording process
YES
ST110
Video recording pre-process : write respective management areas (generate VMG), etc.
ST111
Error ?
YES
NO
ST112
Video recording initial setup
Reset STC unit
Set write start address and write command in drive units
Make initial setup in formatter unit
Set CELL. ESOBU, PG, and Packet Group division, etc.
ST114
Video recording start setup : set data fetch start process from buffer in formatter unit
ST116
Extract PAT from buffer, and determine PMT based on user's program setup
Extract PMT for stream to be recorded, and save start PAT and PMT in work RAM 80A
PAT : TS_ID, NETWORK_PID, PMT_ID
PMT : SERVICE_ID, REG_DES_VALUE, PCR_PID, ESOB_Es_Ns
1

FIG. 34

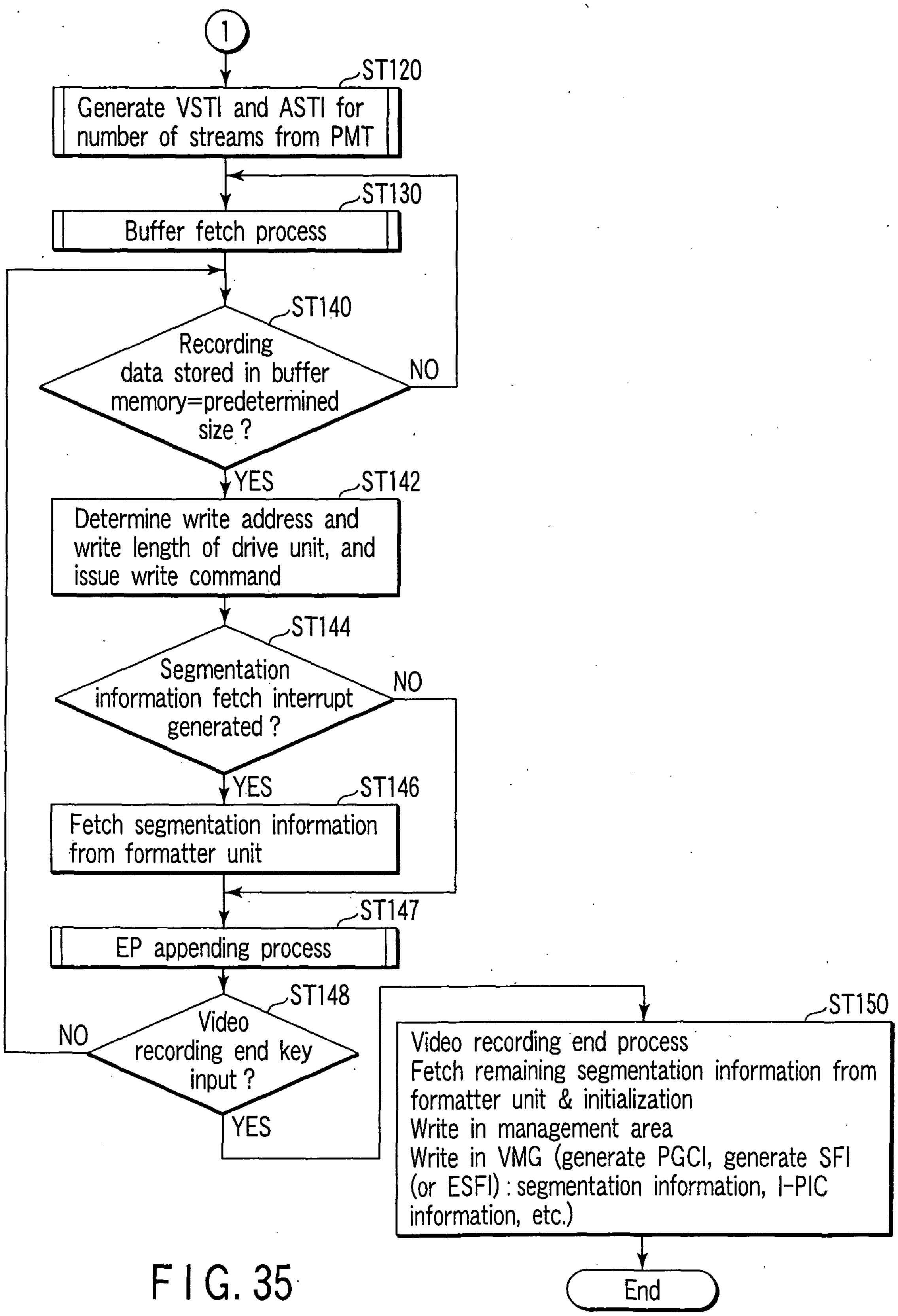
1
ST120
Generate VSTI and ASTI for number of streams from PMT
ST130
Buffer fetch process
ST140
Recording data stored in buffer memory=predetermined size ?
NO
YES
ST142
Determine write address and write length of drive unit, and issue write command
ST144
Segmentation information fetch interrupt generated ?
NO
YES
ST146
Fetch segmentation information from formatter unit
ST147
EP appending process
ST148
Video recording end key input ?
NO
YES
ST150
Video recording end process
Fetch remaining segmentation information from formatter unit & initialization
Write in management area
Write in VMG (generate PGCI, generate SFI (or ESFI) : segmentation information, I-PIC information, etc.)
End

F I G. 35

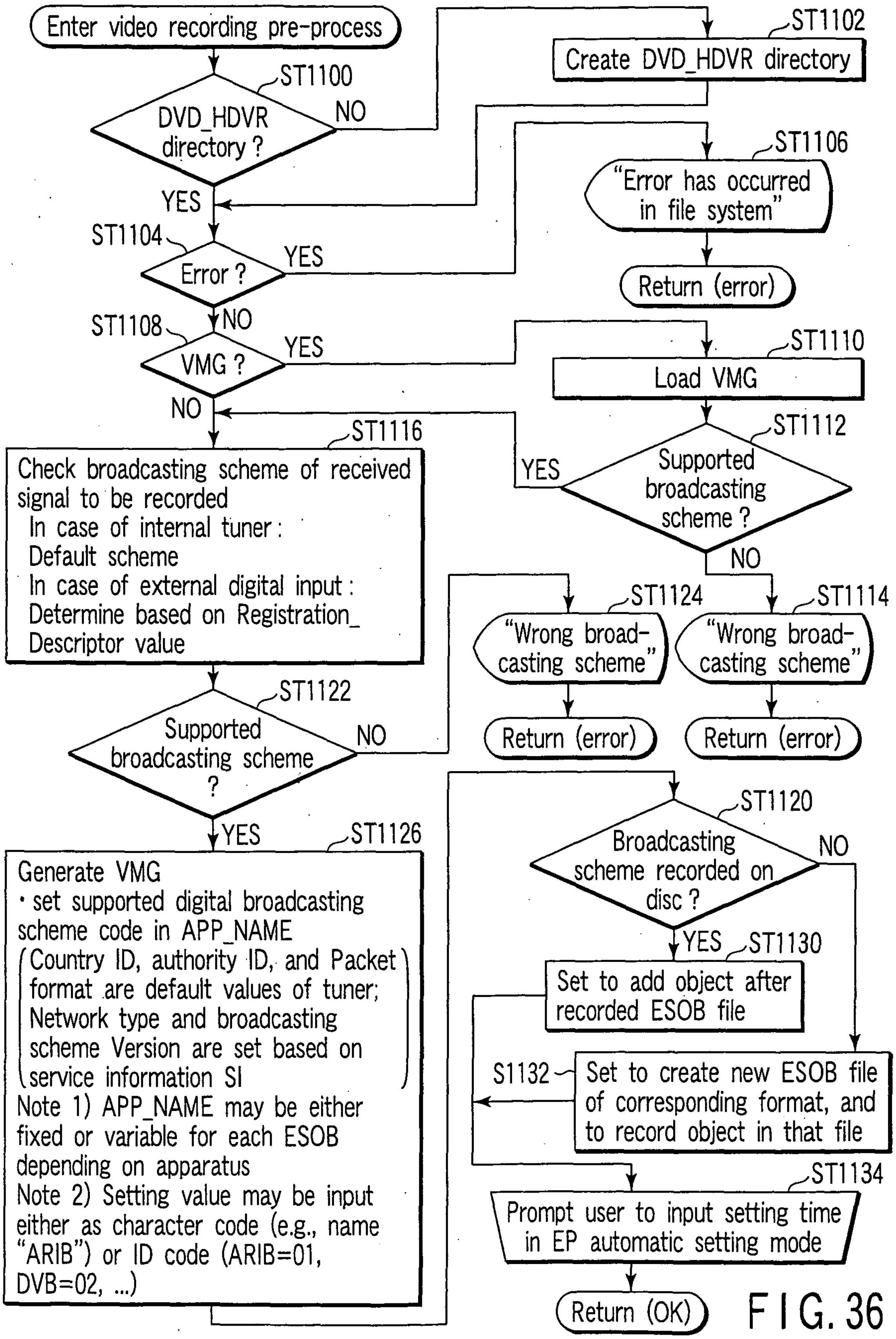
Enter video recording pre-process
ST1100
DVD_HDVR directory ?
NO
YES
ST1102
Create DVD_HDVR directory
ST1104
Error ?
YES
NO
ST1106
"Error has occurred in file system"
Return (error)
ST1108
VMG ?
YES
NO
ST1110
Load VMG
ST1112
Supported broadcasting scheme ?
YES
NO
ST1116
Check broadcasting scheme of received signal to be recorded
In case of internal tuner:
Default scheme
In case of external digital input:
Determine based on Registration_ Descriptor value
ST1122
Supported broadcasting scheme ?
NO
YES
ST1124
"Wrong broad-casting scheme"
Return (error)
ST1114
"Wrong broad-casting scheme"
Return (error)
ST1126
Generate VMG
• set supported digital broadcasting scheme code in APP_NAME
(Country ID, authority ID, and Packet format are default values of tuner; Network type and broadcasting scheme Version are set based on service information SI)
Note 1) APP_NAME may be either fixed or variable for each ESOB depending on apparatus
Note 2) Setting value may be input either as character code (e.g., name "ARIB") or ID code (ARIB=01, DVB=02, ...)
ST1120
Broadcasting scheme recorded on disc ?
NO
YES
ST1130
Set to add object after recorded ESOB file
S1132
Set to create new ESOB file of corresponding format, and to record object in that file
ST1134
Prompt user to input setting time in EP automatic setting mode
Return (OK)

FIG. 36

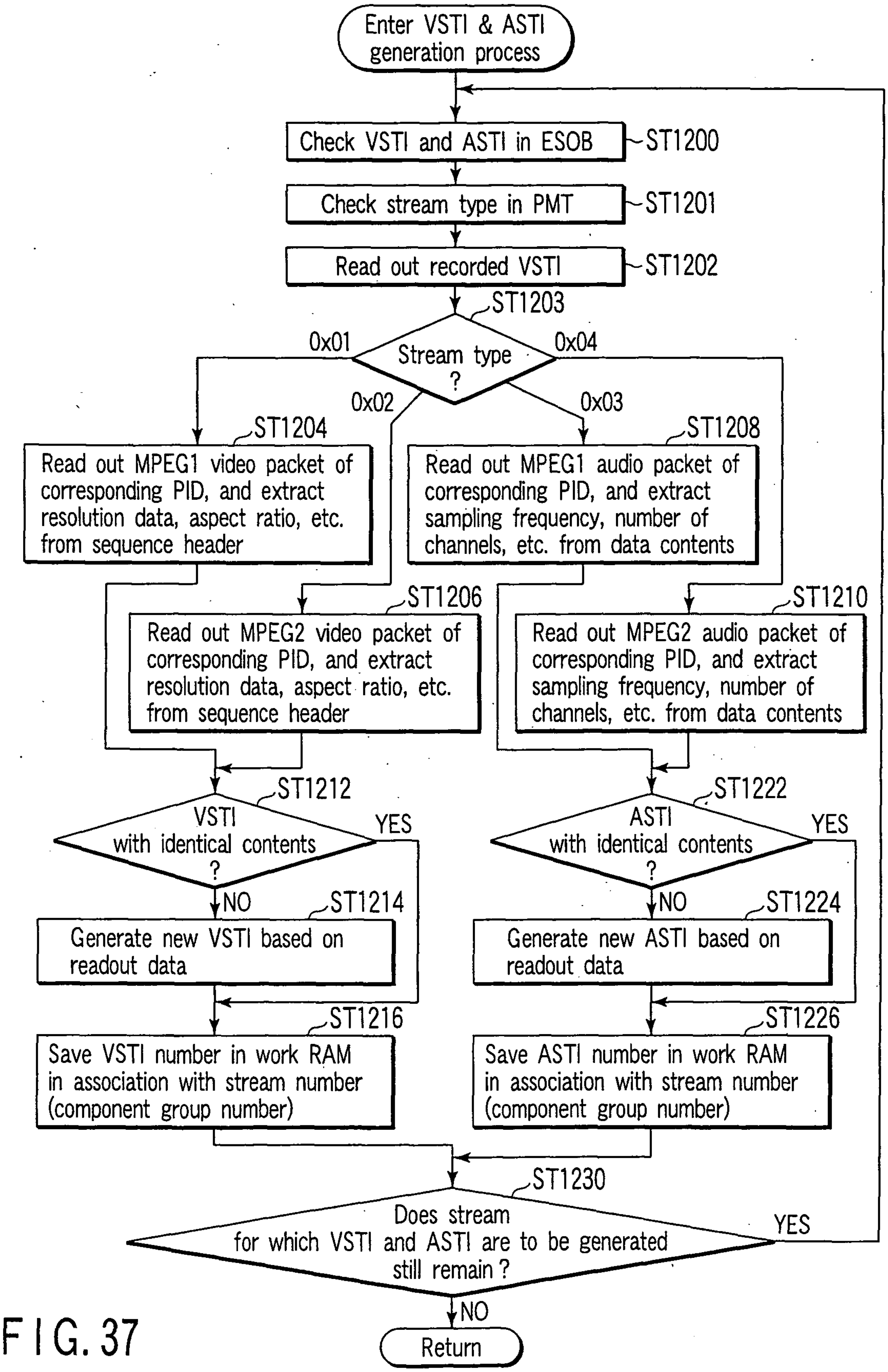
Enter VSTI & ASTI generation process
Check VSTI and ASTI in ESOB
ST1200
Check stream type in PMT
ST1201
Read out recorded VSTI
ST1202
ST1203
Stream type ?
0x01
0x02
0x03
0x04
ST1204
Read out MPEG1 video packet of corresponding PID, and extract resolution data, aspect ratio, etc. from sequence header
ST1208
Read out MPEG1 audio packet of corresponding PID, and extract sampling frequency, number of channels, etc. from data contents
ST1206
Read out MPEG2 video packet of corresponding PID, and extract resolution data, aspect ratio, etc. from sequence header
ST1210
Read out MPEG2 audio packet of corresponding PID, and extract sampling frequency, number of channels, etc. from data contents
ST1212
VSTI with identical contents ?
YES
NO
ST1214
Generate new VSTI based on readout data
ST1216
Save VSTI number in work RAM in association with stream number (component group number)
ST1222
ASTI with identical contents ?
YES
NO
ST1224
Generate new ASTI based on readout data
ST1226
Save ASTI number in work RAM in association with stream number (component group number)
ST1230
Does stream for which VSTI and ASTI are to be generated still remain ?
YES
NO
Return

FIG. 37

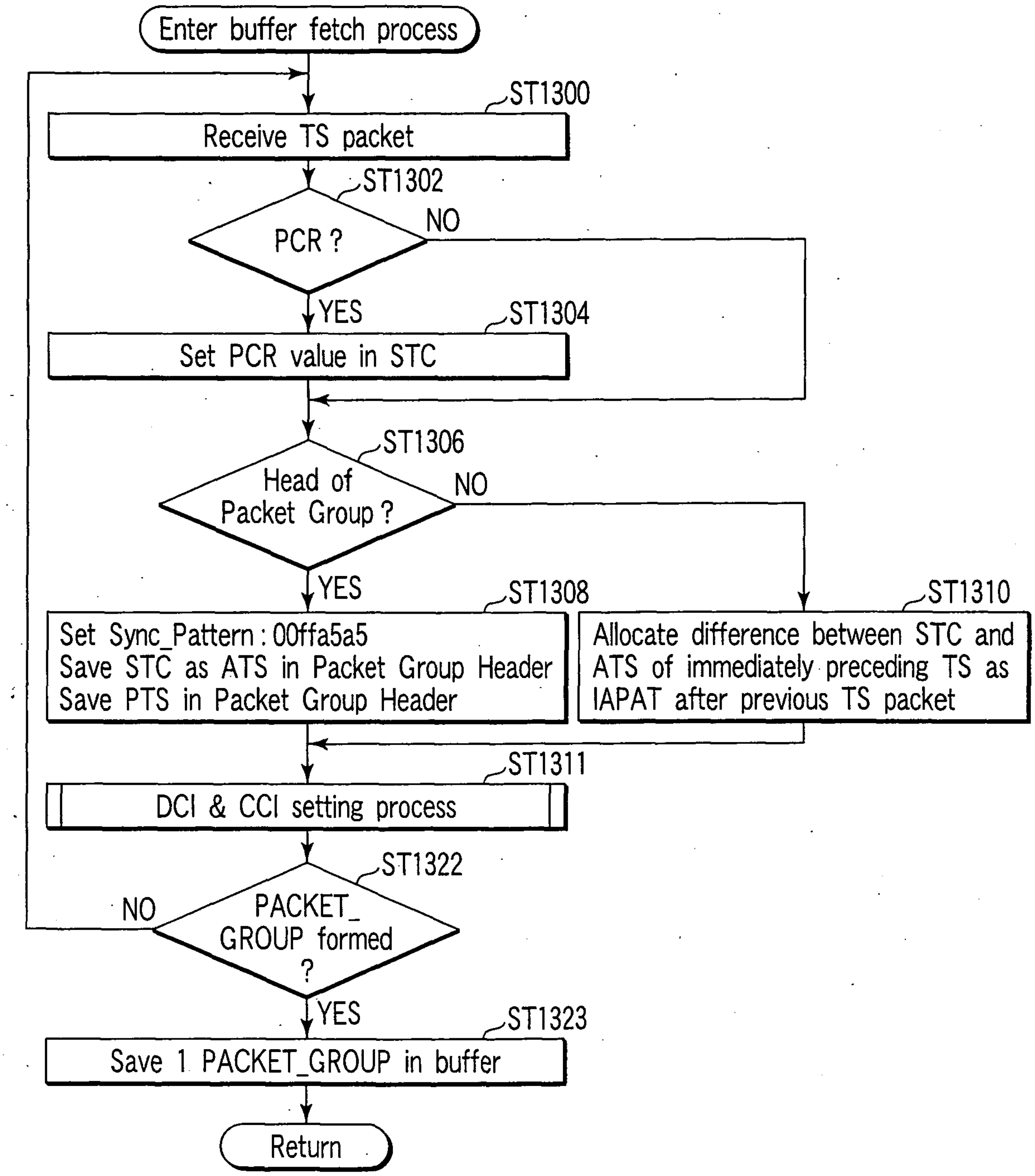

Enter buffer fetch process
ST1300
Receive TS packet
ST1302
PCR ?
NO
YES
ST1304
Set PCR value in STC
ST1306
Head of Packet Group ?
NO
YES
ST1308
Set Sync_Pattern : 00ffa5a5
Save STC as ATS in Packet Group Header
Save PTS in Packet Group Header
ST1310
Allocate difference between STC and ATS of immediately preceding TS as IAPAT after previous TS packet
ST1311
DCI & CCI setting process
ST1322
PACKET_ GROUP formed ?
NO
YES
ST1323
Save 1 PACKET_GROUP in buffer
Return


F I G. 38

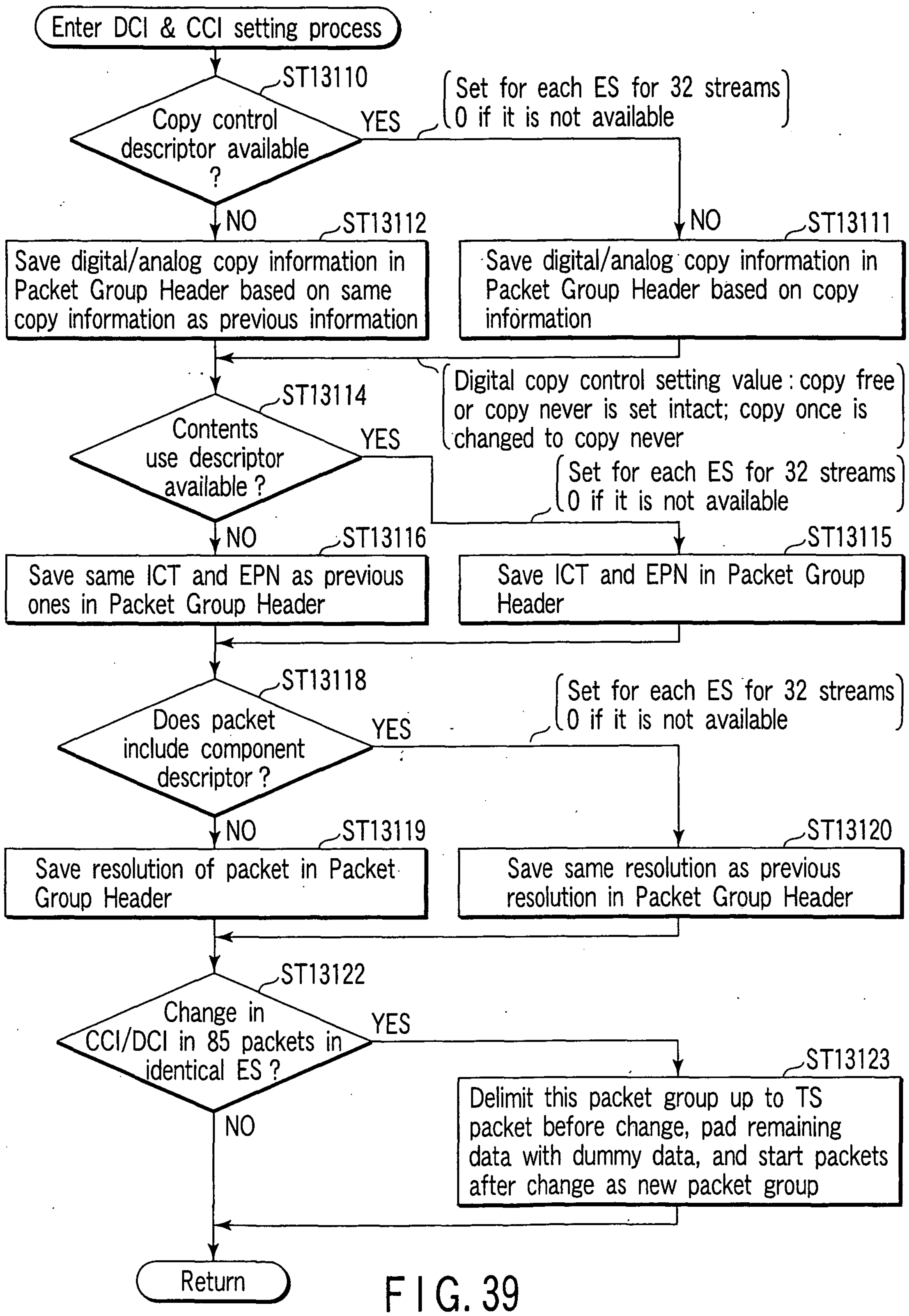

Enter DCI & CCI setting process
ST13110
Copy control descriptor available ?
YES
Set for each ES for 32 streams
0 if it is not available
NO
ST13112
Save digital/analog copy information in Packet Group Header based on same copy information as previous information
NO
ST13111
Save digital/analog copy information in Packet Group Header based on copy information
Digital copy control setting value: copy free or copy never is set intact; copy once is changed to copy never
ST13114
Contents use descriptor available ?
YES
Set for each ES for 32 streams
0 if it is not available
NO
ST13116
Save same ICT and EPN as previous ones in Packet Group Header
ST13115
Save ICT and EPN in Packet Group Header
ST13118
Does packet include component descriptor ?
YES
Set for each ES for 32 streams
0 if it is not available
NO
ST13119
Save resolution of packet in Packet Group Header
ST13120
Save same resolution as previous resolution in Packet Group Header
ST13122
Change in CCI/DCI in 85 packets in identical ES ?
YES
ST13123
Delimit this packet group up to TS packet before change, pad remaining data with dummy data, and start packets after change as new packet group
NO
Return


F I G. 39

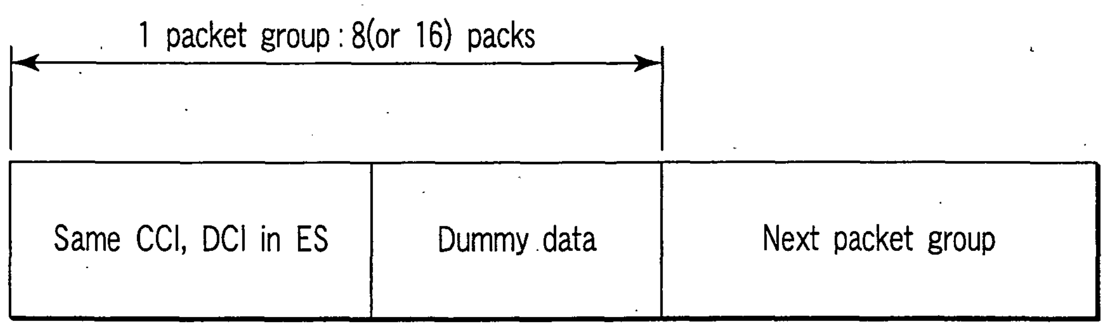
1 packet group : 8(or 16) packs
Same CCI, DCI in ES
Dummy data
Next packet group

FIG. 40

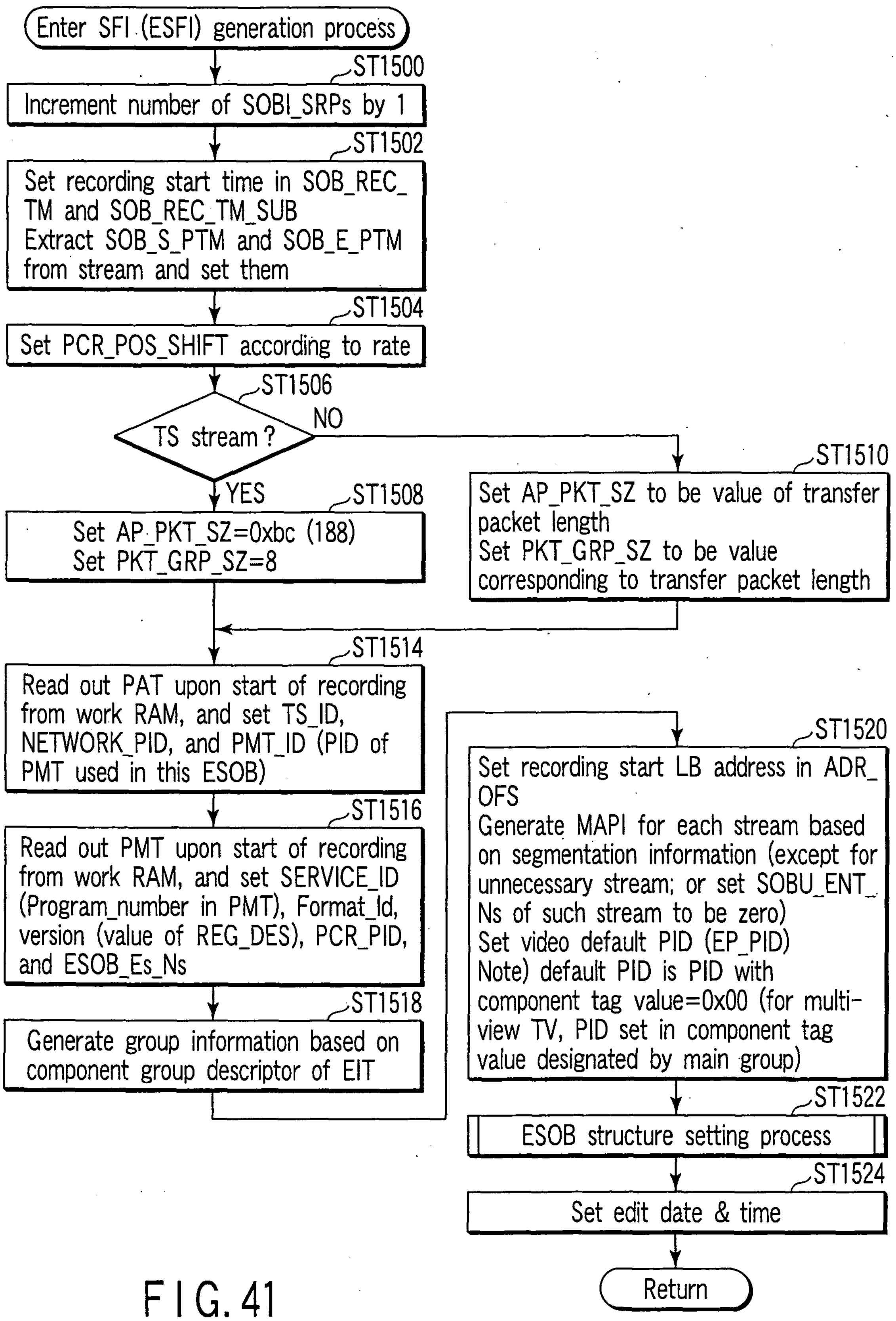

Enter SFI (ESFI) generation process
ST1500
Increment number of SOBI_SRPs by 1
ST1502
Set recording start time in SOB_REC_TM and SOB_REC_TM_SUB
Extract SOB_S_PTM and SOB_E_PTM from stream and set them
ST1504
Set PCR_POS_SHIFT according to rate
ST1506
TS stream ?
NO
ST1510
Set AP_PKT_SZ to be value of transfer packet length
Set PKT_GRP_SZ to be value corresponding to transfer packet length
YES
ST1508
Set AP_PKT_SZ=0xbc (188)
Set PKT_GRP_SZ=8
ST1514
Read out PAT upon start of recording from work RAM, and set TS_ID, NETWORK_PID, and PMT_ID (PID of PMT used in this ESOB)
ST1516
Read out PMT upon start of recording from work RAM, and set SERVICE_ID (Program_number in PMT), Format_Id, version (value of REG_DES), PCR_PID, and ESOB_Es_Ns
ST1518
Generate group information based on component group descriptor of EIT
ST1520
Set recording start LB address in ADR_OFS
Generate MAPI for each stream based on segmentation information (except for unnecessary stream; or set SOBU_ENT_Ns of such stream to be zero)
Set video default PID (EP_PID)
Note) default PID is PID with component tag value=0x00 (for multi-view TV, PID set in component tag value designated by main group)
ST1522
ESOB structure setting process
ST1524
Set edit date & time
Return


FIG. 41

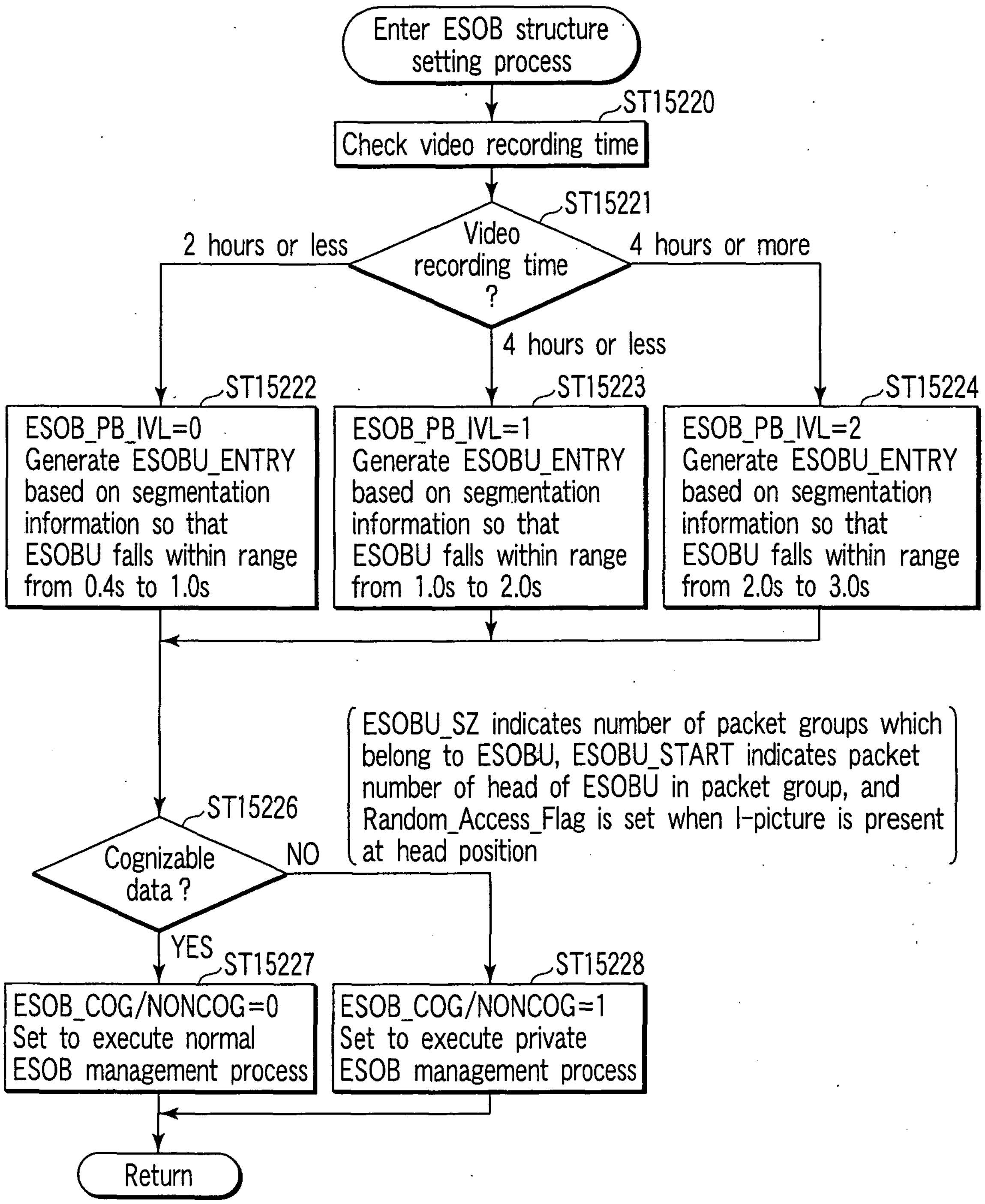
Enter ESOB structure setting process
ST15220
Check video recording time
ST15221
Video recording time ?
2 hours or less
4 hours or more
4 hours or less
ST15222
ESOB_PB_IVL=0
Generate ESOBU_ENTRY based on segmentation information so that ESOBU falls within range from 0.4s to 1.0s
ST15223
ESOB_PB_IVL=1
Generate ESOBU_ENTRY based on segmentation information so that ESOBU falls within range from 1.0s to 2.0s
ST15224
ESOB_PB_IVL=2
Generate ESOBU_ENTRY based on segmentation information so that ESOBU falls within range from 2.0s to 3.0s
ESOBU_SZ indicates number of packet groups which belong to ESOBU, ESOBU_START indicates packet number of head of ESOBU in packet group, and Random_Access_Flag is set when I-picture is present at head position
ST15226
Cognizable data ?
NO
YES
ST15227
ESOB_COG/NONCOG=0
Set to execute normal ESOB management process
ST15228
ESOB_COG/NONCOG=1
Set to execute private ESOB management process
Return

FIG. 42

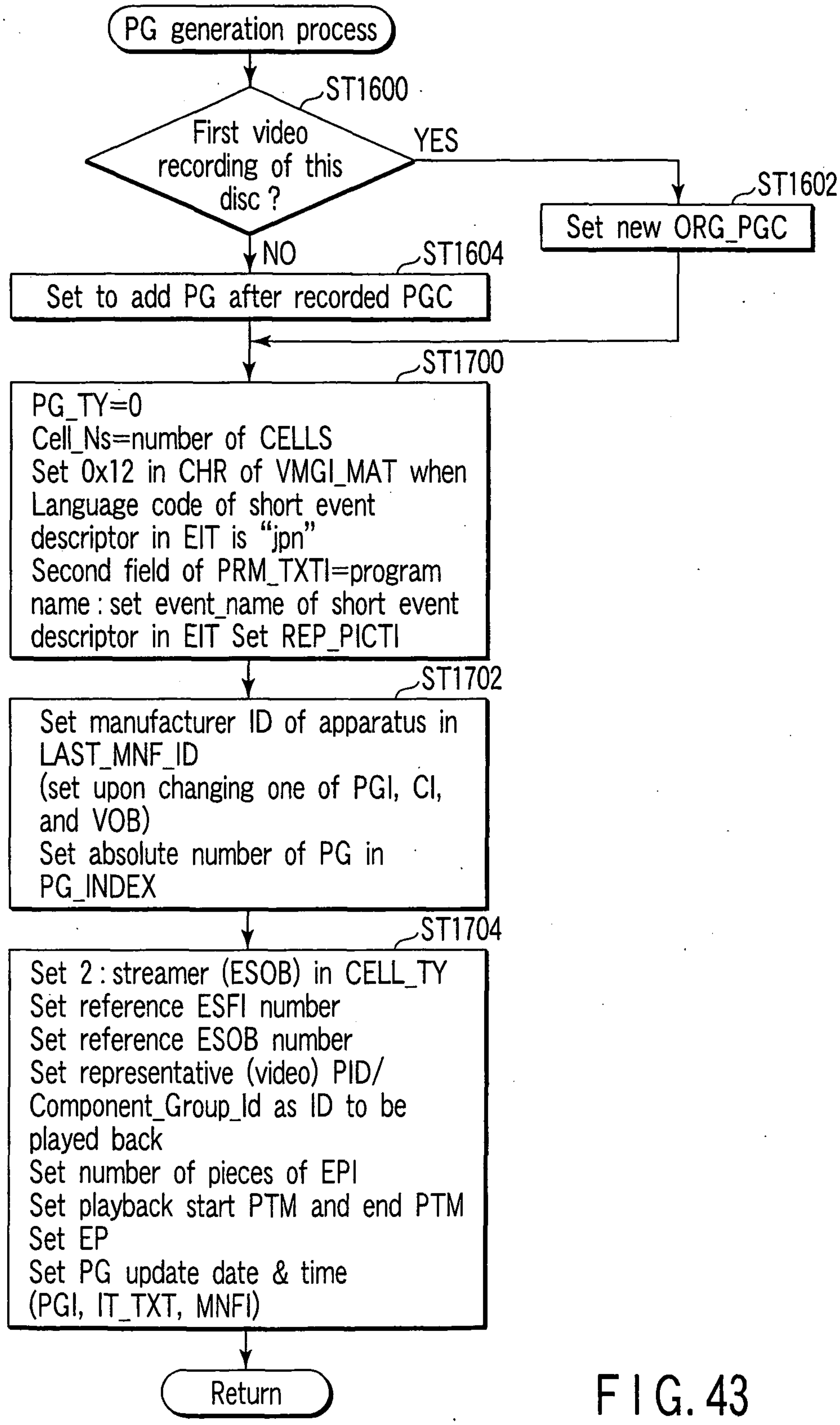
PG generation process
ST1600
First video recording of this disc ?
YES
NO
ST1602
Set new ORG_PGC
ST1604
Set to add PG after recorded PGC
ST1700
PG_TY=0
Cell_Ns=number of CELLS
Set 0x12 in CHR of VMGI_MAT when Language code of short event descriptor in EIT is "jpn"
Second field of PRM_TXTI=program name : set event_name of short event descriptor in EIT Set REP_PICTI
ST1702
Set manufacturer ID of apparatus in LAST_MNF_ID
(set upon changing one of PGI, CI, and VOB)
Set absolute number of PG in PG_INDEX
ST1704
Set 2 : streamer (ESOB) in CELL_TY
Set reference ESFI number
Set reference ESOB number
Set representative (video) PID/ Component_Group_Id as ID to be played back
Set number of pieces of EPI
Set playback start PTM and end PTM
Set EP
Set PG update date & time
(PGI, IT_TXT, MNFI)
Return

FIG. 43

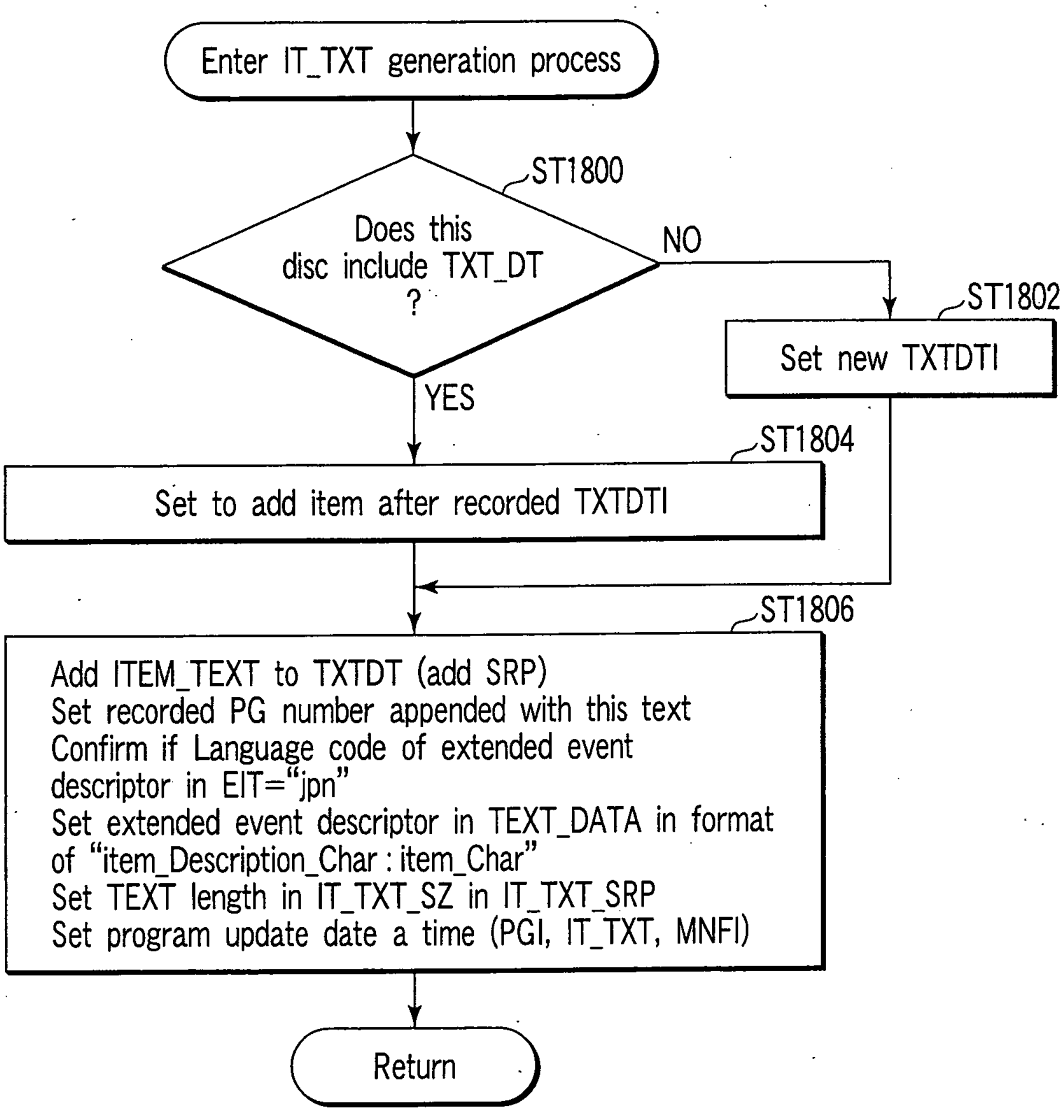
Enter IT_TXT generation process
ST1800
Does this disc include TXT_DT ?
NO
YES
ST1802
Set new TXTDTI
ST1804
Set to add item after recorded TXTDTI
ST1806
Add ITEM_TEXT to TXTDT (add SRP)
Set recorded PG number appended with this text
Confirm if Language code of extended event descriptor in EIT="jpn"
Set extended event descriptor in TEXT_DATA in format of "item_Description_Char : item_Char"
Set TEXT length in IT_TXT_SZ in IT_TXT_SRP
Set program update date a time (PGI, IT_TXT, MNFI)
Return

FIG. 44

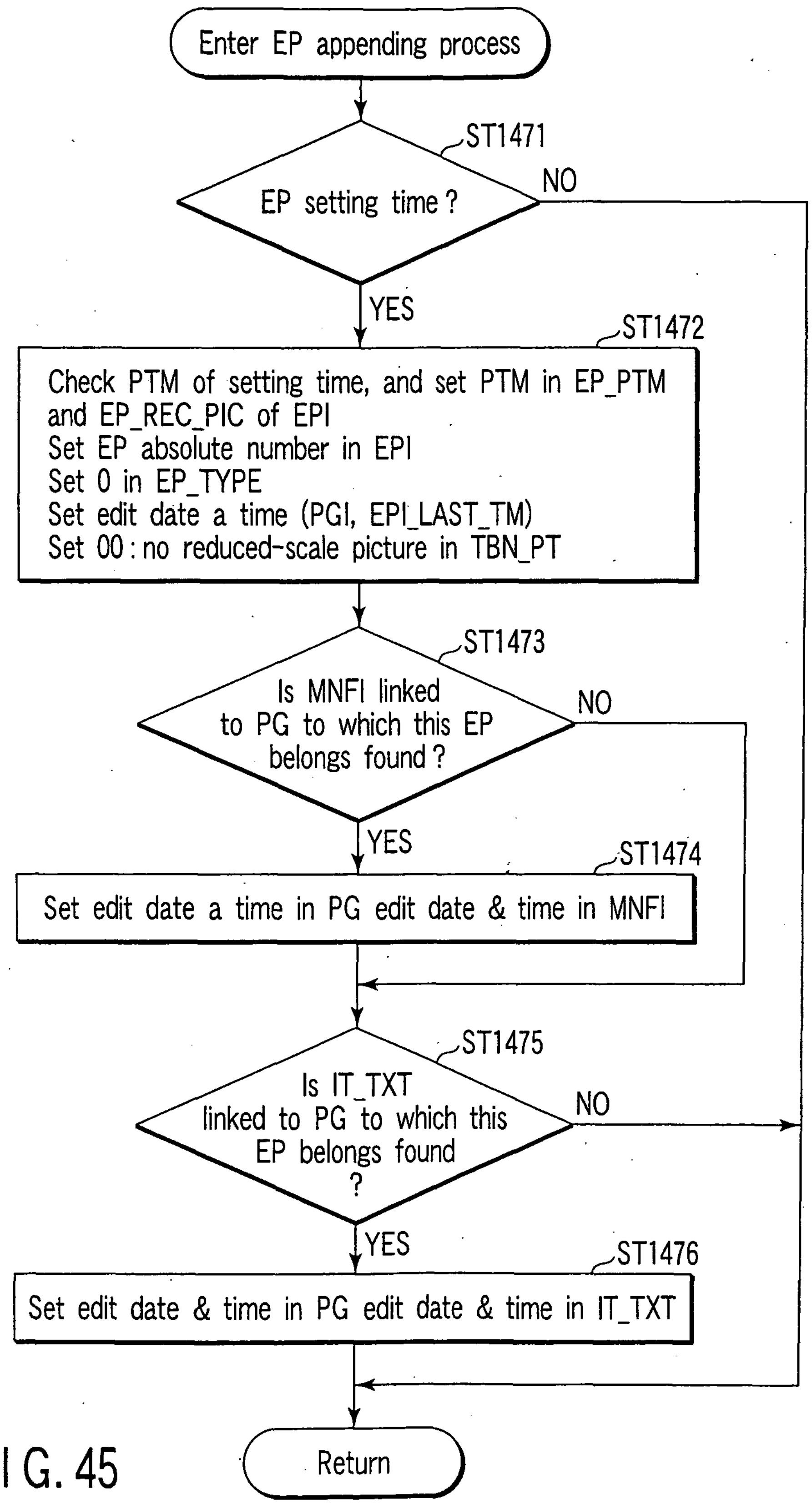
Enter EP appending process
ST1471
EP setting time ?
NO
YES
ST1472
Check PTM of setting time, and set PTM in EP_PTM and EP_REC_PIC of EPI
Set EP absolute number in EPI
Set 0 in EP_TYPE
Set edit date a time (PGI, EPI_LAST_TM)
Set 00: no reduced-scale picture in TBN_PT
ST1473
Is MNFI linked to PG to which this EP belongs found ?
NO
YES
ST1474
Set edit date a time in PG edit date & time in MNFI
ST1475
Is IT_TXT linked to PG to which this EP belongs found ?
NO
YES
ST1476
Set edit date & time in PG edit date & time in IT_TXT
Return

F I G. 45

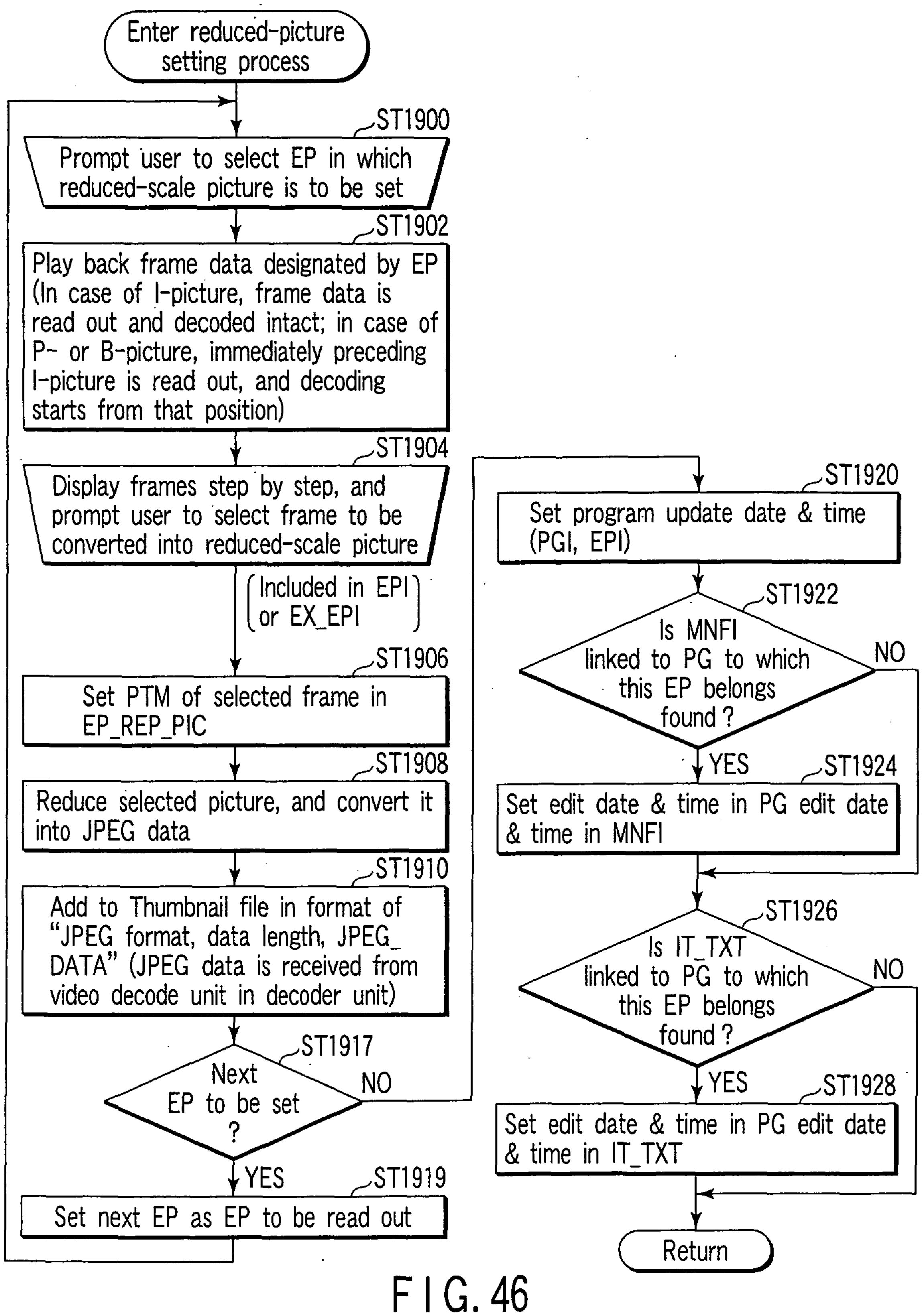
Enter reduced-picture setting process
ST1900
Prompt user to select EP in which reduced-scale picture is to be set
ST1902
Play back frame data designated by EP (In case of I-picture, frame data is read out and decoded intact; in case of P- or B-picture, immediately preceding I-picture is read out, and decoding starts from that position)
ST1904
Display frames step by step, and prompt user to select frame to be converted into reduced-scale picture
(Included in EPI or EX_EPI)
ST1906
Set PTM of selected frame in EP_REP_PIC
ST1908
Reduce selected picture, and convert it into JPEG data
ST1910
Add to Thumbnail file in format of "JPEG format, data length, JPEG_DATA" (JPEG data is received from video decode unit in decoder unit)
ST1917
Next EP to be set ?
NO
YES
ST1919
Set next EP as EP to be read out
ST1920
Set program update date & time (PGI, EPI)
ST1922
Is MNFI linked to PG to which this EP belongs found ?
NO
YES
ST1924
Set edit date & time in PG edit date & time in MNFI
ST1926
Is IT_TXT linked to PG to which this EP belongs found ?
NO
YES
ST1928
Set edit date & time in PG edit date & time in IT_TXT
Return

F I G. 46

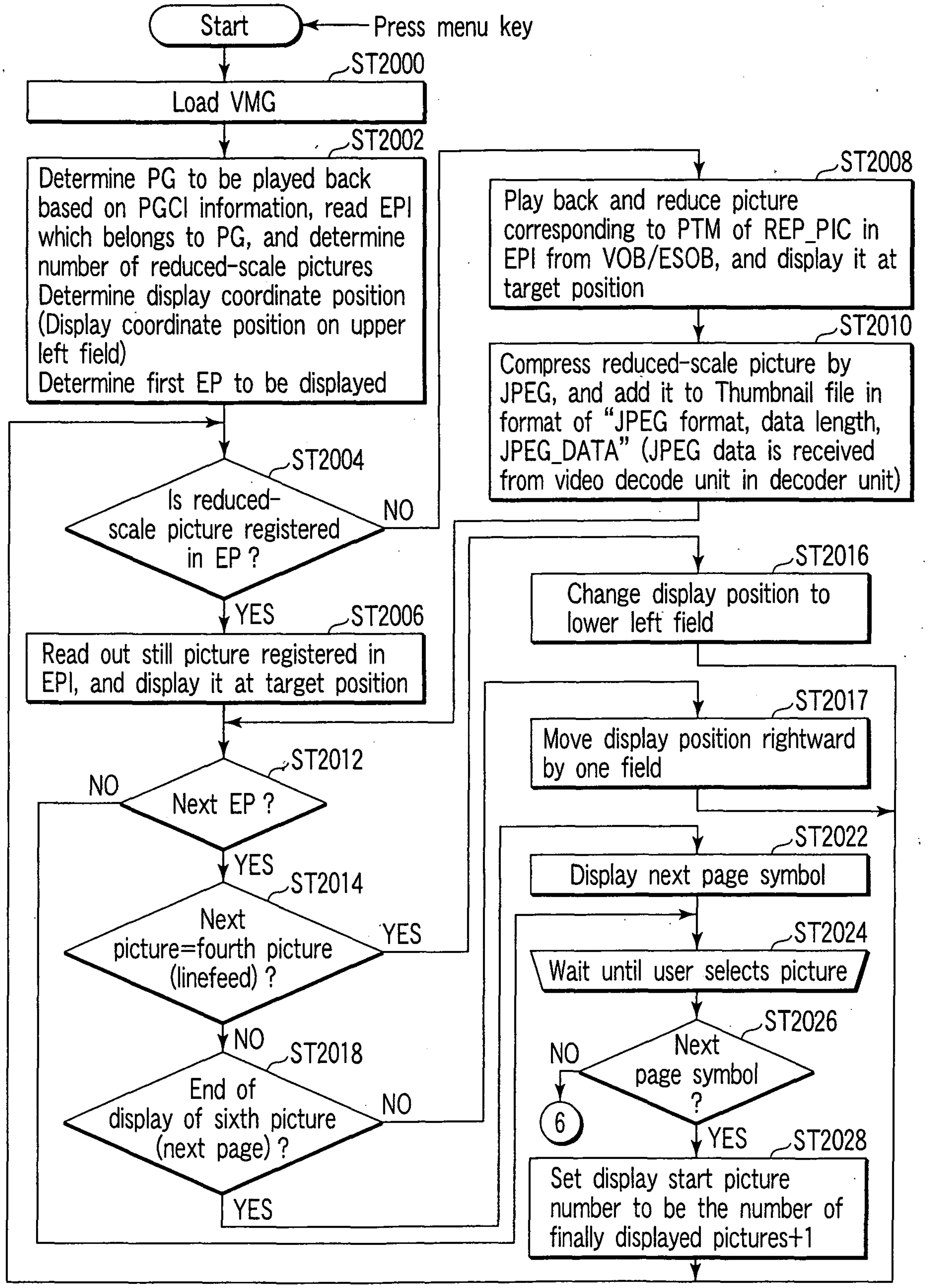
Start
Press menu key
ST2000
Load VMG
ST2002
Determine PG to be played back based on PGCI information, read EPI which belongs to PG, and determine number of reduced-scale pictures
Determine display coordinate position (Display coordinate position on upper left field)
Determine first EP to be displayed
ST2004
Is reduced-scale picture registered in EP ?
NO
YES
ST2006
Read out still picture registered in EPI, and display it at target position
ST2008
Play back and reduce picture corresponding to PTM of REP_PIC in EPI from VOB/ESOB, and display it at target position
ST2010
Compress reduced-scale picture by JPEG, and add it to Thumbnail file in format of "JPEG format, data length, JPEG_DATA" (JPEG data is received from video decode unit in decoder unit)
ST2012
Next EP ?
NO
YES
ST2014
Next picture=fourth picture (linefeed) ?
YES
NO
ST2016
Change display position to lower left field
ST2017
Move display position rightward by one field
ST2018
End of display of sixth picture (next page) ?
NO
YES
ST2022
Display next page symbol
ST2024
Wait until user selects picture
ST2026
Next page symbol ?
NO
6
YES
ST2028
Set display start picture number to be the number of finally displayed pictures+1

F I G. 47

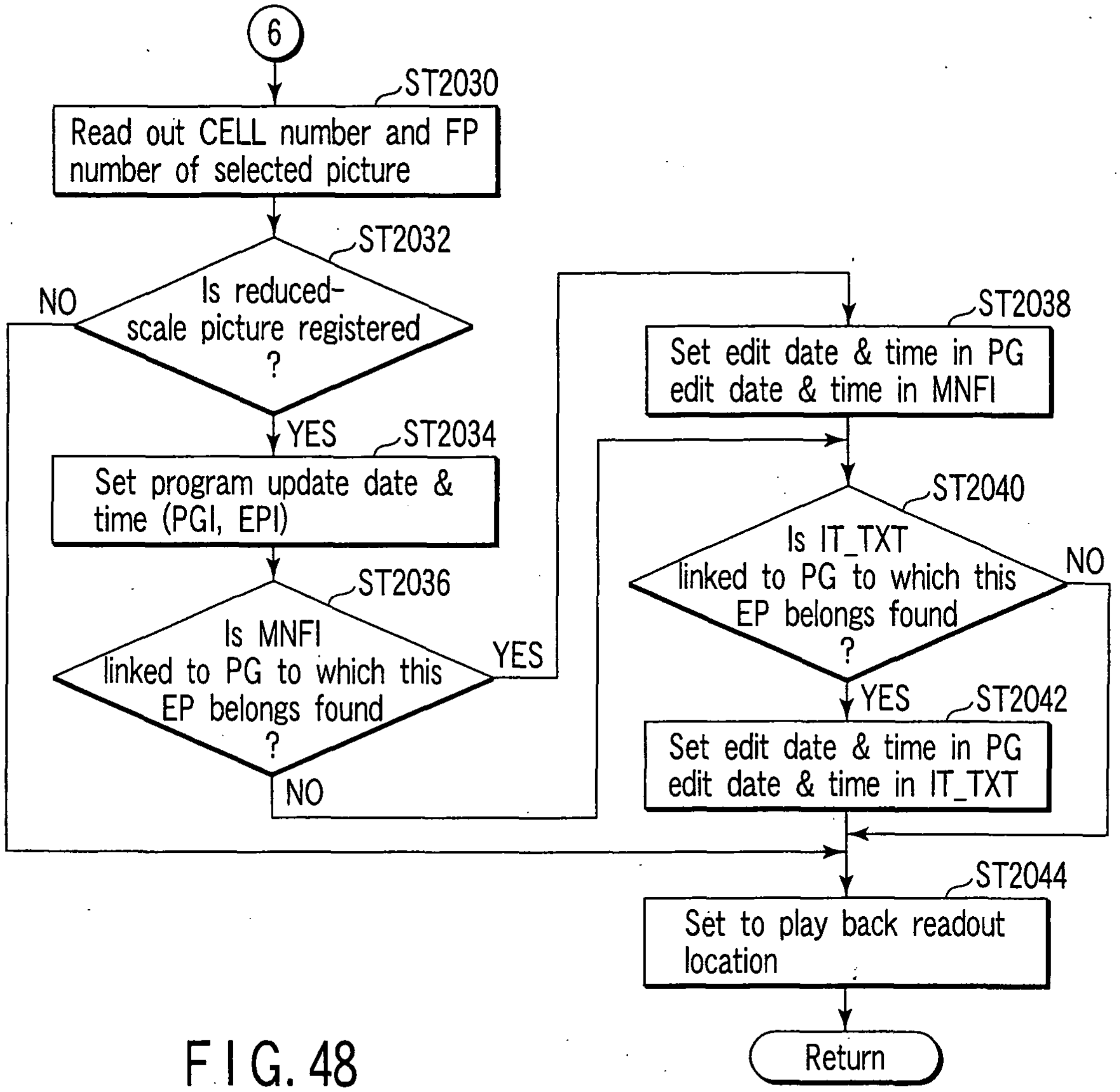
6
ST2030
Read out CELL number and FP number of selected picture
ST2032
Is reduced-scale picture registered ?
NO
YES
ST2034
Set program update date & time (PGI, EPI)
ST2036
Is MNFI linked to PG to which this EP belongs found ?
YES
NO
ST2038
Set edit date & time in PG edit date & time in MNFI
ST2040
Is IT_TXT linked to PG to which this EP belongs found ?
NO
YES
ST2042
Set edit date & time in PG edit date & time in IT_TXT
ST2044
Set to play back readout location
Return

FIG. 48

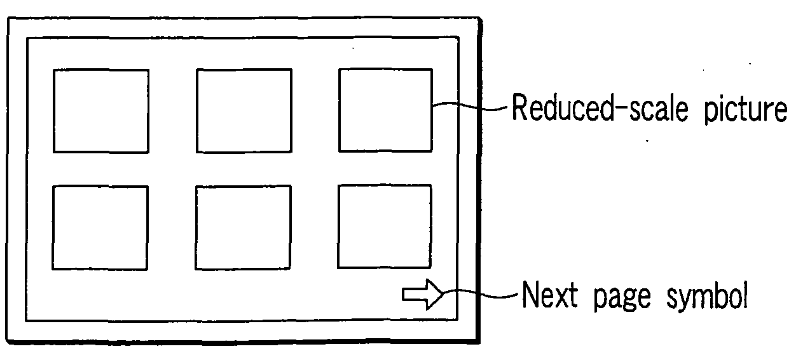
Reduced-scale picture
Next page symbol

FIG. 49

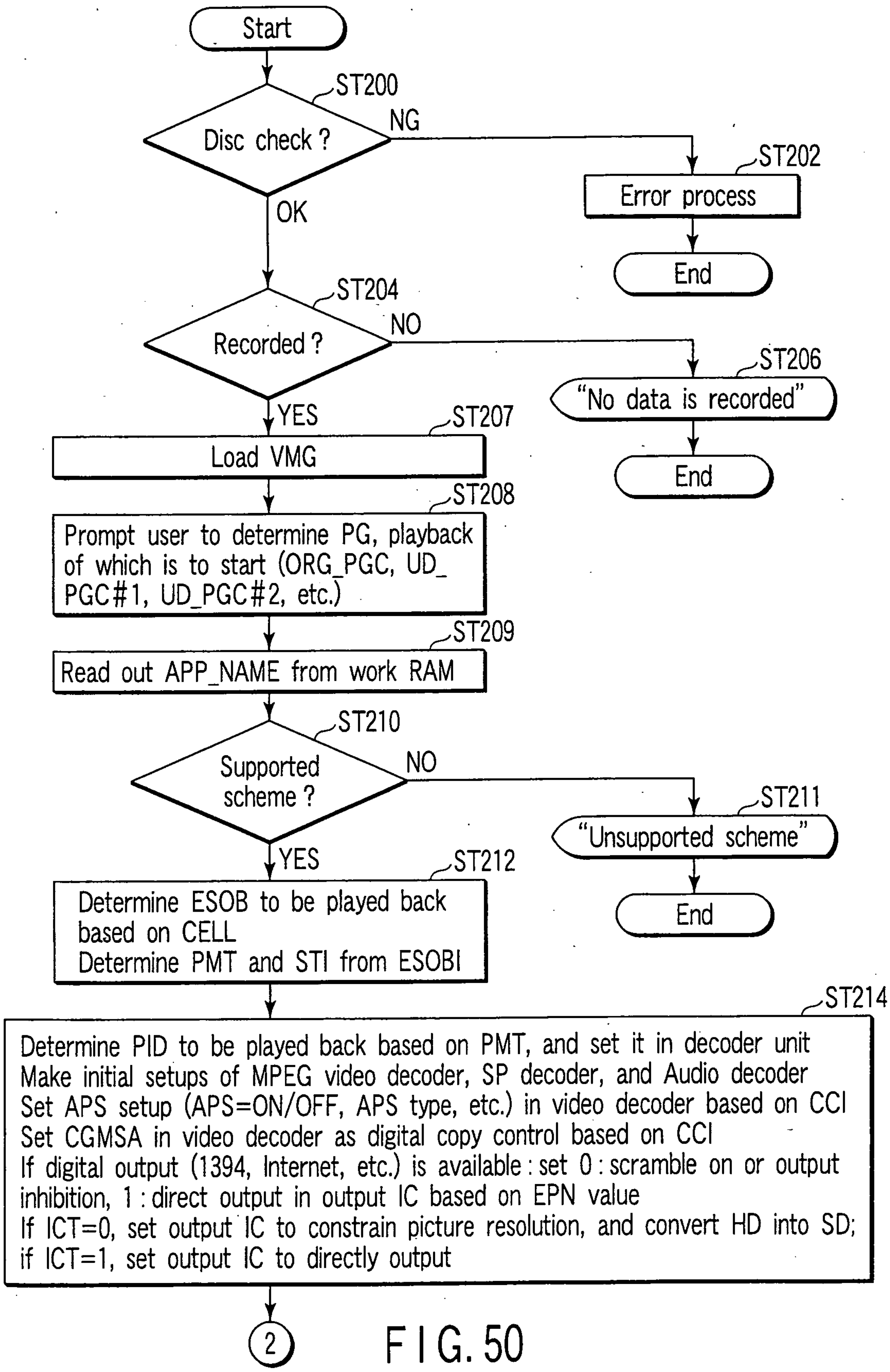
Start
ST200
Disc check ?
NG
ST202
Error process
End
OK
ST204
Recorded ?
NO
ST206
"No data is recorded"
End
YES
ST207
Load VMG
ST208
Prompt user to determine PG, playback of which is to start (ORG_PGC, UD_PGC#1, UD_PGC#2, etc.)
ST209
Read out APP_NAME from work RAM
ST210
Supported scheme ?
NO
ST211
"Unsupported scheme"
End
YES
ST212
Determine ESOB to be played back based on CELL
Determine PMT and STI from ESOBI
ST214
Determine PID to be played back based on PMT, and set it in decoder unit
Make initial setups of MPEG video decoder, SP decoder, and Audio decoder
Set APS setup (APS=ON/OFF, APS type, etc.) in video decoder based on CCI
Set CGMSA in video decoder as digital copy control based on CCI
If digital output (1394, Internet, etc.) is available : set 0 : scramble on or output inhibition, 1 : direct output in output IC based on EPN value
If ICT=0, set output IC to constrain picture resolution, and convert HD into SD; if ICT=1, set output IC to directly output
2

FIG. 50

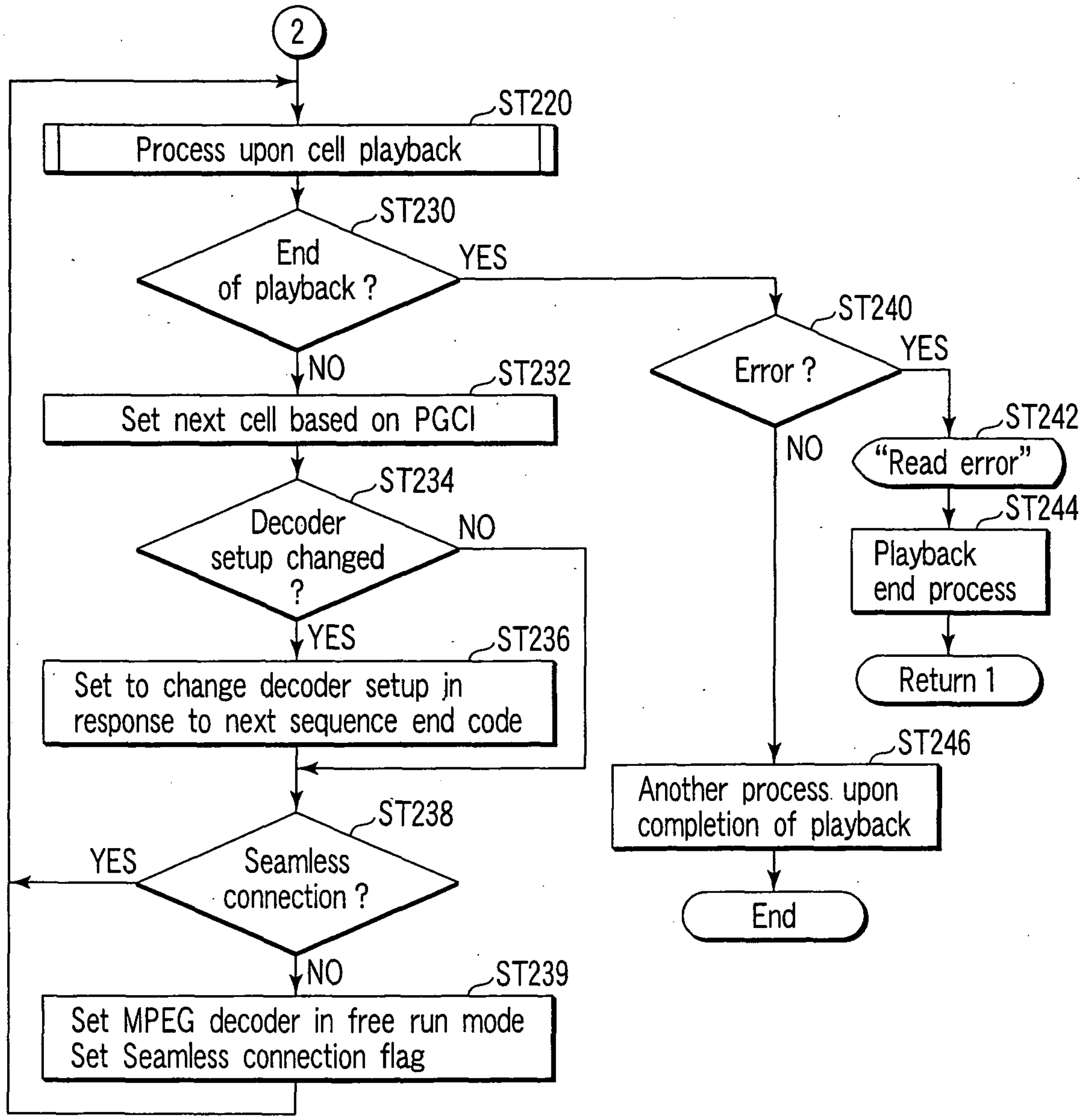
2
ST220
Process upon cell playback
ST230
End of playback ?
YES
NO
ST232
Set next cell based on PGCI
ST234
Decoder setup changed ?
NO
YES
ST236
Set to change decoder setup jn response to next sequence end code
ST238
Seamless connection ?
YES
NO
ST239
Set MPEG decoder in free run mode
Set Seamless connection flag
ST240
Error ?
YES
NO
ST242
"Read error"
ST244
Playback end process
Return 1
ST246
Another process upon completion of playback
End

F I G. 51

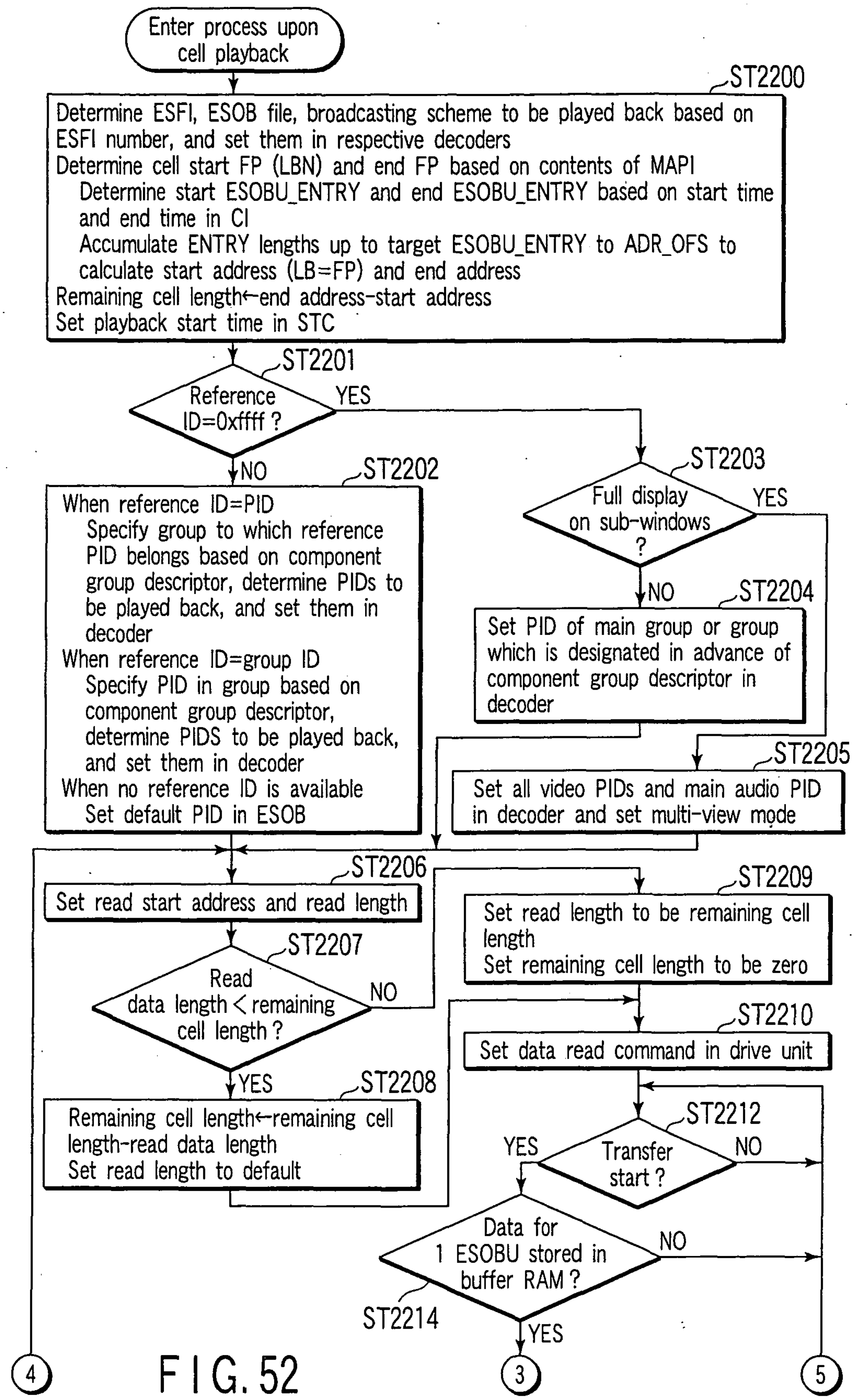

Enter process upon cell playback
ST2200
Determine ESFI, ESOB file, broadcasting scheme to be played back based on ESFI number, and set them in respective decoders
Determine cell start FP (LBN) and end FP based on contents of MAPI
Determine start ESOBU_ENTRY and end ESOBU_ENTRY based on start time and end time in CI
Accumulate ENTRY lengths up to target ESOBU_ENTRY to ADR_OFS to calculate start address (LB=FP) and end address
Remaining cell length←end address-start address
Set playback start time in STC
ST2201
Reference ID=0xffff ?
YES
NO
ST2202
When reference ID=PID
Specify group to which reference PID belongs based on component group descriptor, determine PIDs to be played back, and set them in decoder
When reference ID=group ID
Specify PID in group based on component group descriptor, determine PIDS to be played back, and set them in decoder
When no reference ID is available
Set default PID in ESOB
ST2203
Full display on sub-windows ?
YES
NO
ST2204
Set PID of main group or group which is designated in advance of component group descriptor in decoder
ST2205
Set all video PIDs and main audio PID in decoder and set multi-view mode
ST2206
Set read start address and read length
ST2207
Read data length < remaining cell length ?
NO
YES
ST2208
Remaining cell length←remaining cell length-read data length
Set read length to default
ST2209
Set read length to be remaining cell length
Set remaining cell length to be zero
ST2210
Set data read command in drive unit
ST2212
Transfer start ?
YES
NO
Data for 1 ESOBU stored in buffer RAM ?
NO
YES
ST2214
4
3
5

F I G. 52

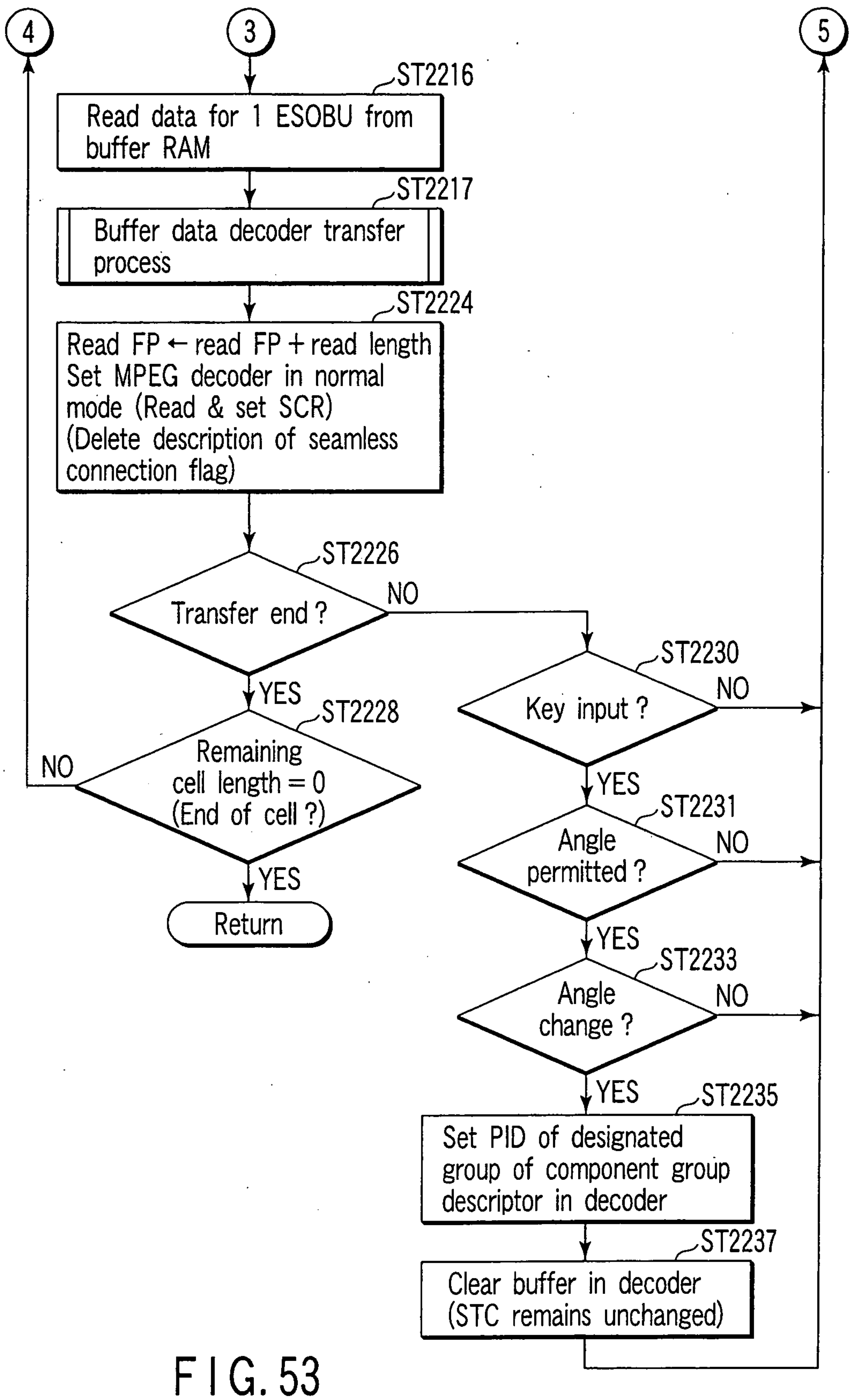
4
3
5
ST2216
Read data for 1 ESOBU from buffer RAM
ST2217
Buffer data decoder transfer process
ST2224
Read FP ← read FP + read length
Set MPEG decoder in normal mode (Read & set SCR)
(Delete description of seamless connection flag)
ST2226
Transfer end ?
NO
YES
ST2228
Remaining cell length = 0 (End of cell ?)
NO
YES
Return
ST2230
Key input ?
NO
YES
ST2231
Angle permitted ?
NO
YES
ST2233
Angle change ?
NO
YES
ST2235
Set PID of designated group of component group descriptor in decoder
ST2237
Clear buffer in decoder
(STC remains unchanged)

FIG. 53

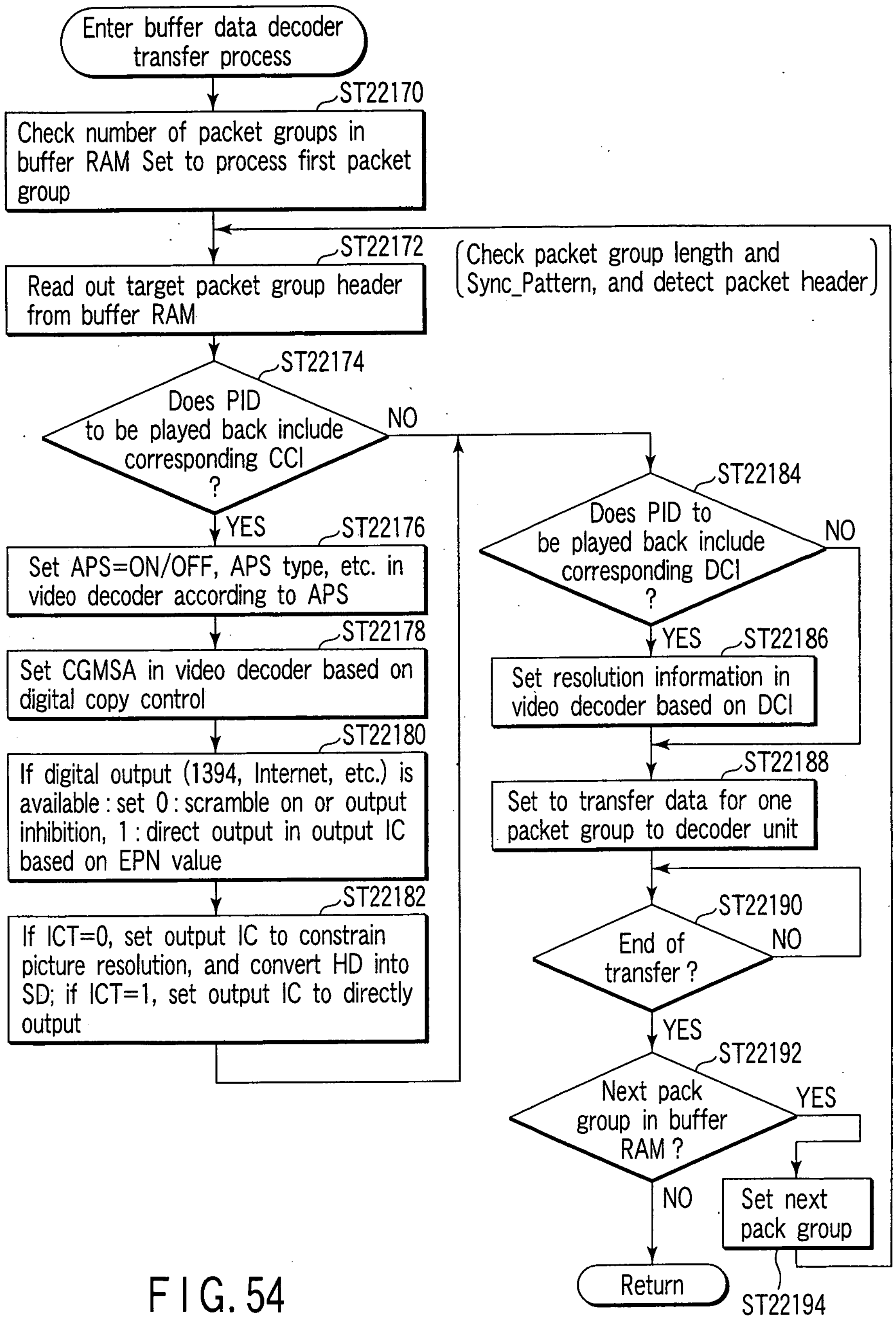

Enter buffer data decoder transfer process
ST22170
Check number of packet groups in buffer RAM Set to process first packet group
ST22172
Read out target packet group header from buffer RAM
(Check packet group length and Sync_Pattern, and detect packet header)
ST22174
Does PID to be played back include corresponding CCI ?
NO
YES
ST22176
Set APS=ON/OFF, APS type, etc. in video decoder according to APS
ST22178
Set CGMSA in video decoder based on digital copy control
ST22180
If digital output (1394, Internet, etc.) is available : set 0 : scramble on or output inhibition, 1 : direct output in output IC based on EPN value
ST22182
If ICT=0, set output IC to constrain picture resolution, and convert HD into SD; if ICT=1, set output IC to directly output
ST22184
Does PID to be played back include corresponding DCI ?
NO
YES
ST22186
Set resolution information in video decoder based on DCI
ST22188
Set to transfer data for one packet group to decoder unit
ST22190
End of transfer ?
NO
YES
ST22192
Next pack group in buffer RAM ?
YES
NO
Set next pack group
ST22194
Return


FIG. 54

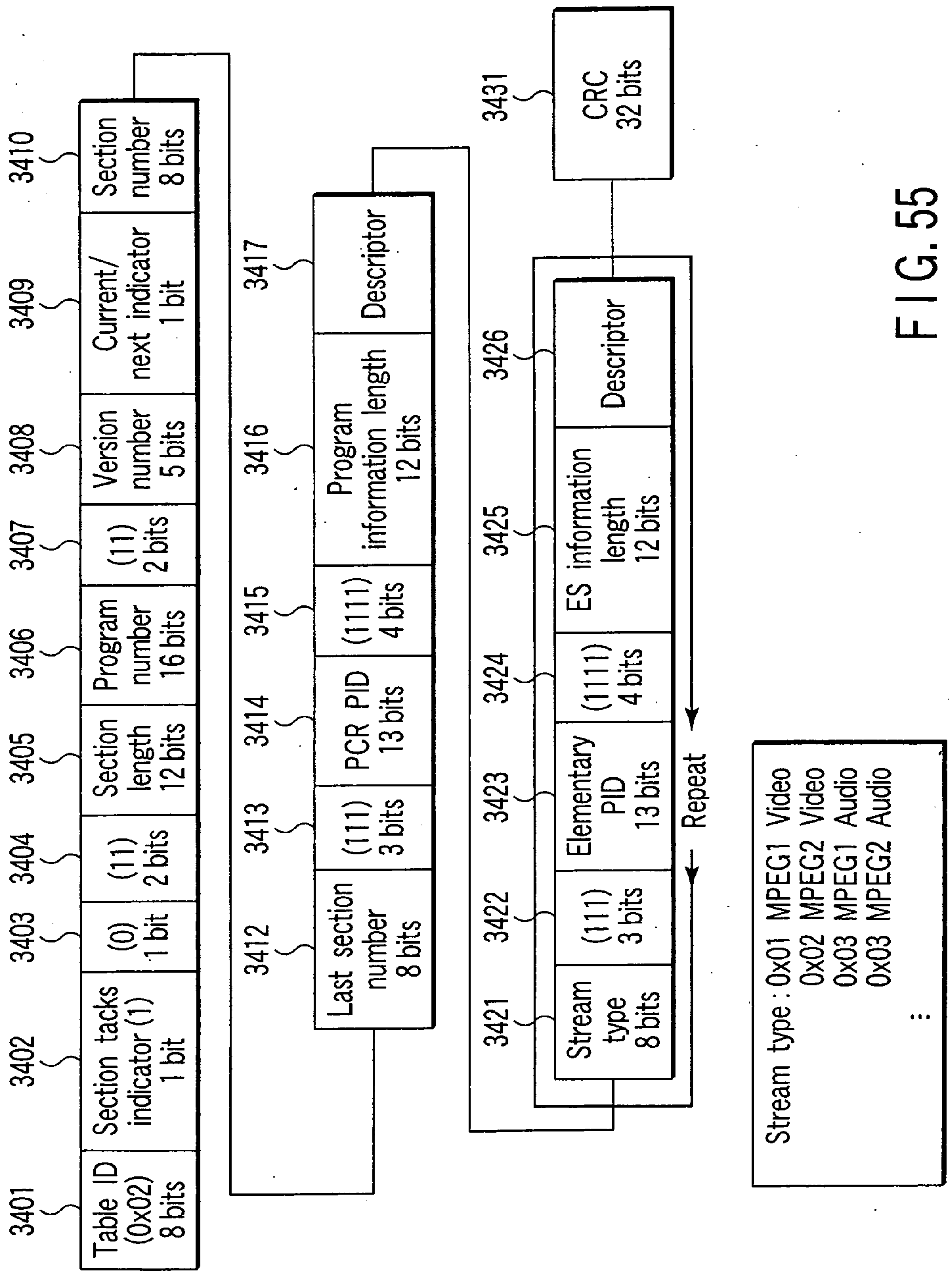
3401
Table ID (0x02) 8 bits
3402
Section tacks indicator (1) 1 bit
3403
(0) 1 bit
3404
(11) 2 bits
3405
Section length 12 bits
3406
Program number 16 bits
3407
(11) 2 bits
3408
Version number 5 bits
3409
Current/ next indicator 1 bit
3410
Section number 8 bits
3412
Last section number 8 bits
3413
(111) 3 bits
3414
PCR PID 13 bits
3415
(1111) 4 bits
3416
Program information length 12 bits
3417
Descriptor
3421
Stream type 8 bits
3422
(111) 3 bits
3423
Elementary PID 13 bits
3424
(1111) 4 bits
3425
ES information length 12 bits
3426
Descriptor
Repeat
3431
CRC 32 bits
Stream type : 0x01 MPEG1 Video
0x02 MPEG2 Video
0x03 MPEG1 Audio
0x03 MPEG2 Audio
⋮

FIG. 55

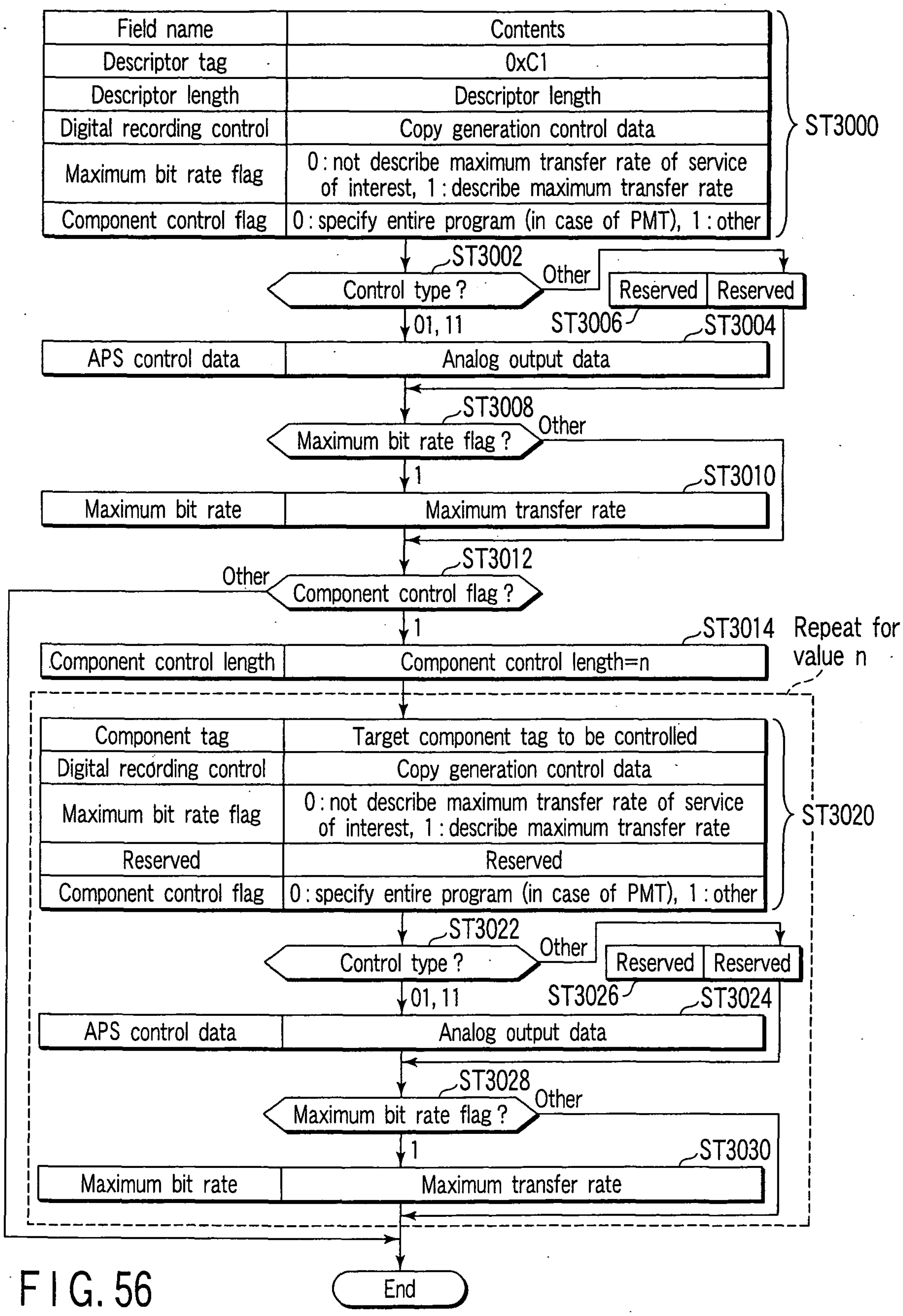
Field name
Contents
Descriptor tag
0xC1
Descriptor length
Descriptor length
Digital recording control
Copy generation control data
Maximum bit rate flag
0: not describe maximum transfer rate of service of interest, 1: describe maximum transfer rate
Component control flag
0: specify entire program (in case of PMT), 1: other
ST3000
ST3002
Control type ?
Other
Reserved
Reserved
01, 11
ST3006
ST3004
APS control data
Analog output data
ST3008
Maximum bit rate flag ?
Other
1
ST3010
Maximum bit rate
Maximum transfer rate
ST3012
Other
Component control flag ?
1
ST3014
Repeat for value n
Component control length
Component control length=n
Component tag
Target component tag to be controlled
Digital recording control
Copy generation control data
Maximum bit rate flag
0: not describe maximum transfer rate of service of interest, 1: describe maximum transfer rate
Reserved
Reserved
Component control flag
0: specify entire program (in case of PMT), 1: other
ST3020
ST3022
Control type ?
Other
Reserved
Reserved
01, 11
ST3026
ST3024
APS control data
Analog output data
ST3028
Maximum bit rate flag ?
Other
1
ST3030
Maximum bit rate
Maximum transfer rate
End

FIG. 56

For video data

| Digital copy control | Analog copy control | Digital recording control | Copy control type | APS control data |
|---|---|---|---|---|
| Unlimited copy permission | Unlimited copy permission | 01 | 00 | Don't care |
| Copy inhibition | Copy inhibition, but no Microvision copy protection is applied (analog copy permitted) | 01 | 11 | 00 |
| | Copy inhibition | 01 | 11 | Other than 00 |
| Copy permission of only one generation | Copy permission of only one generation, but no Microvision copy protection is applied (analog copy permitted) | 01 | 10 | 00 |
| | Copy inhibition after copy of one generation | 01 | 10 | Other than 00 |

FIG. 57

For audio data

| Digital copy control | Digital recording control | Copy control type |
|---|---|---|
| Unlimited copy permission | 01/11 | 00 |
| Copy permission of only one generation | 01/11 | 10 |
| Copy inhibition | 01/11 | 11 |

FIG. 58

| Field name | Contents |
|---|---|
| Descriptor tag | 0xDE |
| Descriptor length | Descriptor length |
| Reserved | Reserved |
| Image constraint token | Resolution constraint bit: 0=constrain video output 1=no constraint |
| Retention mode | Temporary storage control bit: 0=permit temporary storage, 1=inhibit temporary storage |
| Retention state | Allowable temporary storage time: 7=1.5H, 6=3H, 5=6H, 4=12H, 3=1 day, 2=2 days, 1=1 week, 0=no limitation |
| Encryption mode | Output protection bit: 0=high-speed digital i/f output protection, 1=no protection |
| Reserved | Reserved |

FIG. 59

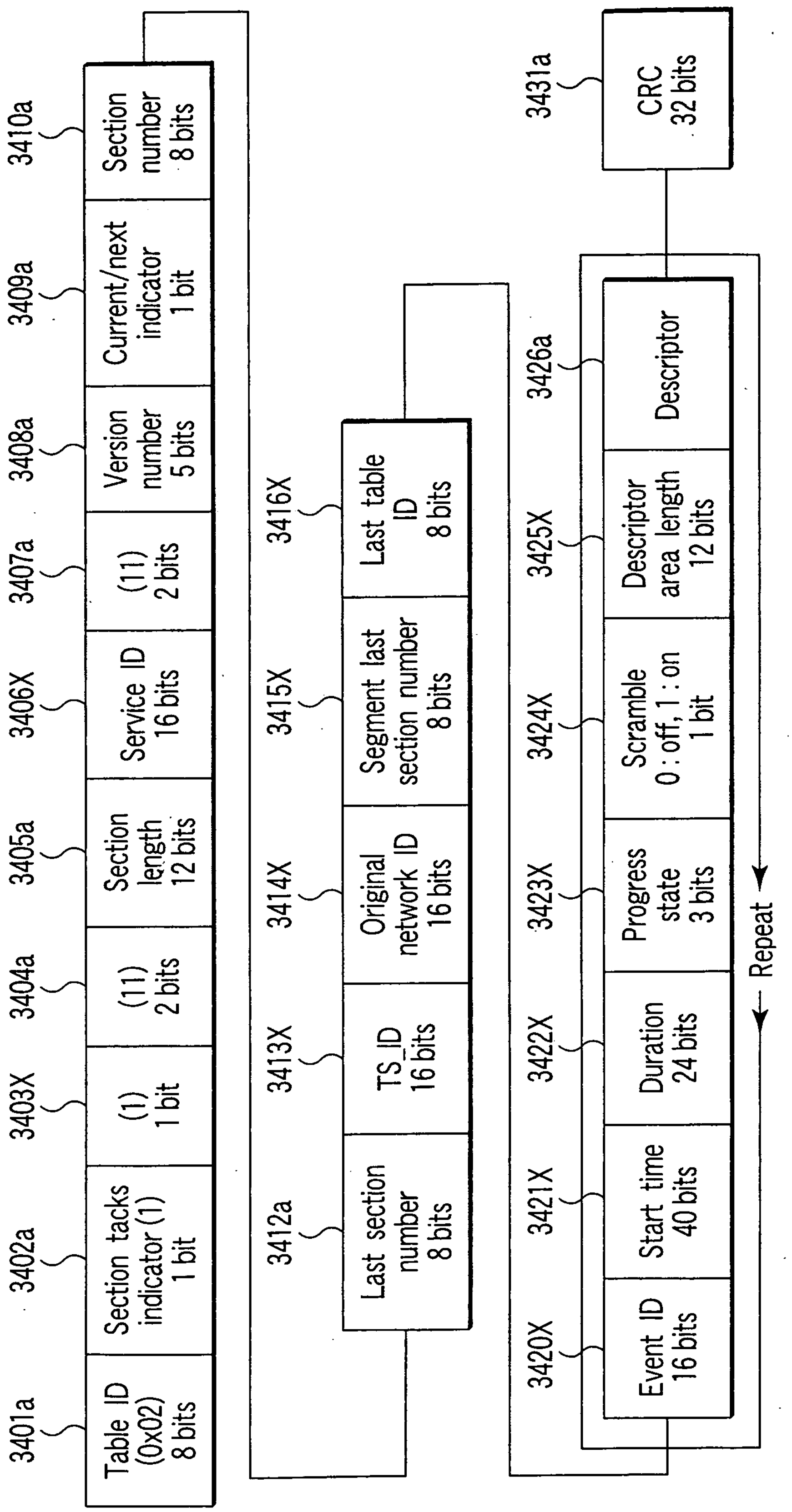
3401a
Table ID (0x02) 8 bits
3402a
Section tacks indicator (1) 1 bit
3403X
(1) 1 bit
3404a
(11) 2 bits
3405a
Section length 12 bits
3406X
Service ID 16 bits
3407a
(11) 2 bits
3408a
Version number 5 bits
3409a
Current/next indicator 1 bit
3410a
Section number 8 bits
3412a
Last section number 8 bits
3413X
TS_ID 16 bits
3414X
Original network ID 16 bits
3415X
Segment last section number 8 bits
3416X
Last table ID 8 bits
3420X
Event ID 16 bits
3421X
Start time 40 bits
3422X
Duration 24 bits
3423X
Progress state 3 bits
3424X
Scramble 0 : off, 1 : on 1 bit
3425X
Descriptor area length 12 bits
3426a
Descriptor
Repeat
3431a
CRC 32 bits

FIG. 60

| Field name | Contents |
|---|---|
| Descriptor tag | 0x4e |
| Descriptor length | Descriptor length |
| Descriptor number | Descriptor number : 0 to n |
| Last descriptor number | Last descriptor number : 0 to n |
| 0x4dISO_639_LANGUAGE_CODE | ARIB : "jpn" |
| length of items | Number of items : byte length of subsequent items |
| item description length | Item name length : byte length of item name |
| item description char | Item name (character code 8 bits) |
| | Repeat for item name length |
| item length | Item description length : byte length of item description |
| item char | Item description (character code 8 bits) |
| | Repeat for item name length |
| Text length | Extended description length : byte length of extended description |
| Text char | Extended description (character code 8 bits) |
| | Repeat for item name length |
| | Repeat for number of items |

If information cannot be stored in one extended descriptor, a plurality of descriptors are present, In such case, descriptors are counted and described one by one (normally, 0)

FIG. 61

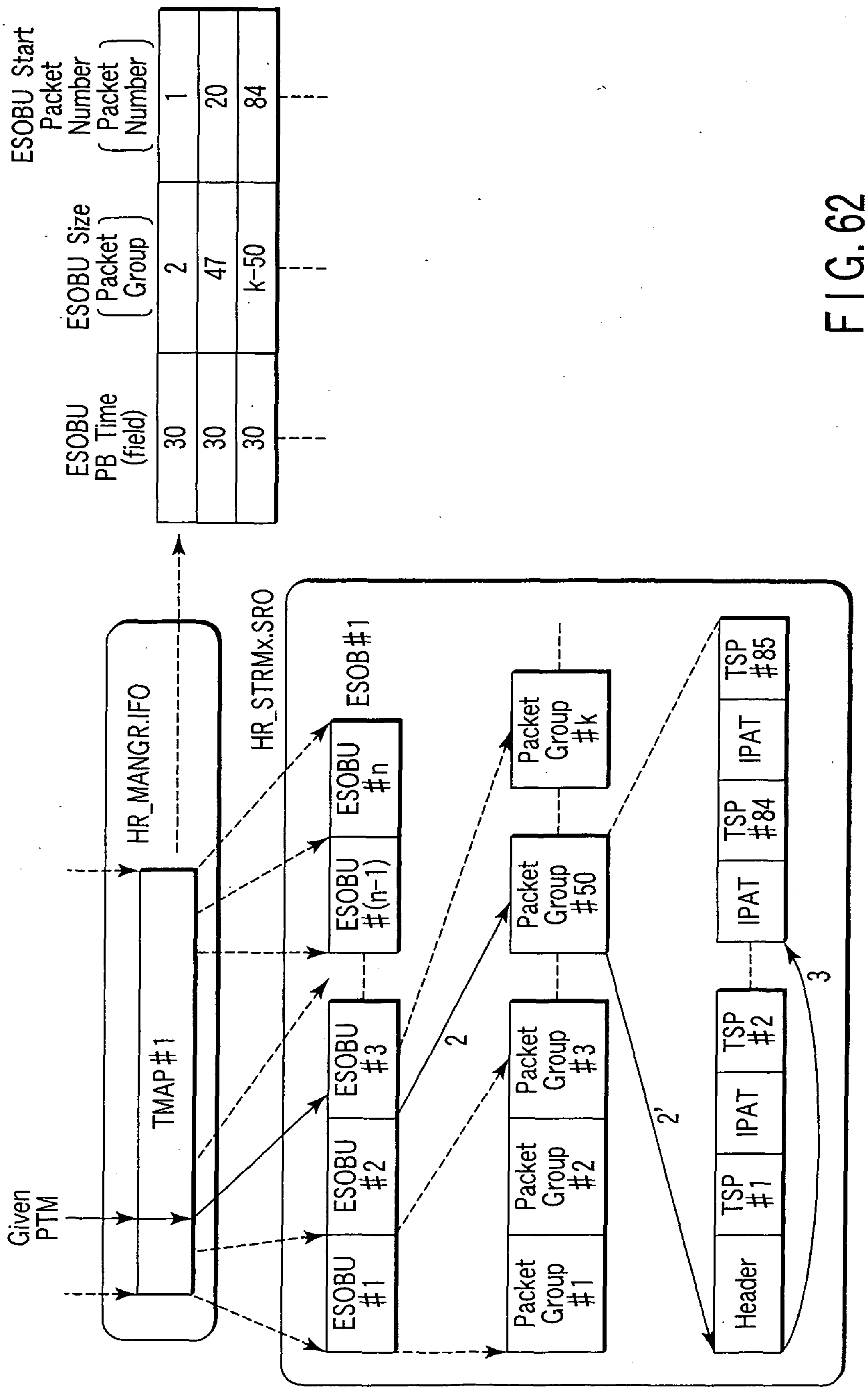


| ESOBU PB Time (field) | ESOBU Size (Packet Group) | ESOBU Start Packet Number (Packet Number) |
|---|---|---|
| 30 | 2 | 1 |
| 30 | 47 | 20 |
| 30 | k-50 | 84 |

FIG. 62

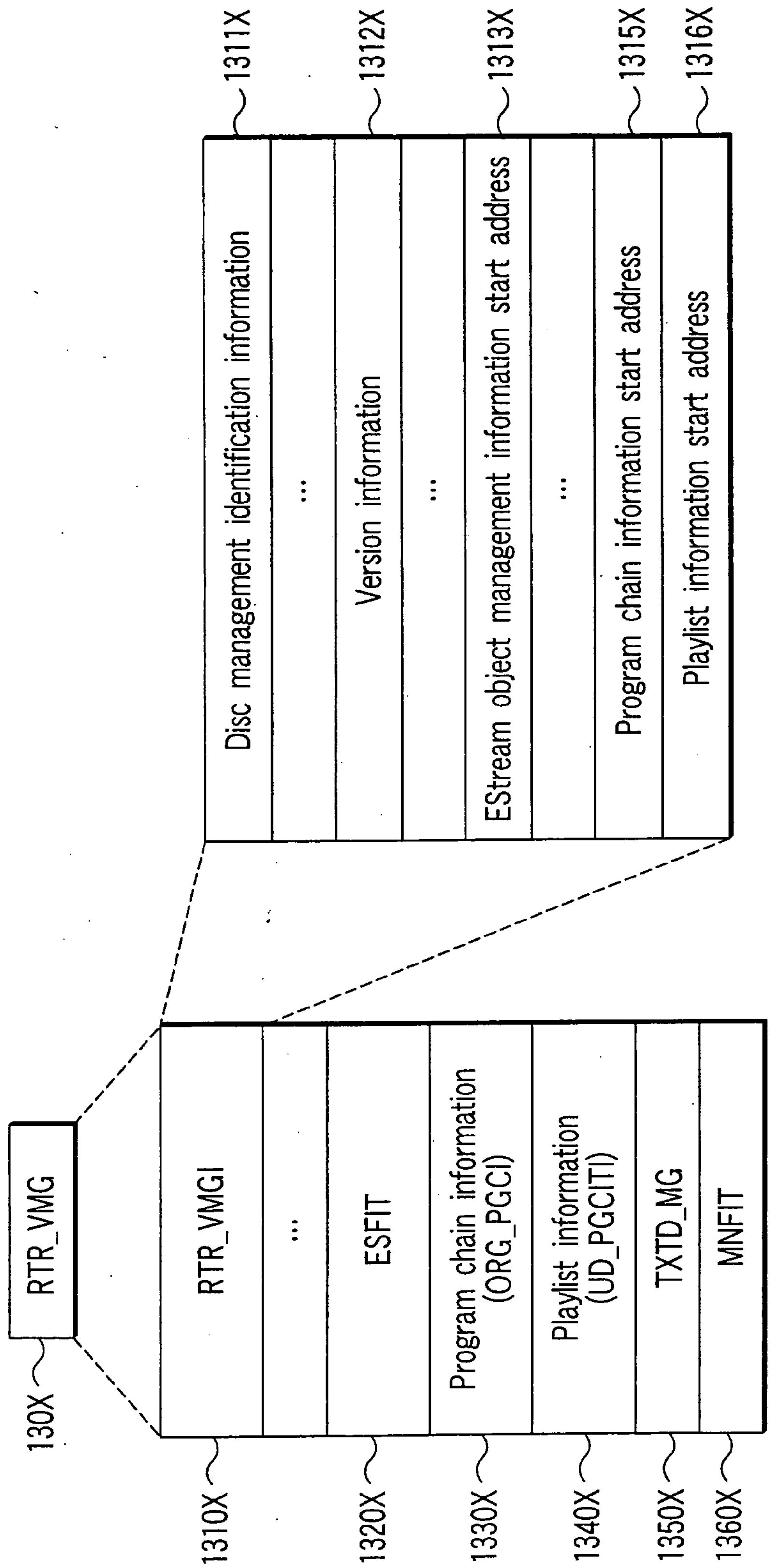
130X
RTR_VMG
1310X
RTR_VMGI
1320X
...
ESFIT
1330X
Program chain information (ORG_PGCI)
1340X
Playlist information (UD_PGCITI)
1350X
TXTD_MG
1360X
MNFIT
1311X
Disc management identification information
...
1312X
Version information
...
1313X
EStream object management information start address
...
1315X
Program chain information start address
1316X
Playlist information start address

FIG. 63

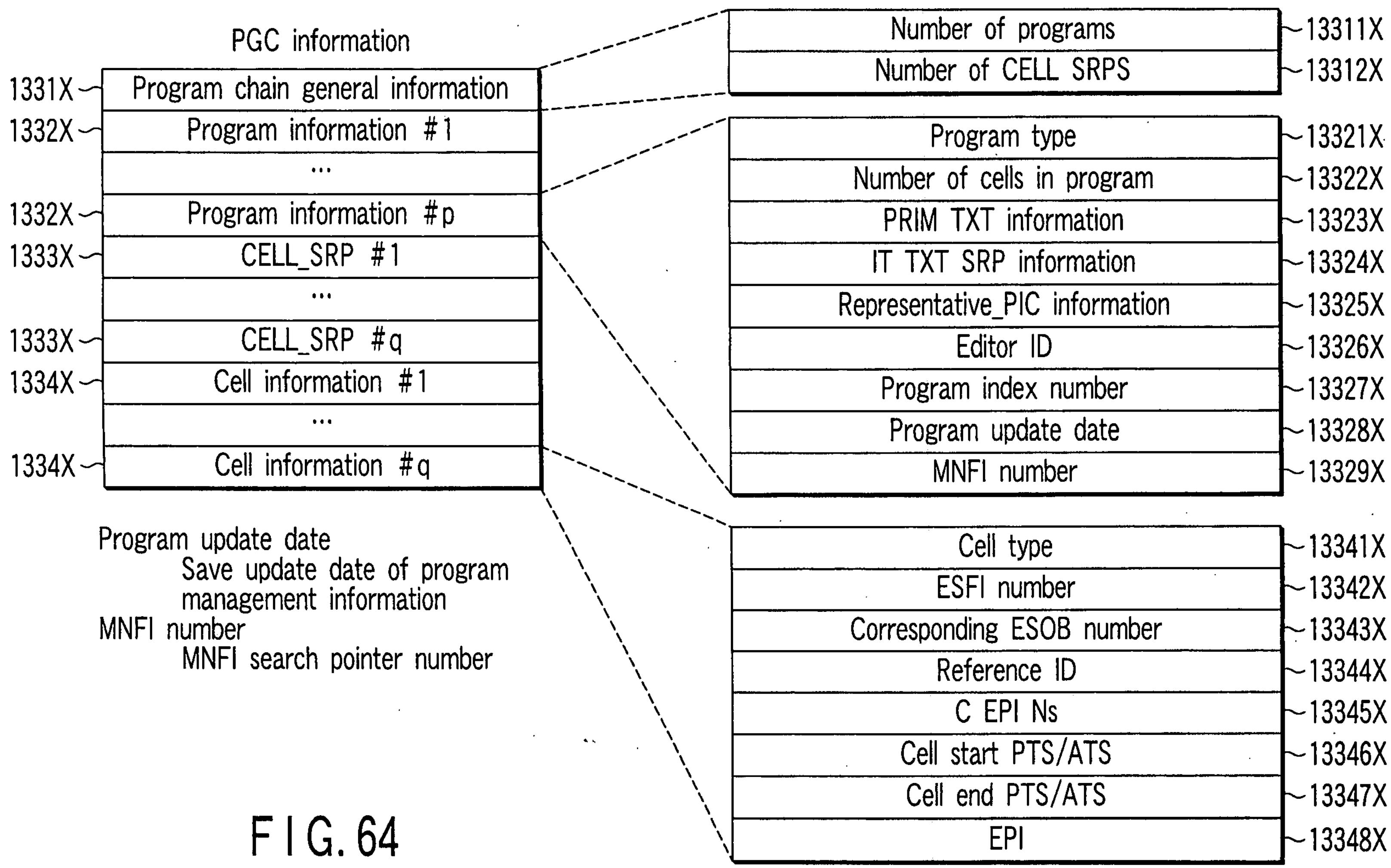


Program update date
Save update date of program management information
MNFI number
MNFI search pointer number

F I G. 64

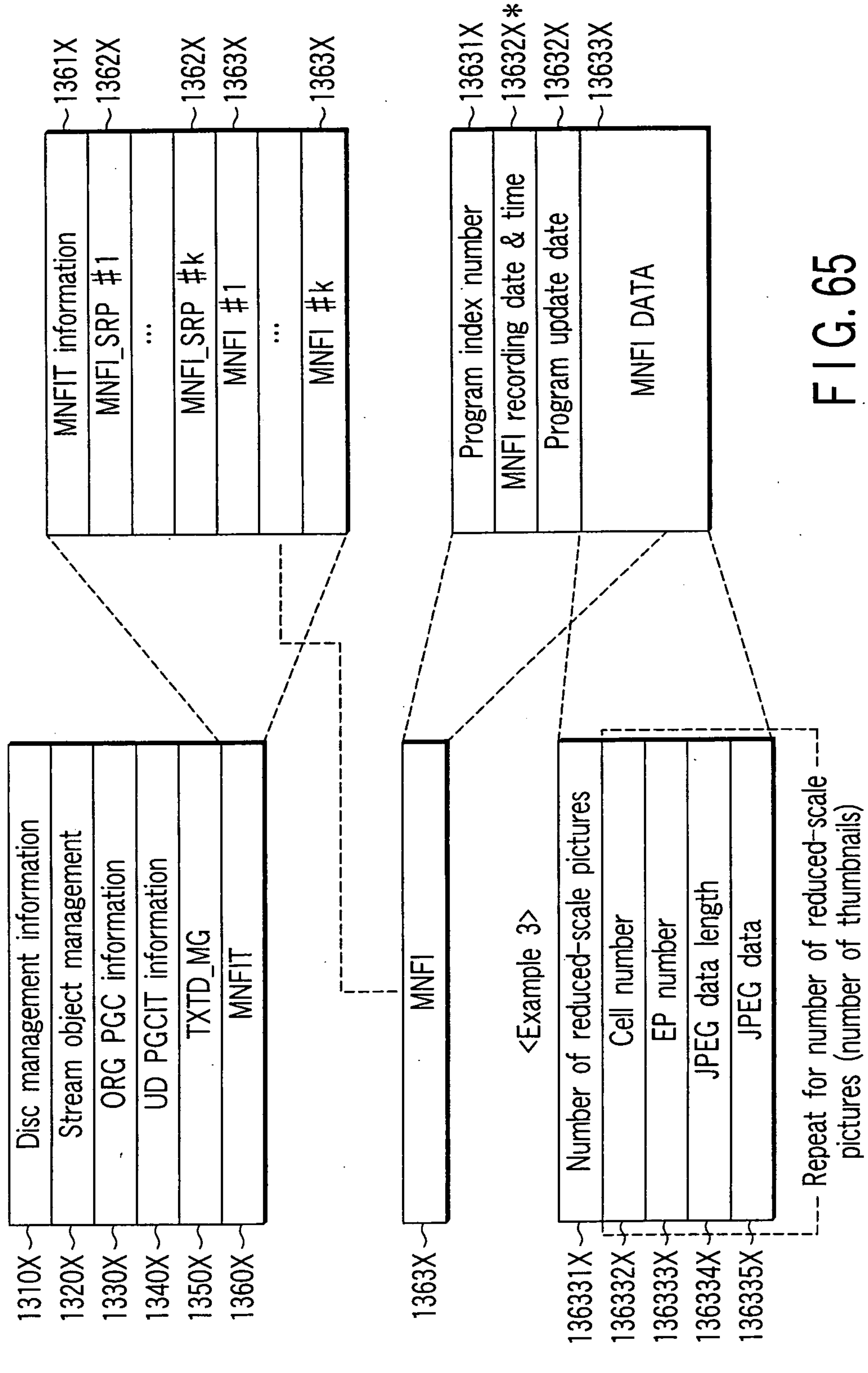
Disc management information
Stream object management
ORG PGC information
UD PGCIT information
TXTD_MG
MNFIT
1310X
1320X
1330X
1340X
1350X
1360X
MNFIT information
MNFI_SRP #1
...
MNFI_SRP #k
MNFI #1
...
MNFI #k
1361X
1362X
1362X
1363X
1363X
MNFI
1363X
Program index number
MNFI recording date & time
Program update date
MNFI DATA
13631X
13632X*
13632X
13633X
<Example 3>
Number of reduced-scale pictures
Cell number
EP number
JPEG data length
JPEG data
136331X
136332X
136333X
136334X
136335X
Repeat for number of reduced-scale pictures (number of thumbnails)

FIG. 65

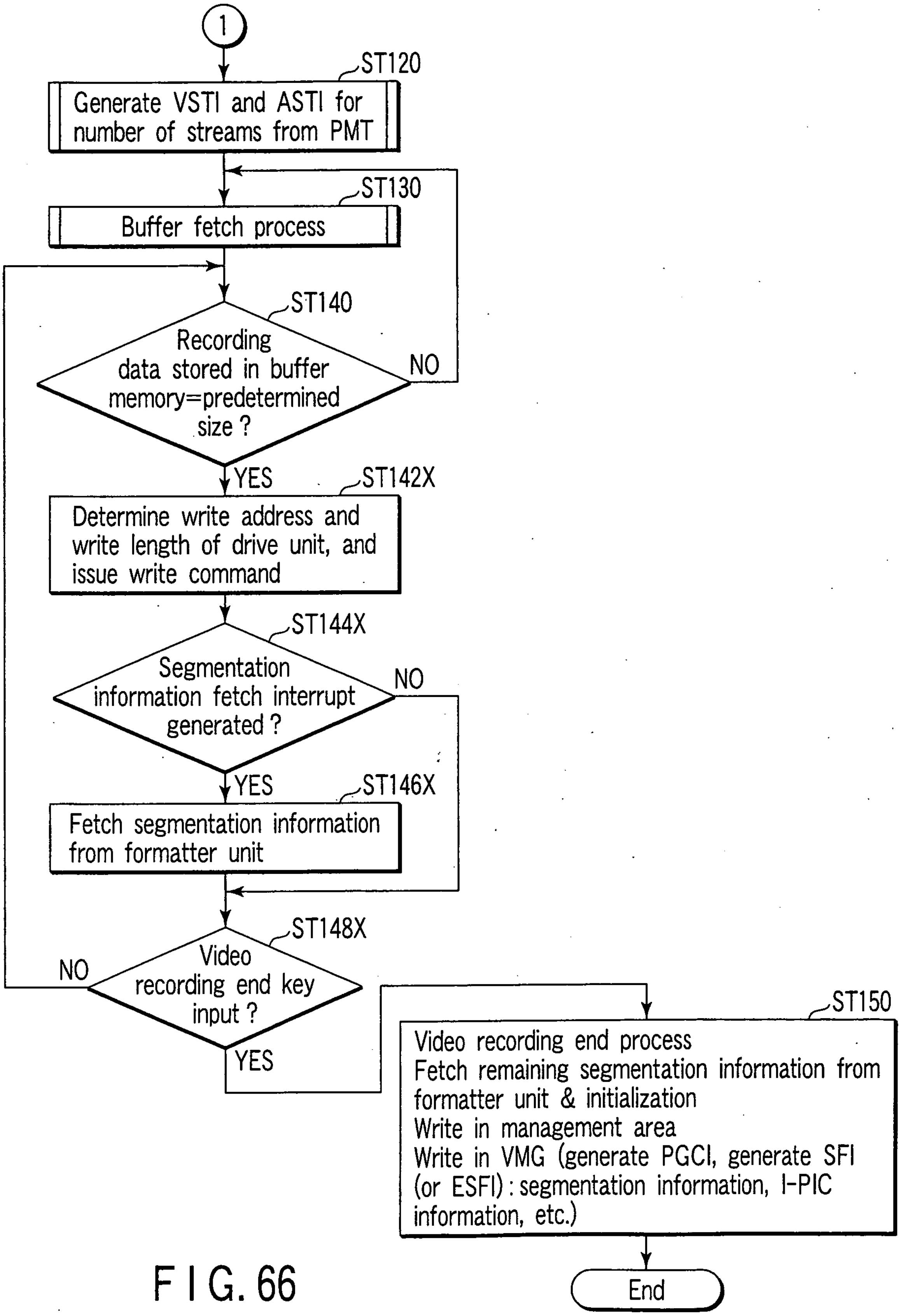
1
ST120
Generate VSTI and ASTI for number of streams from PMT
ST130
Buffer fetch process
ST140
Recording data stored in buffer memory=predetermined size ?
NO
YES
ST142X
Determine write address and write length of drive unit, and issue write command
ST144X
Segmentation information fetch interrupt generated ?
NO
YES
ST146X
Fetch segmentation information from formatter unit
ST148X
Video recording end key input ?
NO
YES
ST150
Video recording end process
Fetch remaining segmentation information from formatter unit & initialization
Write in management area
Write in VMG (generate PGCI, generate SFI (or ESFI): segmentation information, I-PIC information, etc.)
End

FIG. 66

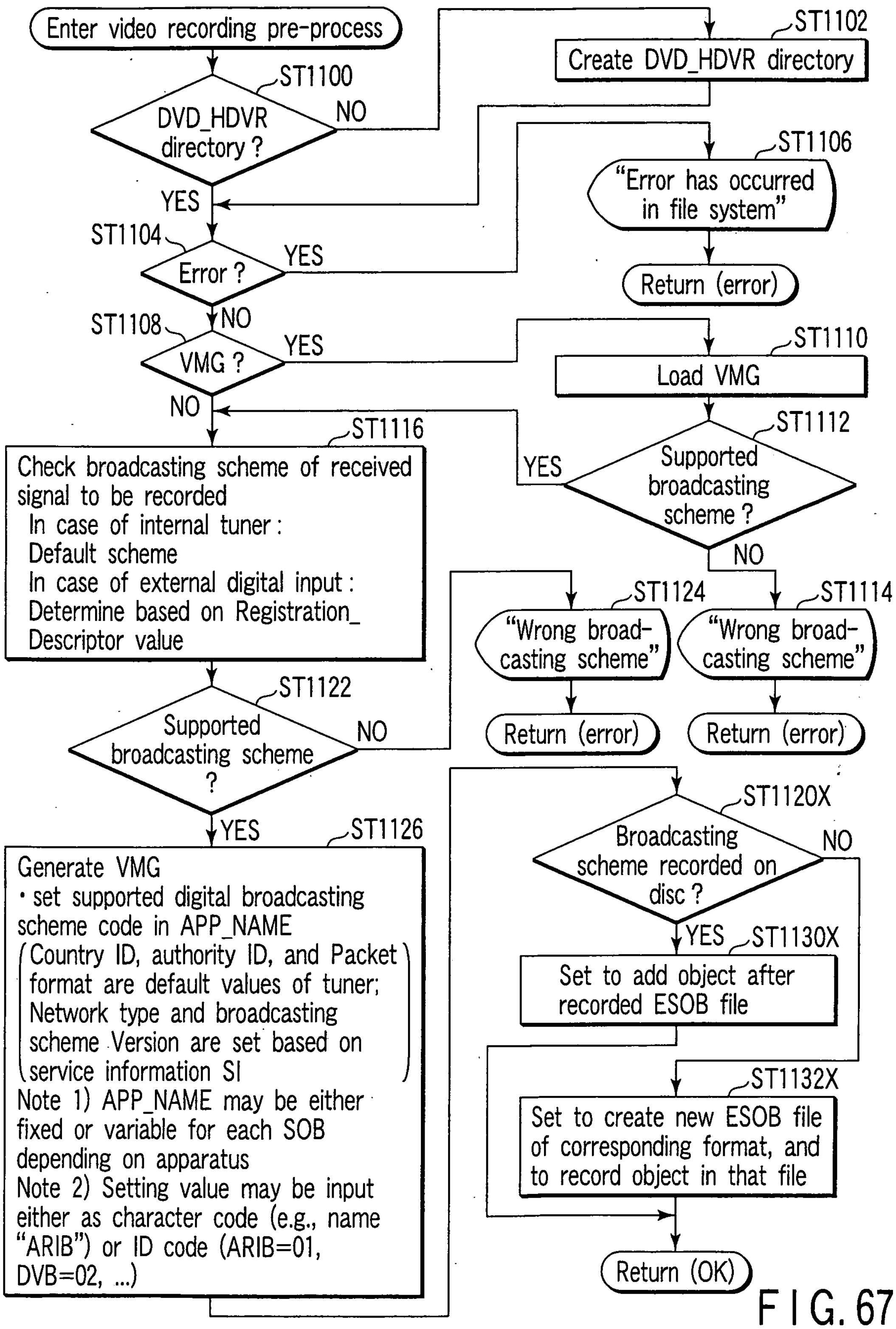
Enter video recording pre-process
ST1100
DVD_HDVR directory ?
NO
YES
ST1102
Create DVD_HDVR directory
ST1104
Error ?
YES
NO
ST1106
"Error has occurred in file system"
Return (error)
ST1108
VMG ?
YES
NO
ST1110
Load VMG
ST1112
Supported broadcasting scheme ?
YES
NO
ST1116
Check broadcasting scheme of received signal to be recorded
In case of internal tuner :
Default scheme
In case of external digital input :
Determine based on Registration_
Descriptor value
ST1124
"Wrong broad-casting scheme"
ST1114
"Wrong broad-casting scheme"
Return (error)
Return (error)
ST1122
Supported broadcasting scheme ?
NO
YES
ST1126
Generate VMG
• set supported digital broadcasting scheme code in APP_NAME
(Country ID, authority ID, and Packet format are default values of tuner; Network type and broadcasting scheme Version are set based on service information SI)
Note 1) APP_NAME may be either fixed or variable for each SOB depending on apparatus
Note 2) Setting value may be input either as character code (e.g., name "ARIB") or ID code (ARIB=01, DVB=02, ...)
ST1120X
Broadcasting scheme recorded on disc ?
NO
YES
ST1130X
Set to add object after recorded ESOB file
ST1132X
Set to create new ESOB file of corresponding format, and to record object in that file
Return (OK)

FIG. 67

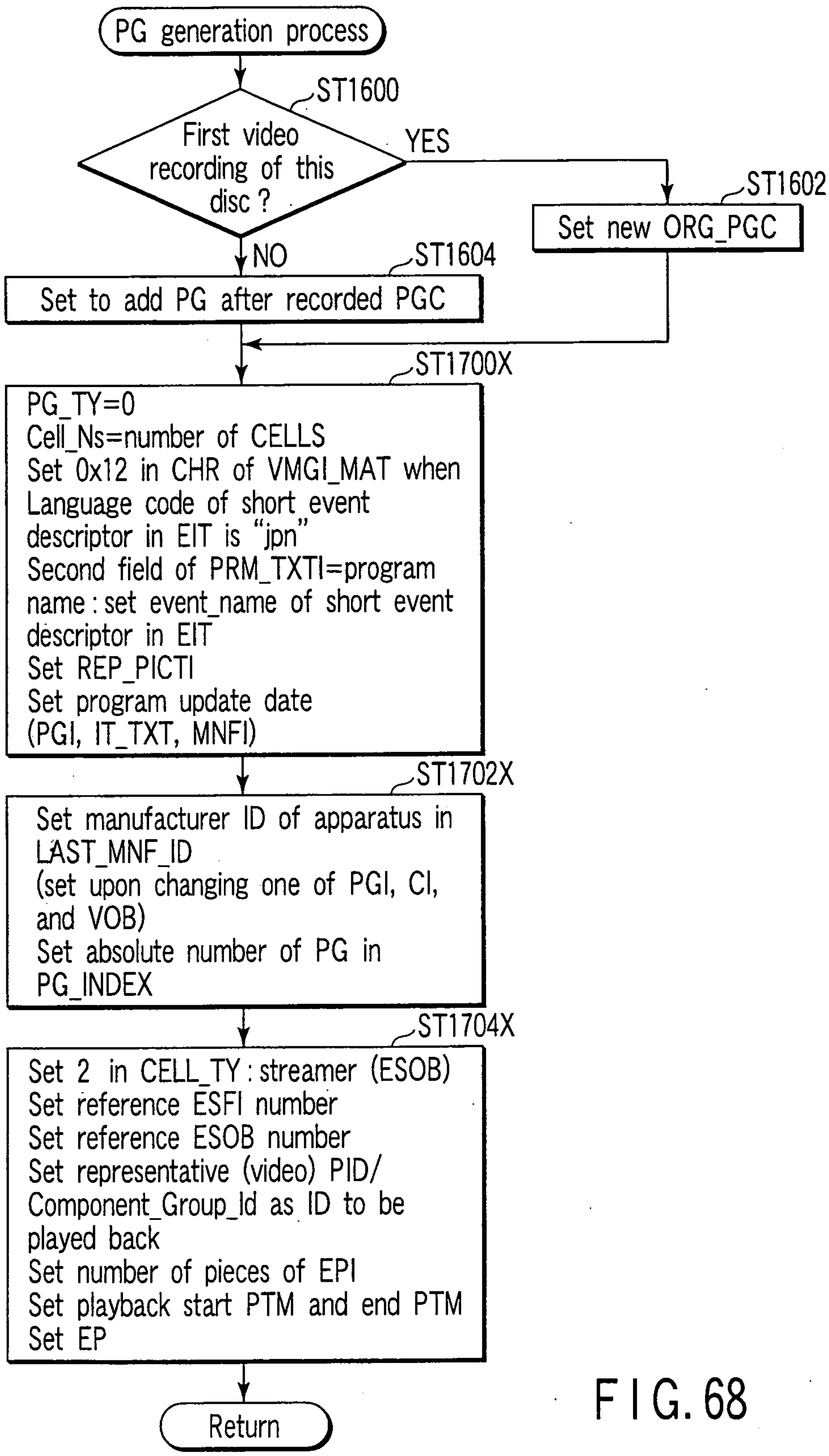
PG generation process
ST1600
First video recording of this disc ?
YES
ST1602
Set new ORG_PGC
NO
ST1604
Set to add PG after recorded PGC
ST1700X
PG_TY=0
Cell_Ns=number of CELLS
Set 0x12 in CHR of VMGI_MAT when Language code of short event descriptor in EIT is "jpn"
Second field of PRM_TXTI=program name : set event_name of short event descriptor in EIT
Set REP_PICTI
Set program update date
(PGI, IT_TXT, MNFI)
ST1702X
Set manufacturer ID of apparatus in LAST_MNF_ID
(set upon changing one of PGI, CI, and VOB)
Set absolute number of PG in PG_INDEX
ST1704X
Set 2 in CELL_TY : streamer (ESOB)
Set reference ESFI number
Set reference ESOB number
Set representative (video) PID/ Component_Group_Id as ID to be played back
Set number of pieces of EPI
Set playback start PTM and end PTM
Set EP
Return

FIG. 68

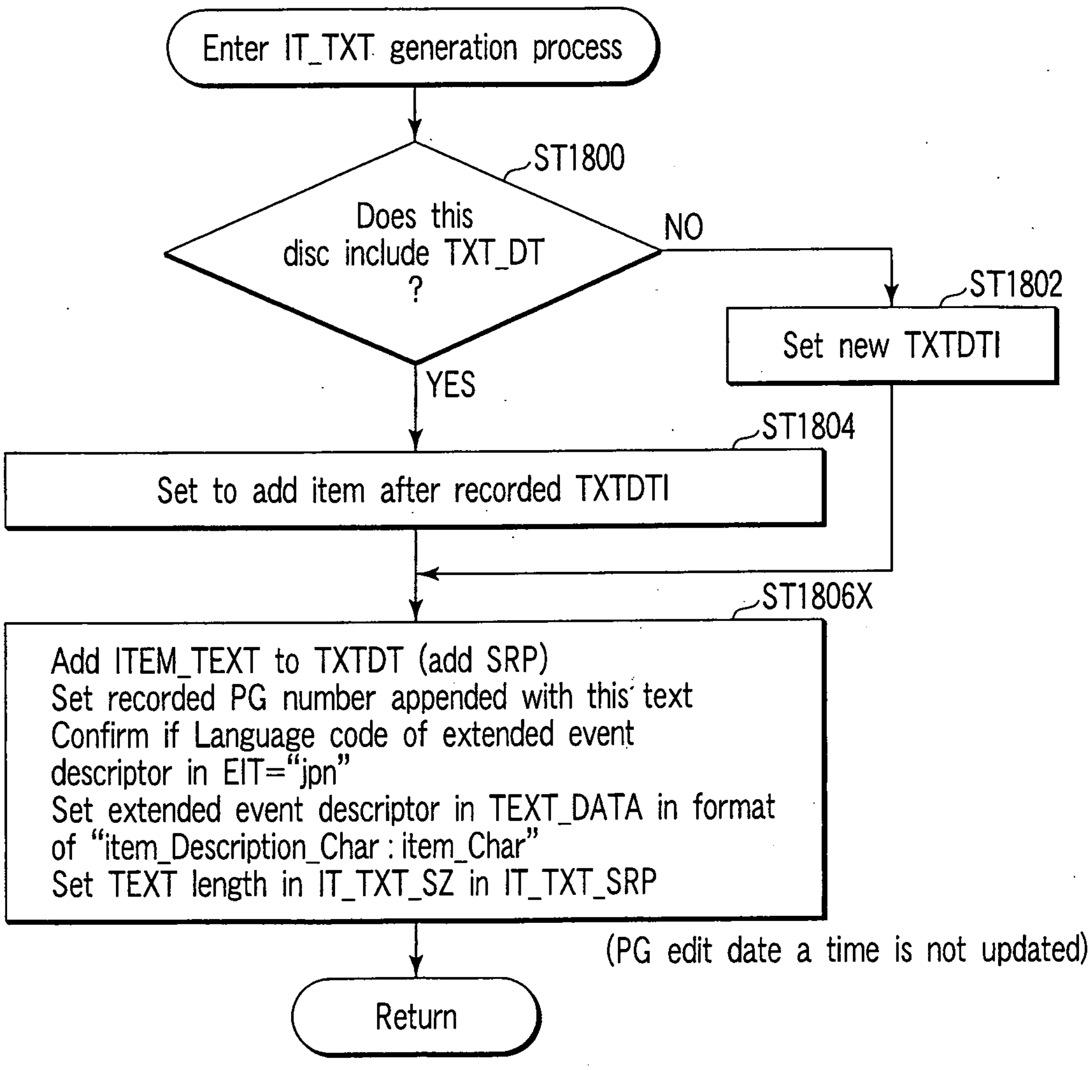
Enter IT_TXT generation process
ST1800
Does this disc include TXT_DT ?
NO
ST1802
Set new TXTDTI
YES
ST1804
Set to add item after recorded TXTDTI
ST1806X
Add ITEM_TEXT to TXTDT (add SRP)
Set recorded PG number appended with this text
Confirm if Language code of extended event descriptor in EIT="jpn"
Set extended event descriptor in TEXT_DATA in format of "item_Description_Char : item_Char"
Set TEXT length in IT_TXT_SZ in IT_TXT_SRP
(PG edit date a time is not updated)
Return

F I G. 69

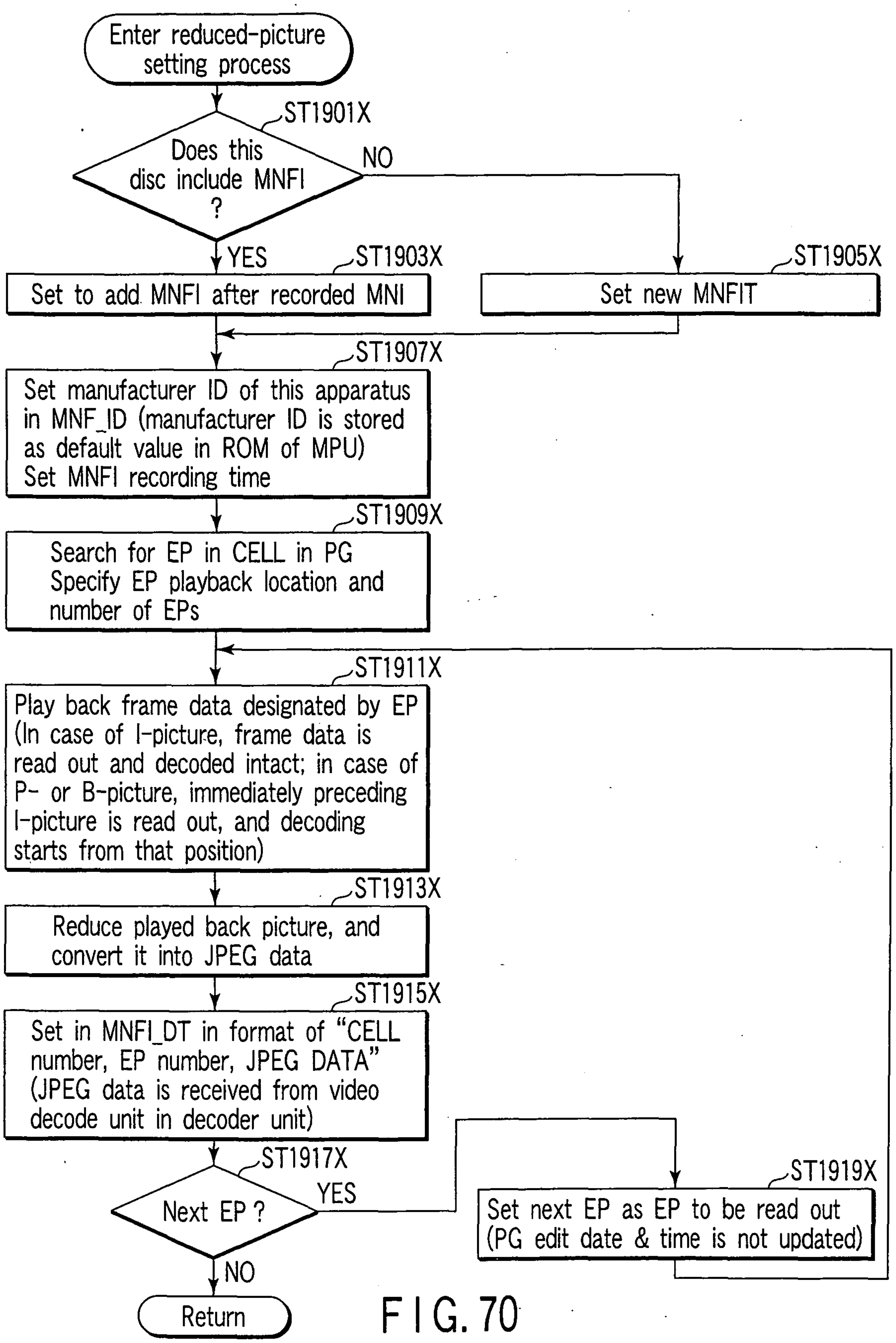
Enter reduced-picture setting process
ST1901X
Does this disc include MNFI ?
NO
YES
ST1903X
Set to add MNFI after recorded MNI
ST1905X
Set new MNFIT
ST1907X
Set manufacturer ID of this apparatus in MNF_ID (manufacturer ID is stored as default value in ROM of MPU)
Set MNFI recording time
ST1909X
Search for EP in CELL in PG
Specify EP playback location and number of EPs
ST1911X
Play back frame data designated by EP (In case of I-picture, frame data is read out and decoded intact; in case of P- or B-picture, immediately preceding I-picture is read out, and decoding starts from that position)
ST1913X
Reduce played back picture, and convert it into JPEG data
ST1915X
Set in MNFI_DT in format of "CELL number, EP number, JPEG DATA" (JPEG data is received from video decode unit in decoder unit)
ST1917X
Next EP ?
YES
ST1919X
Set next EP as EP to be read out (PG edit date & time is not updated)
NO
Return

FIG. 70

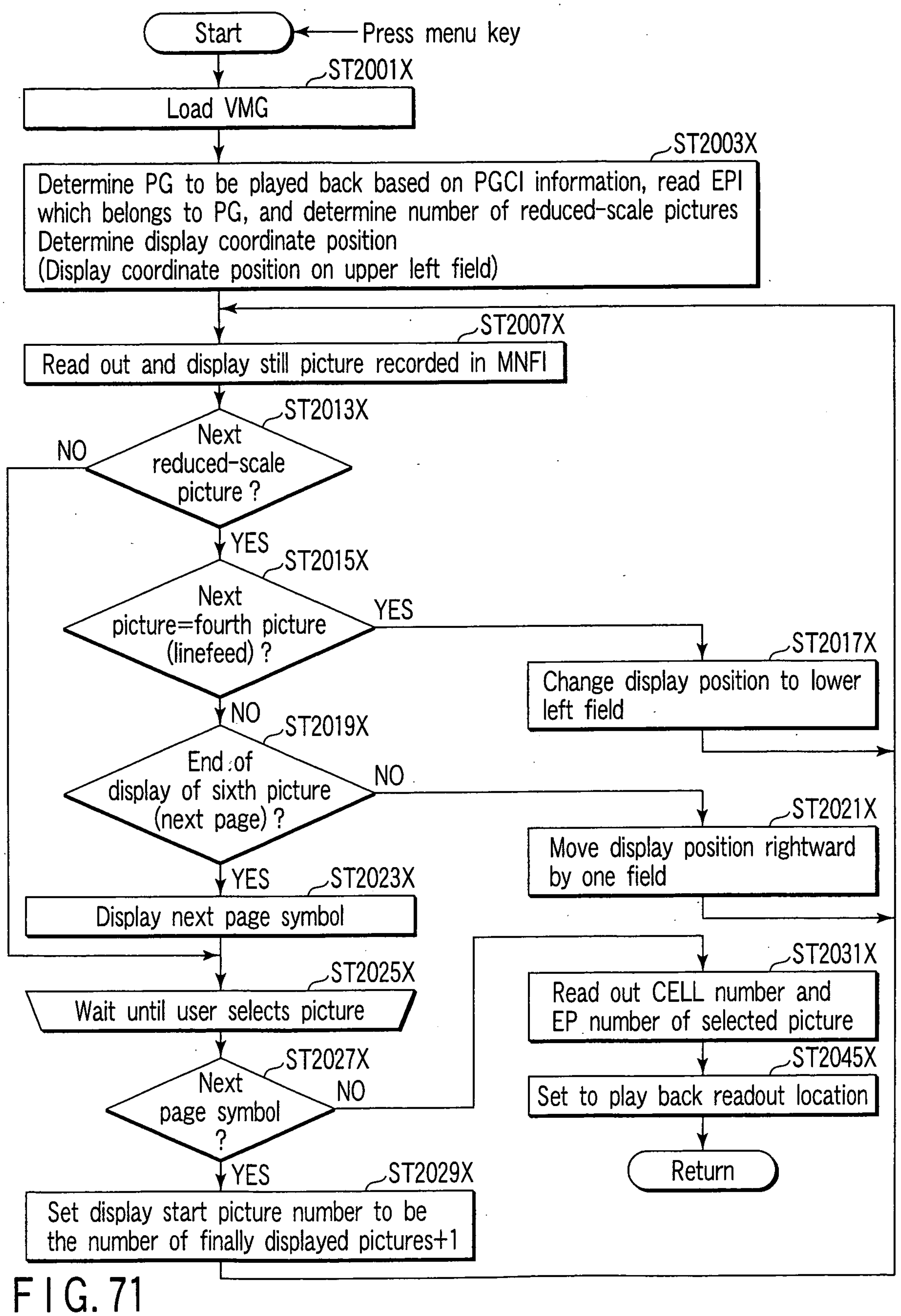
Start
Press menu key
ST2001X
Load VMG
ST2003X
Determine PG to be played back based on PGCI information, read EPI which belongs to PG, and determine number of reduced-scale pictures
Determine display coordinate position
(Display coordinate position on upper left field)
ST2007X
Read out and display still picture recorded in MNFI
ST2013X
Next reduced-scale picture ?
NO
YES
ST2015X
Next picture=fourth picture (linefeed) ?
YES
ST2017X
Change display position to lower left field
NO
ST2019X
End of display of sixth picture (next page) ?
NO
ST2021X
Move display position rightward by one field
YES
ST2023X
Display next page symbol
ST2025X
Wait until user selects picture
ST2031X
Read out CELL number and EP number of selected picture
ST2027X
Next page symbol ?
NO
ST2045X
Set to play back readout location
Return
YES
ST2029X
Set display start picture number to be the number of finally displayed pictures+1

FIG. 71

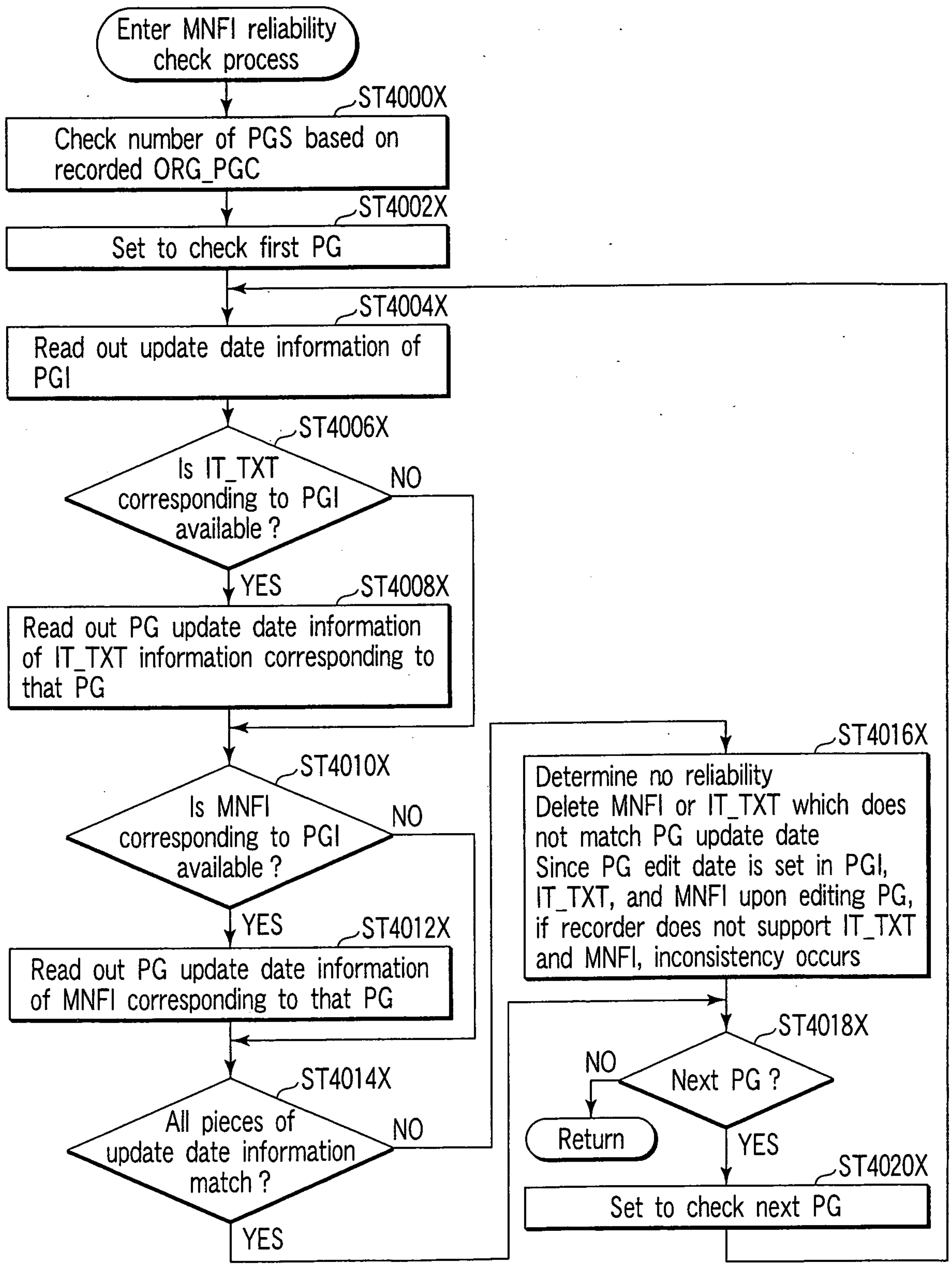
Enter MNFI reliability check process
ST4000X
Check number of PGS based on recorded ORG_PGC
ST4002X
Set to check first PG
ST4004X
Read out update date information of PGI
ST4006X
Is IT_TXT corresponding to PGI available ?
NO
YES
ST4008X
Read out PG update date information of IT_TXT information corresponding to that PG
ST4010X
Is MNFI corresponding to PGI available ?
NO
YES
ST4012X
Read out PG update date information of MNFI corresponding to that PG
ST4014X
All pieces of update date information match ?
NO
YES
ST4016X
Determine no reliability
Delete MNFI or IT_TXT which does not match PG update date
Since PG edit date is set in PGI, IT_TXT, and MNFI upon editing PG, if recorder does not support IT_TXT and MNFI, inconsistency occurs
ST4018X
Next PG ?
NO
Return
YES
ST4020X
Set to check next PG

FIG. 72